# EUROPEAN PATENT SPECIFICATION

(11) **EP 2 565 064 B1**
(45) Date of publication and mention of the grant of the patent: **12.09.2018**
(21) Application number: 11774755.0
(22) Date of filing: 31.03.2011
(51) Int. Cl.: B62D 17/00, B60G 3/26, B60G 17/016, B60G 17/015, B60G 7/00

(54) **CONTROL DEVICE FOR VEHICLE**
STEUERVORRICHTUNG FÜR EIN FAHRZEUG
DISPOSITIF DE COMMANDE POUR VÉHICULE

(30) Priority: 30.11.2010 JP 2010267710; 31.05.2010 JP 2010125359; 31.05.2010 JP 2010125360; 31.05.2010 JP 2010125358; 28.04.2010 JP 2010104453
(43) Date of publication of application: 06.03.2013
(73) Proprietor: Equos Research Co., Ltd., Chiyoda-ku Tokyo 101-0021 (JP)
(72) Inventor: MIZUNO, Akira, Tokyo 101-0021 (JP); HORIGUCHI, Munehisa, Tokyo 101-0021 (JP); SAKAKIBARA, Fumihiko, Tokyo 101-0021 (JP); OKADA, Masaki, Tokyo 101-0021 (JP)
(74) Representative: TBK
(86) International application number: PCT/JP2011/058228
(87) International publication number: WO 2011/135971

(56) References cited:
- JP-A- 5 270 231
- JP-A- 5 270 231
- JP-A- 2004 122 932
- JP-A- 2004 122 932
- JP-A- 2010 083 356
- US-A1- 2006 071 439

## Description

### Technical Field

The present invention relates to a vehicle control apparatus that controls a vehicle in which a camber angle of a wheel can be adjusted by driving force of an actuator, and more particularly, an object thereof is to provide a vehicle control apparatus that can reduce consumption energy of the actuator or suppress the camber angle of the wheel from being changed from a predetermined angle while suppressing the consumption energy.

### Background Art

From the related art, a technology of adjusting a camber angle of a wheel by using an actuator has been known. For example, Patent Literature 1 disclose a technology that displaces an axle 532 relative to a vehicle body and adjusts a camber angle of a wheel by controlling stretching driving of actuators 534 and 535 relative to a vehicle in which the axle 532 supporting a wheel is supported with one point of a ball joint 533 relative to the vehicle body and two points on the axle 532 that extend a support point by the ball joint 533 are connected to the vehicle body through the actuators 534 and 535.

Further, Patent Literature 1 discloses a technology that displaces the axle 2 relative to the vehicle body and adjusts the camber angle of the wheel by controlling stretching driving of an actuator 61 relative to a vehicle in which the axle 2 supporting the wheel is connected to the vehicle body through an upper arm 10 and a lower arm 51, and a stretching-type actuator 61 is interposed between the lower arm 51 and the vehicle body.

Patent Literature 2 discloses a vehicle control apparatus having the features of the preamble of claim 1.

### Citation List

### Patent Literatures

Patent Literature 1: Japanese Patent Application Laid-Open Publication No. 2004-122932 (paragraph [0038], FIG. 7, and the like)
Patent Literature 2: JP 2010 083356 A

### Summary of Invention

### Technical Problem

However, since the aforementioned related art has a structure in which the camber angle of the wheel is kept at a predetermined angle by driving force of the actuator, the actuator needs to be continuously driven and consumption energy increases.

In the aforementioned related art, there is a problem in that, in the case where external force is input into the actuator 61 from the wheel through the lower arm 51, when the actuator 61 cannot normally resist the external force and is thus stretched, the camber angle of the wheel is changed from the predetermined angle. As a result, there is a problem in that, in order to keep the camber angle of the wheel to the predetermined angle, the actuator 61 requires large driving force for resisting the external force and the consumption energy is increased as much.

The present invention is contrived to address the problem and an object thereof is to provide a vehicle control apparatus that can reduce consumption energy of an actuator or suppress a camber angle of a wheel from being changed from a predetermined angle while suppressing consumption energy, relative to a vehicle in which the camber angle of the wheel can be adjusted by driving force of the actuator.

### Solution to Problem and Advantageous Effects of Invention

The object is achieved by a vehicle control apparatus having the features of independent claim 1. Further advantageous developments are set out in the dependent claims.

According to the invention, the carrier member holding the wheel is connected to the vehicle body to be movable vertically by the first suspension arm and the second suspension arm, and one end of the first suspension arm is rotatably connected to the wheel member around the eccentric connection shaft positioned eccentrically to the wheel shaft of the wheel member as a rotation center and the other end thereof is rotatably connected to the carrier member around the other end connection shaft as a rotation center, and thus when the wheel member is rotated round the wheel shaft by the rotational force applied from the rotation section, the eccentric connection shaft is moved on the rotation trajectory around the wheel shaft. As a result, the camber angle of the wheel is adjusted.

Herein, the camber angle setting section rotates the wheel member at the first rotational position where the wheel shaft is positioned on the straight line connecting the eccentric connection shaft and the other connection shaft to set the camber angle of the wheel to the predetermined camber angle. Accordingly, since the angle formed by the straight line connecting the eccentric connection shaft and the other connection shaft and the tangent line on the eccentric connection shaft of the rotation trajectory of the eccentric connection shaft may be close to the right angle, the force component in the direction to rotate the wheel member may be suppressed from being generated even when the force is applied from the first suspension arm to the wheel member. Therefore, since the rotation of the wheel member may be restricted by the mechanical friction force, the driving force required to keep the camber angle of the wheel at the predetermined angle may be made small or unnecessary, and as a result, there is the effect in that the consumption energy of the rotation section may be suppressed.

In this case, when the state in which the wheel shaft is positioned on the straight line connecting the eccentric connection shaft and the other connection shaft changes to the state in which the wheel shaft is not positioned on the straight line connecting the eccentric connection shaft and the other connection shaft due to the carrier member is moved vertically with respect to the vehicle body, the angle formed by the straight line connecting the eccentric connection shaft and the other connection shaft and the tangent line on the eccentric connection shaft of the rotation trajectory of the eccentric connection shaft is not the right angle, and as a result, when the force is applied from the first suspension arm to the wheel member, the rotational position of the wheel member is rotated from the first rotational position by the generation of the force component to rotate the wheel member and the camber angle of the wheel is changed from the predetermined camber angle.

In this regard, according to the invention, since there are provided a rotation judging section that judges whether the rotational position of the wheel member is rotated from the first rotational position by the operation of the external force and a compensation section that operates the rotation section and rotates the wheel member such that the rotational position of the wheel member at least approaches the first rotational position when it is judged that the rotational position of the wheel member is rotated from the first rotational position by the operation of the external force by means of the rotation judging section, the wheel member may approach (be returned to) the position (that is, the first rotational position) where the rotation is easily restricted by the mechanical friction force, by the compensation section. Accordingly, since the rotational position of the wheel member is returned to the first rotational position to easily use the rotation restriction again by the mechanical friction force, the driving force of the rotation section required to keep the camber angle of the wheel at the predetermined angle may be small or cancelled, and as a result, there is the effect in that the consumption energy may be reduced.

Further, when the carrier member is positioned at a neutral position of the vertical movement, since the wheel member is rotated to the first rotational position in the direction to make the angle formed by the straight line connecting the eccentric connection shaft and the other connection shaft and the tangent line on the eccentric connection shaft of the rotation trajectory of the eccentric connection shaft be close to the right angle, the driving force of the rotation section required for the rotation may be small, and as a result, there is the effect in that the consumption energy may be reduced.

Herein, when the carrier member moves vertically, even by following the displacement of the first suspension arm (rotation around the eccentric connection shaft as the rotation center) accompanied by the vertical movement of the carrier member and rotating the wheel member such that the wheel center is positioned on the straight line connecting the eccentric connection shaft and the other connection shaft, it is possible to restrict the rotation of the wheel member by the mechanical friction force, but high responsiveness is required with respect to the rotation section in order to follow the displacement of the first suspension arm, a driving time is lengthened and the consumption energy is increased. In this regard, according to the invention, since the rotation of the wheel member need not follow the displacement of the first suspension arm, there is the effect in that the driving time may be shortened while decreasing the request for the responsiveness of the rotation section and the consumption energy may be reduced as much.

According to the invention, in addition to the effect achieved in the vehicle control apparatus described above, the vehicle control apparatus includes a rotation amount acquiring section that acquires a rotation amount of the wheel member when it is judged by the rotation judging section that the wheel member is rotated from the first rotational position by the operation of the external force; and preferably includes a rotation threshold judging section that judges whether a value of the rotation amount from the first rotational position of the wheel member acquired by the rotation amount acquiring section is equal to or more than a threshold, wherein the rotation section is operated by the compensation section when it is judged by the rotation threshold judging section that the value of the rotation amount from the first rotational position of the wheel member is equal to or more than the threshold, and as a result, there is the effect in that the unnecessary operation of the rotation section may be suppressed and the consumption energy may be reduced.

That is, when the wheel member is rotated by the operation of the external force, the wheel shaft is not positioned on the straight line connecting the eccentric connection shaft and the other connection shaft and the angle formed by the straight line connecting the eccentric connection shaft and the other connection shaft and the tangent line on the eccentric connection shaft of the rotation trajectory of the eccentric connection shaft is not the right angle, but when the rotation amount of the wheel member is comparatively small, a variation in angle formed by the straight line connecting the eccentric connection shaft and the other connection shaft and the tangent line on the eccentric connection shaft of the rotation trajectory of the eccentric connection shaft is comparatively small, and as a result, the force component to rotate the wheel member in the force increased from the first suspension arm to the wheel member also becomes comparatively small. As a result, the mechanical friction force is stronger than the force component to rotate the wheel member and the rotation of the wheel member may be kept in a fixed state. Accordingly, even in this case, the rotational position of the wheel member is rotated to the first rotational position by operating the rotation section to cause the rotation section to be unnecessarily operated.

In this regard, when it is judged by a rotation threshold judging section that a value of the rotation amount of the wheel member from the first rotational position is equal to or more than the threshold (that is, when it is judged the rotation amount of the wheel member is large not to fix the rotation of the wheel member only by the mechanical friction force in the case where predetermined external force is input), the rotational position of the wheel member is rotated to the first rotational position by the compensation section, and as a result, the unnecessary operation of the rotation section may be suppressed and the consumption energy may be reduced.

Preferably, in addition to the effect achieved in the vehicle control apparatus described above, the rotation section includes an electric motor and a short circuit shorting both terminals of the electric motor, and both the terminals of the electric motor are shorted by the short circuit when the wheel member is at least rotated to the first rotational position, and as a result, when the electric motor is rotated in the short-circuit state, current generated by the electric motor flows on the short circuit and a brake may be put on the rotation of the electric motor by the generated current. As a result, when the force is applied to the wheel member from the first suspension arm and the wheel member is rotated from the first rotational position, the brake may be put on the rotation of the wheel member. As a result, there is the effect in that the consumption energy may be reduced and the camber angle of the wheel may be suppressed from being changed.

Preferably, in addition to the effect achieved in the vehicle control apparatus described above, since the second compensation section rotates the wheel member such that the rotational position of the wheel member is positioned at the first rotational position when the wheel member is rotated from the first rotational position by the operation of the external force, the wheel member may be more significantly suppressed from being rotated even though the force is applied from the first suspension arm to the wheel member. As a result, there is the effect in that the subsequent operation of the rotation section by the compensation section may be suppressed and the consumption energy may be reduced.

Preferably, in addition to the effect achieved in the vehicle control apparatus described above, since the operation by the compensation section is set in a stop state under a predetermined condition (for example, when an engine of which ignition is turned off stops in the case where the wheel driving device is configured by the engine), there is the effect in that the consumption energy may be reduced as much.

In this case, as described above, the vehicle has the structure in which the wheel shaft is positioned on the straight line connecting the eccentric connection shaft and the other connection shaft (by using a so-called top dead point of a crank mechanism) to keep the camber angle of the wheel at a predetermined angle. As a result, when the external force (for example, force accompanied by the operation such as loading of a luggage on the vehicle, a person's boarding the vehicle, or opening/closing of a door) works on the vehicle, the wheel member is misaligned from the first rotational position and when the misalignment exceeds a predetermined amount, the camber angle of the wheel may be radically changed.

In this regard, preferably, when a communication authenticating device authenticates a terminal device under a predetermined condition or a lock device unlocks the door, a first compensation restarting section makes the operation by the compensation section be executable, and as a result, although the external force works on the vehicle, the wheel member is misaligned from the first rotational position, the wheel member may be rotated by the compensation section to at least approach the first rotational position. As a result, there is the effect in that the misalignment of the wheel member may be suppressed from being more than a predetermined amount and the camber angle of the wheel may be suppressed from being radically changed.

Similarly preferably, when a camber change detecting sensor detects a change in the camber angle of the wheel by a predetermined angle or more under a predetermined condition, a second compensation restarting section makes the operation by the compensation section be executable, and as a result, although the external force works on the vehicle, the wheel member is misaligned from the first rotational position, the wheel member may be rotated by the compensation section to at least approach the first rotational position. As a result, there is the effect in that the misalignment of the wheel member may be suppressed from being more than a predetermined amount and the camber angle of the wheel may be suppressed from being radically changed.

Further preferably, since the first compensation restarting section makes the operation by the compensation section be executable at the time when the communication authenticating device authenticates the terminal device or at the time when the lock device unlocks the door, the operation by the compensation section may be made executable in advance before the external force works on the vehicle (for example, before the luggage is loaded on the vehicle). Accordingly, the misalignment of the wheel member may be more significantly suppressed from being more than the predetermined amount and the camber angle of the wheel may be more significantly suppressed from being radically changed.

Meanwhile preferably, since the second compensation restarting section makes the compensating operation by the compensation section be executable when the camber change detecting sensor detects the change in camber angle of the wheel by the predetermined angle or more, that is, when the external force works on the vehicle and the wheel member is actually misaligned by the operation, although the compensating operation is set to the stop state under the predetermined condition, the state may be suppressed from unnecessarily being the executable state. Accordingly, there is the effect in that the unnecessary energy consumption may be reduced and the consumption energy may be suppressed as much.

### Brief Description of Drawings

FIG. 1 is a mimetic diagram mimetically illustrating a vehicle on which a vehicle control apparatus is mounted in a first embodiment.
FIG. 2 is a perspective view of a suspension device.
FIG. 3(a) is a front mimetic diagram of a camber angle adjusting device and FIG. 3(b) is a cross-sectional mimetic diagram of the camber angle adjusting device taken along line IIIb-IIIb of FIG. 3(a).
FIG. 4(a) is a front mimetic diagram of the suspension device in a first state and FIG. 4(b) is a front mimetic diagram of the suspension device in a second state.
FIG. 5 is a block diagram illustrating an electrical configuration of the vehicle control apparatus.
FIG. 6(a) is a mimetic diagram of a driving control circuit controlling driving of an RR motor, FIG. 6(b) is a mimetic diagram of the driving control circuit illustrating a state in which a positive rotation circuit is formed, FIG. 6(c) is a mimetic diagram of the driving control circuit illustrating a state in which a negative rotation circuit is formed, and FIG. 6(d) is a mimetic diagram of the driving control circuit illustrating a state in which a short circuit is formed.
FIG. 7 is a flowchart illustrating judgment of a state amount.
FIG. 8 is a flowchart illustrating judgment of a traveling state.
FIG. 9 is a flowchart illustrating judgment of an eccentric abrasion load.
FIG. 10 is a flowchart illustrating camber controlling.
FIG. 11(a) is a mimetic diagram mimetically illustrating the suspension device in the first state and FIG. 11(b) is a mimetic diagram mimetically illustrating of the suspension device in the second state.
FIG. 12(a) is a partially enlarged diagram of FIG. 11(a) and FIG. 12(b) is a partially enlarged diagram of FIG. 11(b) .
FIG. 13 is a flowchart illustrating judgment of a stroke amount.
FIG. 14 is a flowchart illustrating compensation process.
FIG. 15 is a block diagram illustrating an electrical configuration of a vehicle control apparatus in a second embodiment.
FIG. 16(a) is a partially enlarged diagram of a suspension device in a first state and FIG. 16(b) is a partially enlarged diagram of the suspension device in a second state.
FIG. 17 is a flowchart illustrating judgment of wheel misalignment amount.
FIG. 18 is a flowchart illustrating compensation process.
FIG. 19 is a block diagram illustrating an electrical configuration of a vehicle control apparatus in a third embodiment.
FIG. 20 is a flowchart illustrating stand-by process.
FIG. 21 is a top mimetic diagram of a camber angle adjusting device in a fourth embodiment.
FIG. 22 is a cross-sectional mimetic diagram of the camber angle adjusting device taken along line XXII-XXII of FIG. 21.
FIG. 23 is a front mimetic diagram of a vehicle illustrating a state in which a camber angle of a wheel is changed from a first state.
FIG. 24 is a flowchart illustrating stand-by process.
FIG. 25 is a perspective view of a suspension device in a fifth embodiment.
FIG. 26(a) is a front view of a suspension device in a first state and FIG. 26(b) is a front view of the suspension device in a second state.
FIG. 27 is a block diagram illustrating an electrical configuration of a vehicle control apparatus in a sixth embodiment.
FIG. 28(a) is a partially enlarged diagram of a suspension device in a first state and FIG. 26(b) is a partially enlarged diagram of the suspension device in a second state.
FIG. 29(a) is a partially enlarged diagram of a suspension device in a first state and FIG. 29(b) is a partially enlarged diagram of the suspension device in a second state.
FIG. 30 is a flowchart illustrating judgment of a suspension stroke amount.
FIG. 31 is a flowchart illustrating compensation method determination process.
FIG. 32 is a flowchart illustrating first compensation process.
FIG. 33 is a flowchart illustrating second compensation process.
FIG. 34 is a flowchart illustrating judgment of a suspension stroke amount in a seventh embodiment.
FIG. 35 is a flowchart illustrating second compensation process.
FIG. 36 is a flowchart illustrating judgment of a wheel misalignment amount in an eighth embodiment.
FIG. 37 is a flowchart illustrating second compensation process.
FIG. 38(a) is a mimetic diagram mimetically illustrating a suspension device in a first state as the suspension device in a ninth embodiment and FIG. 38(b) is a mimetic diagram mimetically illustrating of the suspension device in a second state.
FIG. 39 is a flowchart illustrating judgment of a wheel misalignment amount.
FIG. 40 is a flowchart illustrating second compensation process.
FIG. 41 is a block diagram illustrating an electrical configuration of a vehicle control apparatus in a tenth embodiment.
FIG. 42(a) is a partially enlarged diagram of a suspension device in a first state and FIG. 42(b) is a partially enlarged diagram of the suspension device in the first state.
FIG. 43 is a flowchart illustrating lock process.
FIG. 44 is a mimetic diagram of a driving control circuit in an eleventh embodiment.
FIG. 45 is a flowchart illustrating judgment of a suspension stroke amount.
FIG. 46 is a flowchart illustrating lock process.
FIG. 47 is a flowchart illustrating judgment of a wheel misalignment amount in a twelfth embodiment.
FIG. 48 is a flowchart illustrating lock process.

### Description of Embodiments

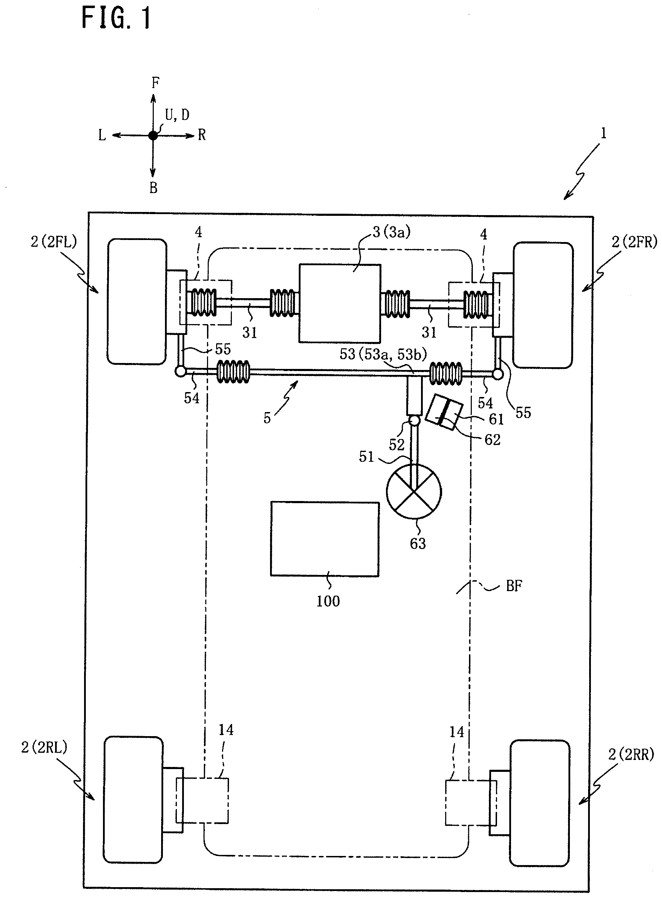

Hereinafter, embodiments of the present invention and embodiments representing not claimed reference examples useful for understanding the invention will be described with reference to the accompanying drawings. FIG. 1 is a mimetic diagram mimetically illustrating a vehicle 1 on which a vehicle control apparatus 100 is mounted in a first embodiment representing a not claimed reference example. Further, arrows U-D, L-R, and F-B of FIG. 1 represent a vertical direction, a horizontal direction, and an anteroposterior direction, respectively.

First, a schematic configuration of the vehicle 1 will be described. As illustrated in FIG. 1, the vehicle 1 primarily includes a vehicle body BF, a plurality of (four in the embodiment) wheels 2 supporting the vehicle body BF, a wheel driving device 3 rotating some (left and right front wheels 2FL and 2FR in the embodiment in the plurality of wheels 2, suspension devices 4 and 14 suspending each wheel 2 independently from the vehicle body BF, and a steering device 5 steering some (left and right front wheels 2FL and 2FR in the embodiment) in the plurality of wheels 2.

Subsequently, a detailed configuration of each unit will be described. As illustrated in FIG. 1, the wheel 2 includes the left and right front wheels 2FL and 2FR positioned at a front side (a direction side of an arrow F) of the vehicle 1 and left and right rear wheels 2RL and 2RR positioned at a rear side (a direction side of an arrow B) of the vehicle 1. Further, in the embodiment, the left and right front wheels 2FL and 2FR are constituted by driving wheels that are rotated by the wheel driving device 3, while the left and right rear wheels 2RL and 2RR are constituted by driven wheels driven with traveling of the vehicle 1.

Further, in the wheel 2, the left and right front wheels 2FL and 2FR and the left and right rear wheels 2RL and 2RR all have the same shape and characteristic, and tread widths (a horizontal size of FIG. 1) of the left and right front wheels 2FL and 2FR and the left and right rear wheels 2RL and 2RR are the same as each other.

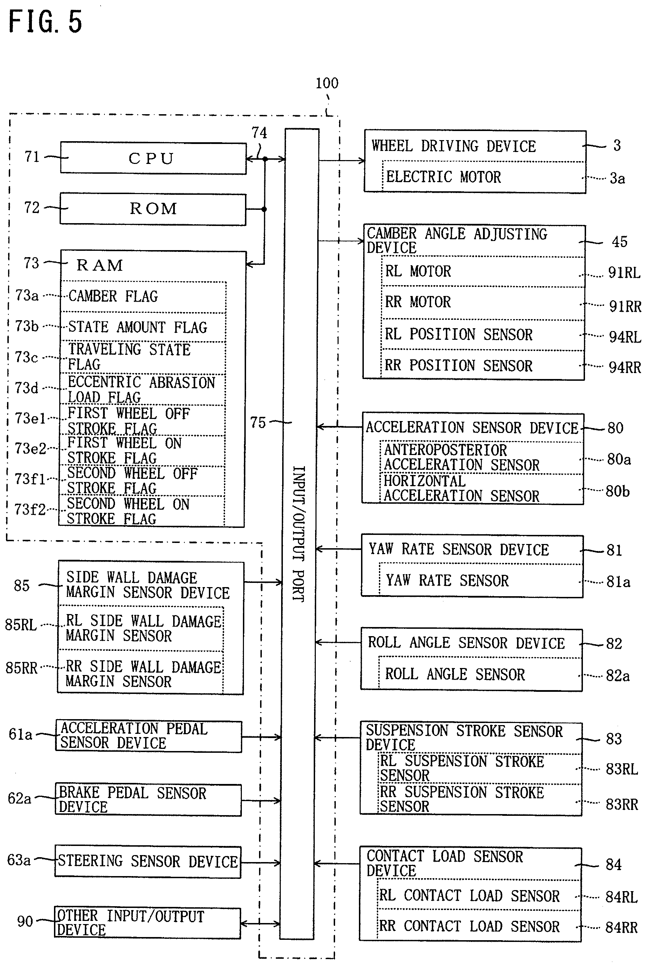

The wheel driving device 3 is a device for rotating the left and right front wheels 2FL and 2FR as described above and constituted by an electric motor 3a as described below (see FIG. 5). Further, the electric motor 3a is connected to the left and right front wheels 2FL and 2FR through a differential gear (not illustrated) and a pair of drive shafts 31, as illustrated in FIG. 1.

When a driver operates an acceleration pedal 61, rotational force is applied to the left and right front wheels 2FL and 2FR from the wheel driving device 3 and the left and right front wheels 2FL and 2FR are rotated according to an operation amount of the acceleration pedal 61. Further, a rotation difference between the left and right front wheels 2FL and 2FR is absorbed by the differential gear.

The suspension devices 4 and 14 serve as devices for absorbing vibration transferred to the vehicle body BF from a road surface through the wheel 2, that is, a suspension, and are configured to be stretchable, and as illustrated in FIG. 1, the suspension device 4 and the suspension device 14 suspend the left and right front wheels 2FL and 2FR and the left and right rear wheels 2RL and 2RR to the vehicle body BF, respectively. Further, the suspension device 14 that suspends the left and right rear wheels 2RL and 2RR also serves as a camber angle adjusting mechanism that adjusts camber angles of the left and right rear wheels 2RL and 2RR.

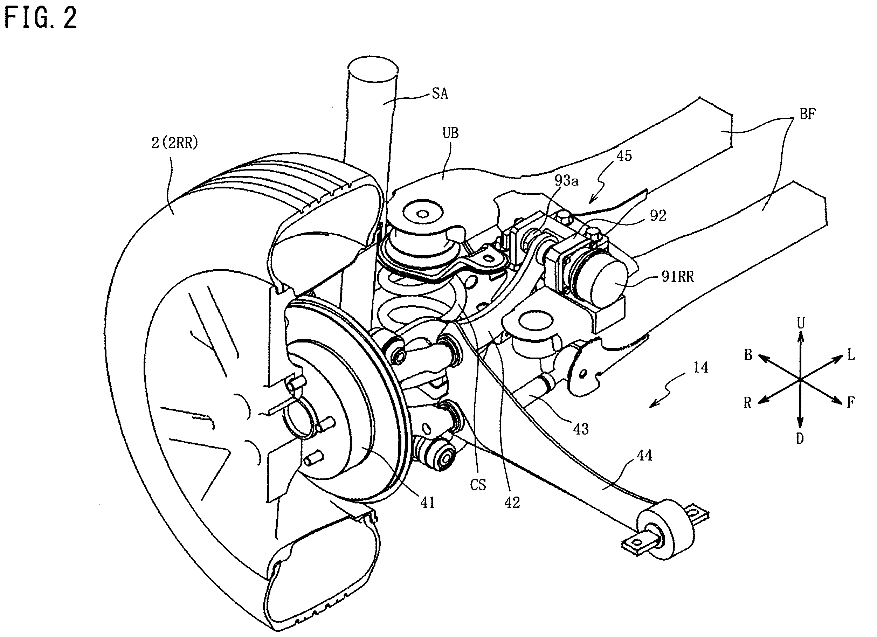

Herein, referring to FIGS. 2 to 4, a detailed configuration of the suspension device 14 will be described. FIG. 2 is a perspective view of the suspension device 14. Further, since left and right configurations of the suspension device 14 are common, only the suspension device 14 that suspends the right rear wheel 2RR will be hereinafter described and the suspension device 14 that suspends the left rear wheel 2RL will not be described.

As illustrated in FIG. 2, the suspension device 14 which has a double wishbone type suspension structure primarily includes a carrier member 41 rotatably holding the wheel 2 (the right rear wheel 2RR), an upper arm 42 and a lower arm 43 that connect the carrier member 41 to the vehicle body BF to be movable vertically and are placed in upper and lower sides while being spaced from each other by a predetermined gap, a coil spring CS and a shock absorber SA that are interposed between the lower arm 43 and an upper bracket UB to serve as a shock-absorbing device, a trailing arm 44 that restricts anteroposterior displacement while allowing vertical movement of the carrier member 41, and a camber angle adjusting device 45 interposed between the upper arm 42 and the vehicle body BF. Further, the lower arm 43 is installed in two.

In this way, in the embodiment, since the wheel 2 is suspended by the double wishbone type suspension structure, the wheel 2 moves vertically relative to the vehicle body BF and the suspension device 14 may minimally suppress a change in the camber angle in stretching (hereinafter, referred to as a 'suspension stroke'). Since the camber angle adjusting device 45 is connected to the upper arm 42, an operation of adjusting the camber angle of the wheel 2 may be performed by using a contact surface of the wheel 2 as a pivot point as compared with a case in which the camber angle adjusting device 45 is connected to the lower arm 43, and thus driving force for adjusting the camber angle may be reduced.

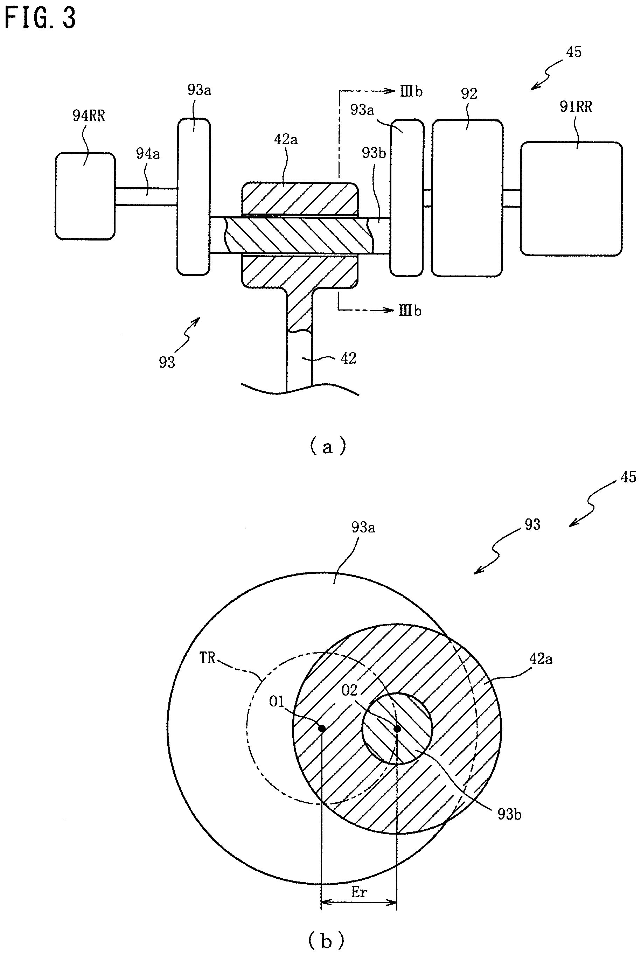

Referring to FIG. 3, a detailed configuration of the camber angle adjusting device 45 will be described. FIG. 3(a) is a top mimetic diagram of the camber angle adjusting device 45 and FIG. 3(b) is a cross-sectional mimetic diagram of the camber angle adjusting device 45 taken along line IIIb-IIIb of FIG. 3(a). Further, FIG. 3(a) illustrates a partial cross-sectional state of some components.

The camber angle adjusting device 45 is a device for adjusting the camber angle of the wheel 2 (right rear wheel 2RR) and primarily includes an RR motor 91RR generating the rotational force, a deceleration device 92 decelerating and outputting rotation input from the RR motor 91RR, a crank member 93 rotated by the rotational force output from the deceleration device 92, and an RR position sensor 94RR detecting a phase of the crank member 93.

The RR motor 91RR is configured by a DC motor, and the rotational force of the RR motor 91RR is decelerated by the deceleration device 92 and thereafter, applied to the crank member 93. The crank member 93 as a part configured by a crank mechanism that converts a shaft-rotation motion of the RR motor 91RR into a reciprocating motion of the upper arm 42, and includes a pair of wheel members 93a which are disposed to be opposite to each other by a predetermined gap and a crank pin 93b connecting opposite surfaces of the pair of wheel members 93a.

The wheel member 93a is formed in a disk shape having an axis O1, and is installed in the vehicle body BF (see FIG. 2) in a state in which the wheel member 93a is rotatable around the axis O1 as a rotating center by the rotational force applied from the deceleration device 92. The crank pin 93b is a shaft-shaped member to which a connection portion 42a provided at one end of the upper arm 42 is rotatably connected and is installed to be eccentric to the axis O1 of the wheel member 93a.

That is, an axis 02 of the crank pin 93b is positioned to be eccentric to the axis O1 of the wheel member 93a by a distance Er. Therefore, when the wheel member 93a rotates around the center shaft O1, the crank pin 93b moves on a rotation trajectory TR using the distance Er as a rotation radius around the axis O1 of the wheel member 93a. As a result, when the crank member 93 rotates, the upper arm 42 connected to the crank pin 93b reciprocates in a direction (the vertical direction of FIG. 3) to be close to or distant from the vehicle body BF (see FIG. 2).

The RR position sensor 94RR includes a position shaft 94a coaxially connected with the axis O1 at the center of the wheel member 93a and a variable resistor (not illustrated) installed on the position shaft 94a, of which a resistance value varies depending on a rotational angle of the position shaft 94a. Therefore, when the crank member 93 rotates, the rotational angle (that is, a phase of the crank pin 93b) of the crank member 93 may be detected based on the resistance value of the variable resistor. Further, the RR position sensor 94RR may be configured by a non-contact sensor using a hall element.

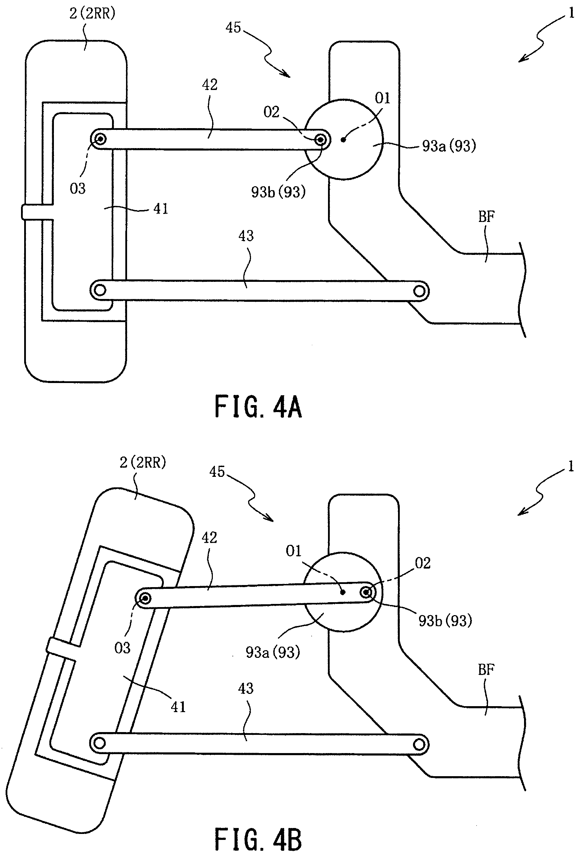

FIG. 4(a) is a front mimetic diagram of the suspension device 14 in a first state and FIG. 4(b) is a front mimetic diagram of the suspension device 14 in a second state. As described above, in the upper arm 42, the connection portion 42a (see FIG. 3) provided at one end thereof is rotatably connected to the position (axis O2) eccentric from the axis O1 of the wheel member 93a through the crank pin 93b, while the other end (the left side of FIG. 4) thereof is rotatably connected to the top (the upper side of FIG. 4) of the carrier member 41.

Therefore, when the wheel member 93a of the crank member 45 rotates around the axis O1 as the rotation center by the rotational force applied) from the RR motor 91RR, the crank pin 93b moves on the rotation trajectory TR (see FIG. 3(b)) and the upper arm 42 reciprocates. As a result, the top (the upper side of FIG. 4) of the carrier member 41 is close to or distant from the vehicle body BF through the upper arm 42 to adjust the camber angle of the wheel 2 held on the carrier member 41.

Herein, a rotation center when the other end (the left side of FIG. 4) of the upper arm 42 is rotatably connected to the top of the carrier member 41 is defined as an axis 03. In the embodiment, the camber angle of the wheel 2 is adjusted such that each of the axes O1, O2, and O3 becomes any one state of the first state (the state illustrated in FIG. 4(a)) in which the axes O3, O2, and O1 are in sequence positioned on a straight line in parallel and the second state (the state illustrated in FIG. 4(a)) in which the axes O3, O1, and O2 are in sequence positioned on the straight line in parallel, in the direction (a direction from the left to the right in FIG. 4) from the wheel 2 to the vehicle body BF.

In the embodiment, in the second state illustrated in FIG. 4(b), the camber angle of the wheel 2 is adjusted to a predetermined angle (-3°) in the embodiment, hereinafter, referred to as a 'second camber angle') of a minus direction (a state in which a center line of the wheel 2 is inclined to the vehicle body BF side with respect to a vertical line), and a negative camber is applied to the wheel 2. Meanwhile, in a first camber state illustrated in FIG. 4(a), the applying of the camber angle to the wheel 2 is cancelled and the camber angle is adjusted to 0° (hereinafter, referred to as a 'first camber angle').

In this case, in the first state and the second state, since a straight line connecting the axis O3 and the axis O2 may be vertical to a tangent line on the axis O2 of the rotation trajectory TR (see FIG. 3(b)) of the axis O2, although force is applied to the wheel member 93a from the upper arm 42, a force component that rotates the wheel member 93a is not generated and may allow the wheel member 93a not to rotate. Accordingly, since the camber angle of the wheel 2 may be mechanically kept to the predetermined angle (first camber angle or second camber angle), the driving force of the RR motor 91RR may be cancelled in the first state or the second state. As a result, the consumption energy of the RR motor 91RR required to keep the camber angle of the wheel 2 to the predetermined angle may be reduced.

Further, except that the suspension device 4 provided to correspond to the left and right front wheels 2FL and 2FR does not have a function of adjusting the camber angles of the left and right front wheels 2FL and 2FR (that is, the camber angle adjusting device 45 is omitted and one end of the upper arm 42 is rotatably connected to the vehicle body BF), and is configured to have a steering function, the other configurations are the same as the suspension device 14, and thus a description thereof will be omitted.

Referring back to FIG. 1, a description will be made. The steering device 5 is a device for transferring an operation of a steering 63 by a driver to the left and right front wheels 2FL and 2FR to operate the steering 63 and is configured by a so called rack and pinion type steering gear.

According to the steering device 5, the operation (rotation) of the steering 63 by the driver is first transferred to a universal joint 52 through a steering column 51, and transferred to a pinion 53a of a steering box 53 as a rotating motion while changing an angle by the universal joint 52. In addition, the rotating motion transferred to the pinion 53a is converted into a linear motion of a rack 53b and the rack 53b is linearly moved, such that tie rods 54 connected to both ends of the rack 53b move. As a result, the tie rods 54 push-pulls a knuckle 55 to apply a predetermined rudder angle to the wheel 2.

The acceleration pedal 61 and a brake pedal 62 are operation members operated by the driver, and a travelling velocity or braking force of the vehicle 1 is determined, and driving the wheel driving device 3 is controlled, according to an operation state (a stepping amount, a stepping velocity, and the like) of each of the pedals 61 and 62. The steering 63 is an operation member operated by the driver, and the left and right front wheels 2FL and 2FR are steered by the steering device 5 according to an operation state thereof (a steering angle, a steering angular velocity, and the like).

The vehicle control apparatus 100 is an apparatus for controlling each unit of the vehicle 1 configured as described above, and for example, controls an operation of the camber angle adjusting device 45 (see FIG. 3) according to the operation state of each of the pedals 61 and 62 or the steering 63 or a detection result of a suspension stroke sensor device 83.

Subsequently, referring to FIG. 5, a detailed configuration of the vehicle control apparatus 100 will be described. FIG. 5 is a block diagram illustrating an electrical configuration of the vehicle control apparatus 100. The vehicle control apparatus 100 includes a CPU 71, a ROM 72, and a RAM 73, which are connected to an input/output port 75 through a bus line 74, as illustrated in FIG. 5. The devices such as the wheel driving device 3, and the like are connected to the input/output port 75.

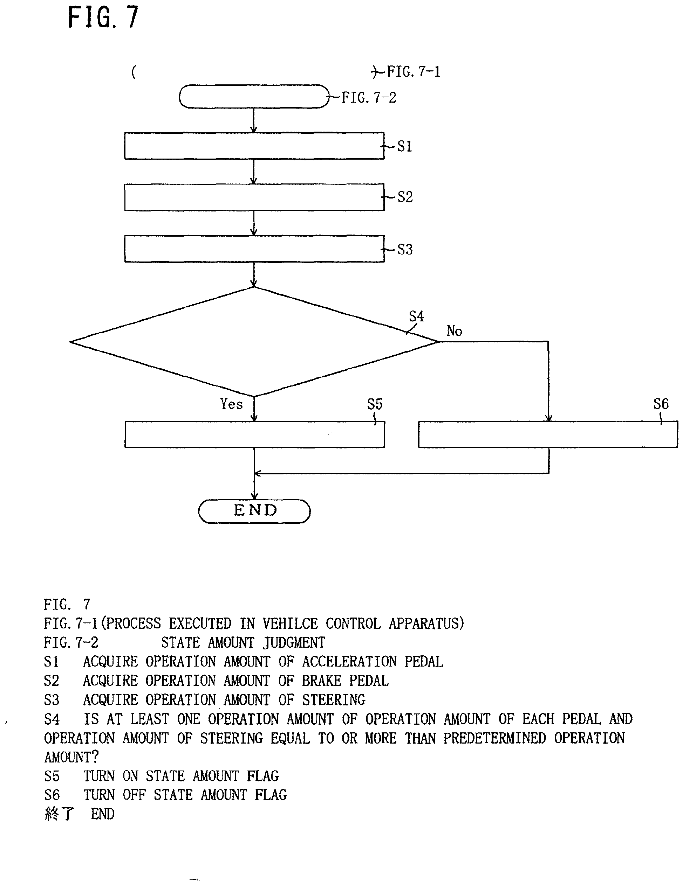

The CPU 71 is a computing device that controls each unit connected by the bus line 74. The ROM 72 is a nonvolatile memory in which rewriting is impossible, which stores control programs (for example, programs of flowcharts illustrated in FIGS. 7 to 10 and FIGS. 13 and 14) executed by the CPU 71 or fixation value data.

The RAM 73 is a memory for storing various data to be rewritten at the time of executing the control programs, and a camber flag 73a, a state amount flag 73b, a travelling state flag 73c, an eccentric abrasion load flag 73d, a first wheel off stroke flag 73e1, a first wheel on stroke flag 73e2, a second wheel off stroke flag 73f1, and a second wheel on stroke flag 73f2 are provided.

The camber flag 73a is a flag indicating whether the camber angle of the wheel 2 (left and right rear wheels 2RL and 2RR) is adjusted to the second camber angle, and when the camber angle of the wheel 2 is adjusted to the second chamber angle (that is, a negative camber is applied), the camber flag is switched to on, and when the camber angle of the wheel 2 is adjusted to the first camber angle (that is, applying the negative camber is cancelled), the camber flag is switched to off.

The state amount flag 73b is a flag indicating whether the state amount of the vehicle 1 satisfies a predetermined condition, and is switched to on or off at the time of executing judgment of the state amount to be described below (see FIG. 7). Further, the state amount flag 73b in the embodiment is switched to on when at least one operation amount of operation amounts of the acceleration pedal 61, the brake pedal 62, and the steering 63 is equal to or more than a predetermined operation amount, and the CPU 71 judges that the state amount of the vehicle 1 satisfies a predetermined condition when the state amount flag 73b is on.

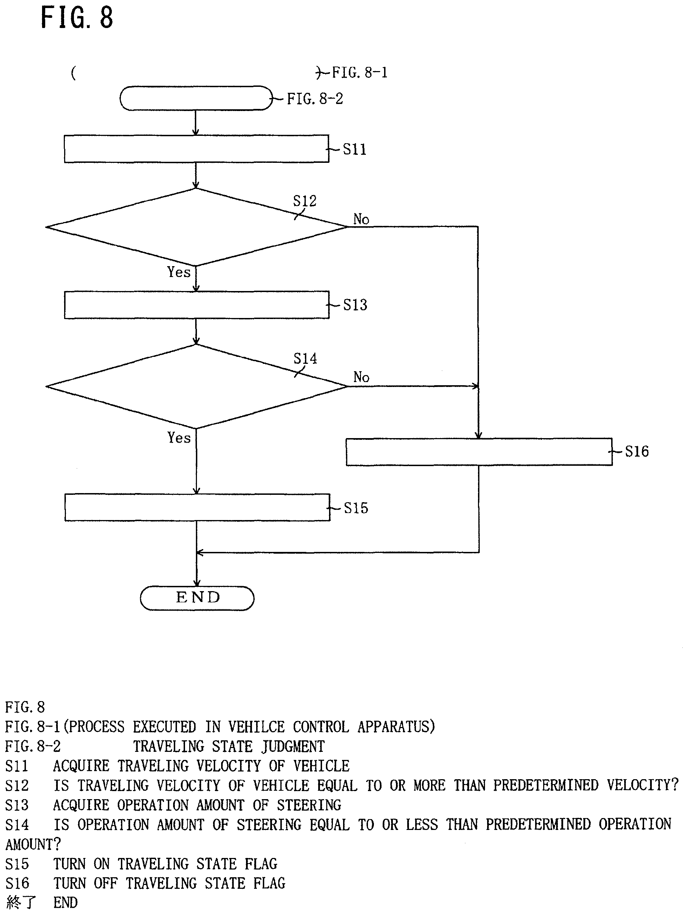

The travelling state flag 73b is a flag indicating whether the traveling state of the vehicle 1 is a predetermined direct advance state, and is switched to on or off at the time of executing judgment of the travelling state to be described below (see FIG. 8). Further, the travelling state flag 73c in the embodiment is switched to on when the travelling velocity of the vehicle 1 is equal to or more than a predetermined travelling velocity and further, the operation amount of the steering 63 is equal to or less than a predetermined operation amount, and the CPU 71 judges that the traveling state of the vehicle 1 is the predetermined direct advance state when the traveling state flag 73c is on.

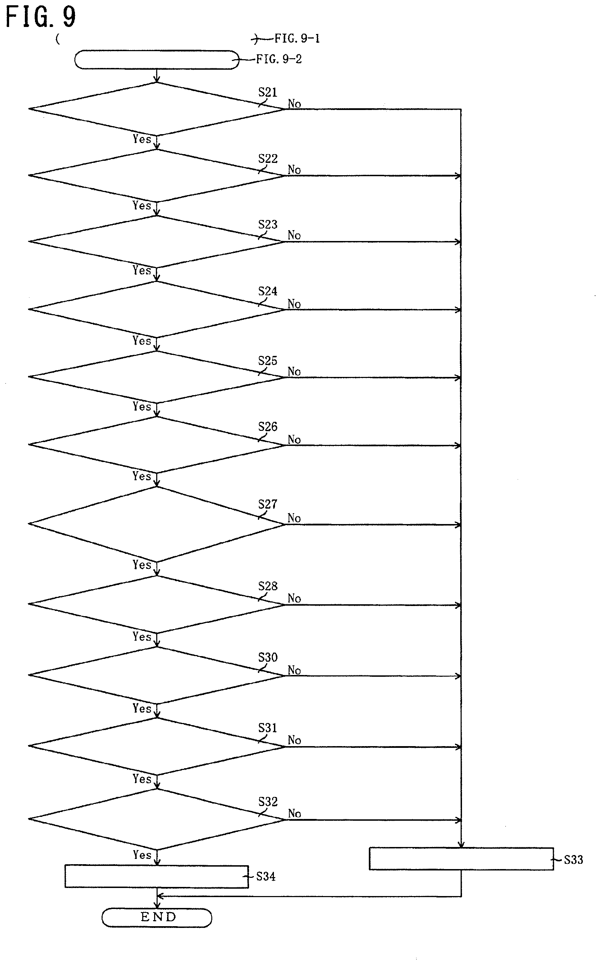

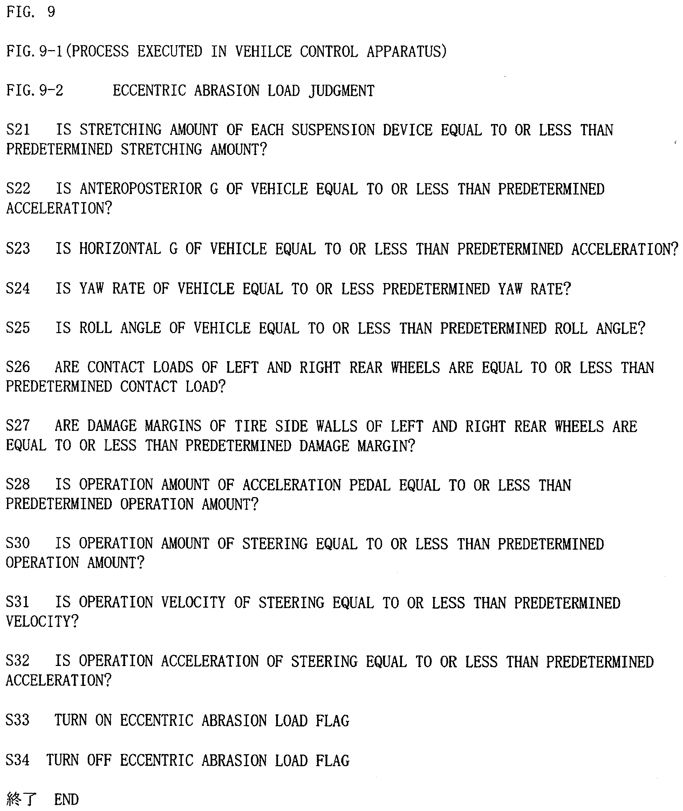

The eccentric abrasion load flag 73d is a flag indicating whether a contact load of the wheel 2 is a contact load (hereinafter, referred to as 'eccentric abrasion load') which may cause eccentric abrasion in a tire (tread) when the vehicle 1 travels in a state in which the camber angle of the wheel is in the state of the second camber angle, that is, the negative camber is applied to the wheel 2, and is switched to on or off at the time of executing judgment of the eccentric abrasion load to be described below (see FIG. 9). The CPU 71 judges that the contact load of the wheel 2 is the eccentric abrasion load which may cause eccentric abrasion in the tire when the eccentric abrasion load flag 73d is on.

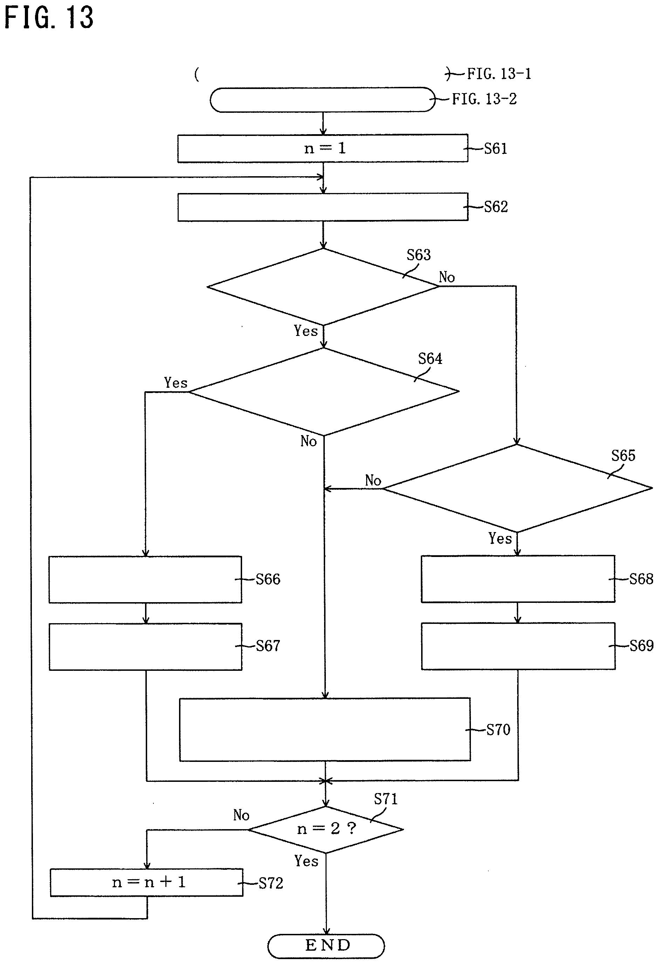

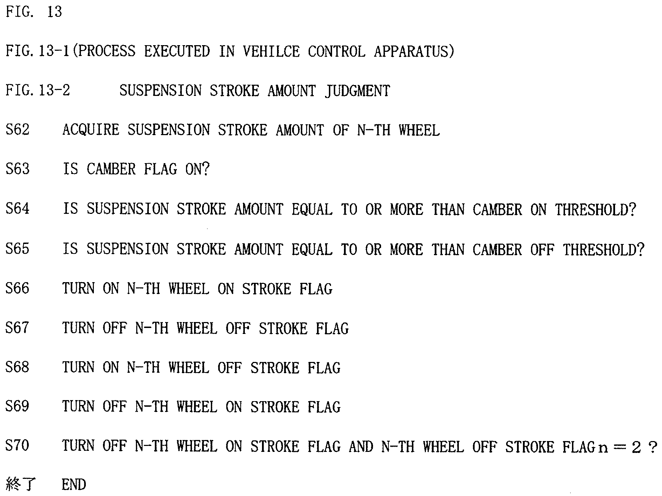

The first wheel off stroke flag 73e1 is a flag indicating whether a stretching amount (hereinafter, referred to as a 'suspension stroke amount') of the suspension device 14 suspending a first wheel (the right rear wheel 2RR in the embodiment) is equal to or more than a predetermined threshold (that is, a 'camber off threshold (not illustrated)' stored in the ROM 72) in the state in which the camber angle of the wheel 2 is adjusted to the first camber angle (that is, the state in which the applying of the negative camber is cancelled), and is switched to on or off at the time of executing judgment of the suspension stroke amount to be described below (see FIG. 13) .

The first wheel on stroke flag 73e2 is a flag indicating whether the stretching amount (suspension stroke) of the suspension device 14 suspending the first wheel (the right rear wheel 2RR in the embodiment) is equal to or more than a predetermined threshold (that is, a "camber on threshold (not illustrated)' stored in the ROM 72) in the state in which the camber angle of the wheel 2 is adjusted to the second camber angle (that is, the state in which the negative camber is applied), and is switched to on or off at the time of executing judgment of the suspension stroke amount to be described below (see FIG. 13) .

The second wheel off stroke flag 73f1 and the second wheel on stroke flag 73f2 are flags corresponding to the first wheel off stroke flag 73e1 and the first wheel on stroke flag 73e2, respectively, and since a state of the wheel 2 or a used threshold which is a reference is the same except that the left rear wheel 2RL is targeted, a description thereof will be omitted.

Further, the first wheel off stroke flag 73e1 to the second wheel on stroke flag 73f2 are switched to on when the stretching amount is more than the predetermined threshold and off when the stretching amount is equal to or less than the predetermined threshold. The CPU 71 compensates an operation angle (the phase of the crank member 93, see FIG. 3) of the camber angle adjusting device 45 when each of the stroke flags 73e1 to 73f2 are on.

The wheel driving device 3 is a device for rotating the left and right front wheels 2FL and 2FR (see FIG. 1) and primarily includes the electric motor 3a applying the rotational force to the left and right front wheels 2FL and 2FR, and a driving control circuit (not illustrated) controlling driving of the electric motor 3a based on a command from the CPU 71, as described above. However, the wheel driving device 3 is not limited to the electric motor 3a and may, of course, adopt other driving sources. As other driving sources, for example, a hydraulic motor or an engine is exemplified.

The camber angle adjusting device 45 is a device for adjusting the camber angle of the wheel 2 (left and right rear wheels 2RL and 2RR), and primarily includes an RL motor 91RL and an RR motor 91RR applying the rotational force to the crank member 93 (see FIG. 3) of each suspension device 14, an RL position sensor 94RL and an RR position sensor 94RR each detecting a phase of the crank member 93 rotated by the rotational force of each of the motors 91RL and 91RR, an output circuit (not illustrated) process a detection result of each of the position sensors 94RL and 94RR and outputting the detection result to the CPU 71, and a driving control circuit controlling driving of each of the motors 91RL and 91RR based on the command from the CPU 71, as described above.

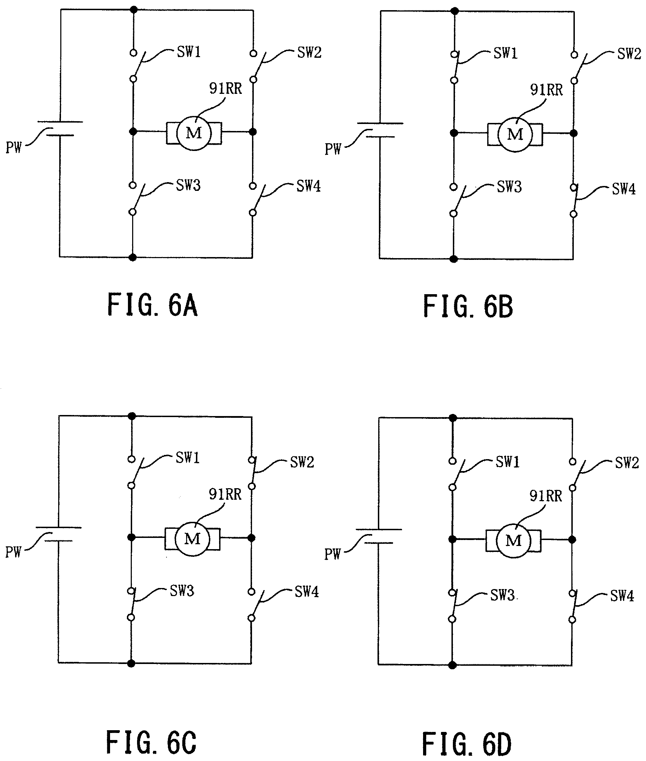

Herein, referring to FIG. 6, the driving control circuit will be described. FIG. 6(a) is a mimetic diagram of the driving control circuit controlling driving of the RR motor 91RR, FIG. 6(b) is a mimetic diagram of the driving control circuit illustrating a state in which a positive rotation circuit is formed, FIG. 6(c) is a mimetic diagram of the driving control circuit illustrating a state in which a negative rotation circuit is formed, and FIG. 6(d) is a mimetic diagram of the driving control circuit illustrating a state in which a short circuit is formed.

Further, since the driving control circuits controlling driving of the RL motor 91RL and the RR motor RR have the same configuration, only the driving control circuit controlling driving of the RR motor 91RR will be hereinafter described and the driving control circuit controlling driving of the RL motor 91RL will not be described. In addition, in FIG. 6, a resistor is not illustrated.

As illustrated in FIG. 6(a), the driving control circuit includes a power supply PW supplying predetermined voltage to the RR motor 91RR and four switches SW1 to SW4, and forms the short circuit shorting both terminals of the RR motor 91RR. That is, in the driving control circuit, an output terminal of the power supply PW is connected to one end of the switch SW1 and one end of the switch SW2, the other end of the switch SW1 is connected to one side of both terminals of the RR motor 91RR and one end of the switch SW3, and the other end of the switch SW2 is connected to the other side of both terminals of the RR motor 91RR and the other end of the switch SW4. Further, the other end of the switch SW4 is connected to the other end of the switch SW3 and a ground terminal of the power supply PW.

According to the driving control circuit, the switch SW1 and the switch SW4 are closed, and further, the switch SW2 and the switch SW3 are opened to form the positive rotation circuit, as illustrated in FIG. 6(b). As a result, positive-rotation direction voltage is applied to the RR motor 91RR to positively rotate the RR motor 91RR. Meanwhile, as illustrated in FIG. 6(c), the switch SW2 and the switch SW3 are closed, and further, the switch SW1 and the switch SW4 are opened to form the negative rotation circuit and invert a voltage polarity applied to the RR motor 91RR. As a result, negative-rotation direction voltage is applied to the RR motor 91RR to negatively rotate the RR motor 91RR.

Meanwhile, as illustrated in FIG. 6(d), the switch SW1 and the switch SW2 are opened, and further, the switch SW3 and the switch SW4 are closed to form the short circuit in which both terminals of the RR motor 91RR are shorted. As a result, when the RR motor 91RR is rotated by the external force, current generated by the RR motor 91RR flows to the short circuit and the rotation of the RR motor 91RR may be broken by the generated current.

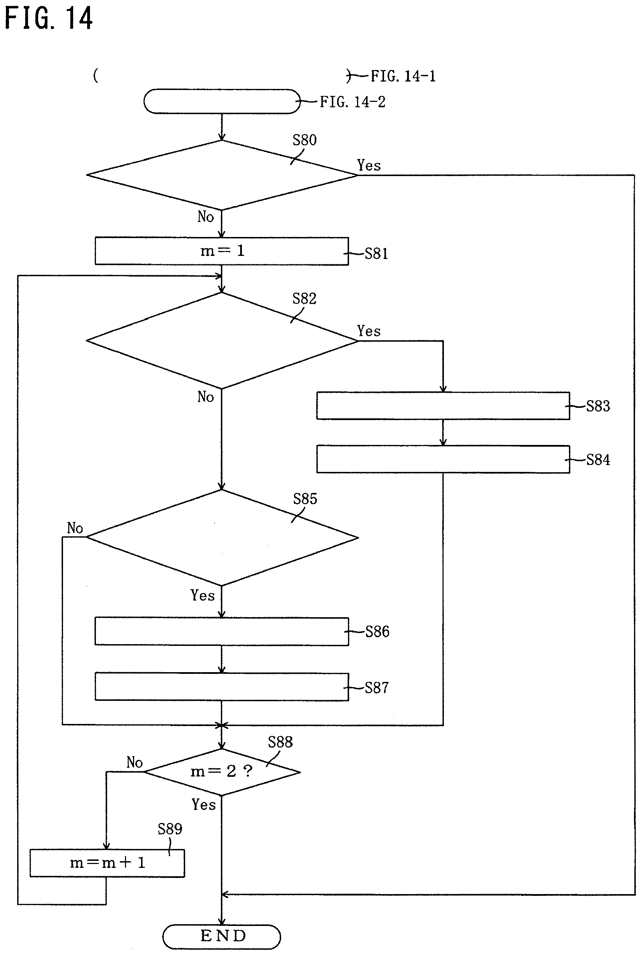

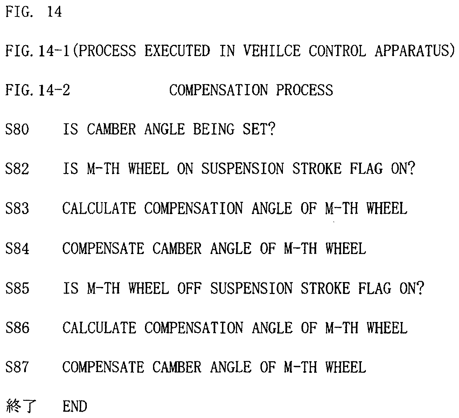

Further, in the embodiment, when the camber angle of the wheel 2 (left and right rear wheels 2RL and 2RR) is adjusted to the first camber angle or the second camber angle, and the camber angle adjusting device 45 (see FIG. 3) is in the first state or the second state, the aforementioned short circuit is formed. As a result, when force is applied from the upper arm 42 to the crank member 93 (that is, the wheel member 93a through the crank pin 93b), and the wheel member 93a is rotated, the rotation of the wheel member 93a may be broken. Accordingly, for example, when the wheel 2 overcomes an uneven lane, and the like, that is, when large displacement (that is, the suspension stroke of the suspension device 14) is input within a comparatively short time by vertical movement of the carrier member 41 and an operation of each of the motors 91RL and 91RR by compensation process to be described below (see FIG. 14) is delayed, the wheel member 93a may be broken by the short circuit, and as a result, the camber angle of the wheel 2 may be suppressed from being changed from the first camber angle or the second camber angle.

Referring back to FIG. 5, a description will be made. The acceleration sensor device 80 is a device for detecting an acceleration of the vehicle 1 and outputting the detection result to the CPU 71, and primarily includes an anteroposterior acceleration sensor 80a and a horizontal acceleration sensor 80b, and an output circuit (not illustrated) process detection results of the acceleration sensors 80a and 80b and outputting the processed detection results to the CPU 71.

The anteroposterior acceleration sensor 80a is a sensor that detects an anteroposterior (the direction of the arrow F-B of FIG. 1) acceleration of the vehicle 1 (vehicle body frame BF), that is, anteroposterior G, and the horizontal accelerations sensor 80b is a sensor that detects a horizontal (the direction of the arrow L-R of FIG. 1) acceleration of the vehicle 1 (vehicle body frame BF), that is, horizontal G. Further, in the embodiment, each of the acceleration sensors 80a and 80b is configured by a piezoelectric sensor using piezoelectric elements.

In addition, the CPU 71 temporally integrates the detection results (anteroposterior G and horizontal G) of the respective acceleration sensors 80a and 80b input from the acceleration sensor device 80, and calculates two-direction (anteroposterior and horizontal) velocities and synthesizes the two-direction components to acquire the traveling velocity of the vehicle 1.

A yaw rate sensor device 81 is a device for detecting a yaw rate of the vehicle 1 and outputting the detection result to the CPU 71, and primarily includes a yaw rate sensor 81a detecting a rotation angular velocity of the vehicle 1 (the vehicle body frame BF) around a vertical axis (an arrow U-D direction axis of FIG. 1) passing through the center of the vehicle 1 and an output circuit (not illustrated) process a detection result of the yaw rate sensor 81a and outputting the processed detection result to the CPU 71.

A roll angle sensor device 82 is a device for detecting a roll angle of the vehicle 1 and outputting the detection result to the CPU 71, and primarily includes a roll angle sensor 82a detecting a rotation angle of the vehicle 1 (the vehicle body frame BF) around an anteroposterior axis (an arrow F-B direction axis of FIG. 1) passing through the center of the vehicle 1 and an output circuit (not illustrated) process a detection result of the roll angle sensor 82a and outputting the processed detection result to the CPU 71.

Further, in the embodiment, the yaw rate sensor 81a and the roll angle sensor 82a are configured by optical gyro sensors that detect the rotation angular velocity and the rotational angle by a Sagnac effect. However, other types of gyro sensors may be adopted, of course. Other types of gyro sensors include, for example, a mechanical or hydraulic gyro sensor.

The suspension stroke sensor device 83 is a device for detecting the stretching amount of each suspension device 14 suspending the left and right rear wheels 2RL and 2RR to the vehicle body BF and outputting the detection result to the CPU 71, and primarily includes total two RL suspension stroke sensor 83RL and RR suspension stroke sensor 83RR that detect the stretching amount of each suspension device 14, and an output circuit (not illustrated) process detection results of the respective suspension stroke sensors 83RL and 83RR and outputting the processed detection results to the CPU 71.

In the embodiment, each of the suspension stroke sensors 83RL and 83RR is configured by a strain gauge, and each of the suspension stroke sensors 83RL and 83RR is installed at a shock absorber (not illustrated) of each suspension device 14.

Further, the CPU 71 may acquire contact loads of the left and right rear wheels 2RL and 2RR based on the detection result (stretching amount) of each of the suspension stroke sensors 83RL and 83RR input from the suspension stroke sensor device 83. That is, since the contact load of the wheel 2 and the stretching amount of the suspension device 4 have a proportional relationship with each other, when the stretching amount of the suspension device 4 is set as X and a damping constant of the suspension device 4 is set as k, the contact load F of the vehicle 2 is expressed by F = kX.

The contact load sensor device 84 is a device for detecting the contact loads of the left and right rear wheels 2RL and 2RR and outputting the detection results to the CPU 71, and includes total two RL and RR contact load sensors 84RL and 84RR that detect the contact loads of the respective wheels 2 and an output circuit (not illustrated) process the detection results of the respective contact load sensors 84RL and 84RR and outputting the processed detection results to the CPU 71.

Further, in the embodiment, each of the contact load sensors 84RL and 84RR is configured by a piezoresistive load sensor, and each of the contact load sensors 84RL and 84RR is installed at a shock absorber SA (see FIG. 2) of each suspension device 14.

A side wall damage margin sensor device 85 is a device for detecting damage margins of tire side walls of the left and right rear wheels 2RL and 2RR and outputting the detection results to the CPU 71, and includes total two RL and RR side wall damage margin sensors 85RL and 85RR that detect the damage margins of the tire side walls of the respective wheels 2 and an output circuit (not illustrated) process the detection results of the respective side wall damage margin sensors 85RL and 85RR and outputting the processed detection results to the CPU 71.

Further, in the embodiment, each of the side wall damage margin sensors 85RL and 85RR is configured by a strain gauge and each of the side wall damage margin sensors 85RL and 85RR is installed in each wheel 2.

The acceleration pedal sensor device 61a is a device for detecting the operation amount of the acceleration pedal 61 and outputting the detection result to the CPU 71, and primarily includes an angular sensor (not illustrated) detecting the stepping amount of the acceleration pedal 61 and an output circuit (not illustrated) process a detection result of the angular sensor and outputting the processed detection result to the CPU 71.

A brake pedal sensor device 62a is a device for detecting the operation amount of the brake pedal 62 and outputting the detection result to the CPU 71, and primarily includes an angular sensor (not illustrated) detecting the stepping amount of the brake pedal 62 and an output circuit (not illustrated) process a detection result of the angular sensor and outputting the processed detection result to the CPU 71.

A steering sensor device 63a is a device for detecting the operation amount of the steering 63 and outputting the detection result to the CPU 71, and primarily includes an angular sensor (not illustrated) detecting a steering angle of the steering 63 and an output circuit (not illustrated) process a detection result of the angular sensor and outputting the processed detection result to the CPU 71.

Further, in the embodiment, each angular sensor is configured by a contact type potentiometer using electrical resistance. In addition, the CPU 71 temporally differentiates the detection result (operation amount) of each angular sensor input from each of the sensor devices 61a, 62a, and 63a to acquire a stepping velocity of each of the pedals 61 and 62, and a steering angular velocity of the steering 63. Further, the CPU 71 temporally differentiates the acquired steering angular velocity of the steering 63 to acquire the steering angular acceleration of the steering 63.

Another input/output device 90 illustrated in FIG. 3 includes, for example, a navigation device that acquires a current position of the vehicle 1 by using a GPS and acquires the acquired current position of the vehicle 1 in correspondence with map data storing information on a road, and the like.

Subsequently, referring to FIG. 7, judgment of the state amount will be described. FIG. 7 is a flowchart illustrating the judgment of the state amount. This process is executed repeatedly (for example, at an interval of 0.2 seconds) by the CPU 71 while power of the vehicle control apparatus 100 is input and in this process, it is judged whether the state amount of the vehicle 1 satisfies a predetermined condition.

The CPU 71 is associated with the judgment of the state amount, and first acquires the operation amount (stepping amount) of the acceleration pedal 61, the operation amount (stepping amount) of the brake pedal 62, and the operation amount (steering angle) of the steering 63 (S1, S2, and S3), and judges whether at least one operation amount of the operation amounts of the respective pedals 61 and 62, and the operation amount of the steering 63 which are acquired is equal to or more than a predetermined operation amount (S4). Further, in the process of S4, the operation amounts of the respective pedals 61 and 62, and the operation amount of the steering 63 which are acquired by the process of S1 to S3 are compared with thresholds (in the embodiment, limit values by which it is judged that there is a concern in that the wheel 2 is slipped when the vehicle 1 is accelerated, braked or is turned with the camber angle of the wheel 2 being the second camber angle) which are previously stored in the ROM 72 which correspond to the operation amounts of the respective pedals 61 and 62, and the operation amount of the steering 63, and it is judged whether the current operation amounts of the respective pedals 61 and 62, and the current operation amount of the steering 63 are equal to or more than the predetermined operation amount.

As a result, when it is judged that at least one operation amount of the operation amounts of the respective pedals 61 and 62, and the operation amount of the steering 63 is equal to or more than the predetermined operation amount (S4: Yes), the state amount flag 73b is turned on (S5) and the state amount judgment is terminated. That is, in the state amount judgment, when at least one operation amount of the operation amounts of the respective pedals 61 and 62, and the operation amount of the steering 63 is equal to or more than the predetermined operation amount, it is judged that the state amount of the vehicle 1 satisfies the predetermined condition.

Meanwhile, as a result of the process of S4, when it is judged that all the operation amounts of the respective pedals 61 and 62, and the operation amount of the steering 63 are less than the predetermined operation amount (S4: No), the state amount flag 73b is turned off (S6) and the state amount judgment is terminated.

Subsequently, referring to FIG. 8, judgment of the traveling state will be described. FIG. 8 is a flowchart illustrating the judgment of the traveling state. This process is executed repeatedly (for example, at an interval of 0.2 seconds) by the CPU 71 while power of the vehicle control apparatus 100 is input and in this process, it is judged whether the traveling state of the vehicle 1 is a predetermined direct advance state.

The CPU 71 is associated with the judgment of the traveling state, and first acquires the traveling velocity of the vehicle 1 (S11) and judges whether the acquired traveling velocity of the vehicle 1 is equal to or more than a predetermined velocity (S12). Further, in the process of S12, the traveling velocity of the vehicle 1 which is acquired by the process of S11 is compared with a threshold previously stored in the ROM 72, and it is judged whether the current traveling velocity of the vehicle 1 is equal to or more than the predetermined velocity.

As a result, when it is judged that the traveling velocity of the vehicle 1 is less than the predetermined velocity (S12: No), the traveling state flag 73c is turned off (S16) to terminate the traveling state judgment.

Meanwhile, as a result of the process of S12, when it is judged that the traveling velocity of the vehicle 1 is equal to or more than the predetermined velocity (S12: Yes), the operation amount (steering angle) of the steering 63 is acquired (S13), and it is judged whether the acquired operation amount of the steering 63 is equal to or less than the predetermined operation amount (S14). Further, in the process of S14, the operation amount of the steering 63 which is acquired by the process of S13 is compared with a threshold (a value smaller than the operation amount of the steering 63 for judging whether the state amount of the vehicle 1 satisfies the predetermined condition, in the state amount judgment illustrated in FIG. 7, in the embodiment) which is previously stored in the ROM 72 to judge whether the current operation amount of the steering 63 is equal to or more than the predetermined operation amount.

As a result, when it is judged that the operation amount of the steering 63 is equal to or less than the predetermined operation amount (S14: Yes), the traveling state flag 73c is turned on (S15) to terminate the traveling state judgment. That is, in the traveling state judgment section, when the traveling velocity of the vehicle 1 is equal to or more than the predetermined velocity and the operation amount of the steering 63 is equal to or less than the predetermined operation amount, it is judged that the traveling state of the vehicle 1 is the predetermined direct advance state.

Meanwhile, as a result of the process of S14, when it is judged that the operation amount of the steering 63 is more than the predetermined operation amount (S14: No), the traveling state flag 73c is turned off (S16) to terminate the traveling state judgment.

Subsequently, referring to FIG. 9, judgment of the eccentric abrasion load will be described. FIG. 9 is a flowchart illustrating the judgment of the eccentric abrasion load. This process is executed repeatedly (for example, at an interval of 0.2 seconds) by the CPU 71 while power of the vehicle control apparatus 100 is input and in this process, it is judged whether the contact load of the wheel 2 is the eccentric abrasion load which may cause eccentric abrasion in the tire (tread) when the vehicle 1 travels with the negative camber being applied to the wheel 2.

The CPU 71 is associated with the judgment of the eccentric abrasion load, and first judges whether the stretching amount of each suspension device 14 is equal to or less than a predetermined stretching amount (S21). Further, in the process of S21, the stretching amount of each suspension device 14 is detected by the suspension stroke sensor device 83, and the detected stretching amount of each suspension device 14 is compared with a threshold which is previously stored in the ROM 72 to judge whether the current stretching amount of each suspension device 14 is equal to or less than the predetermined stretching amount.

As a result, when it is judged that the stretching amount of at least one suspension device 14 among the respective suspension devices 14 is more than the predetermined stretching amount (that is, the threshold stored in the ROM 72) (S21: No), it is judged that the contact load of the wheel 2 (left and right rear wheels 2RL and 2RR) corresponding to the suspension device 14 having the large stretching amount is more than a predetermined contact load and the contact load of the wheel 2 is the eccentric abrasion load, and thus the eccentric abrasion load flag 73d is turned on (S33) to terminate the eccentric load judgment.

Meanwhile, as a result of the process of S21, when it is judged that the stretching amount of each suspension device 14 is equal to or less than the predetermined stretching amount (S21: Yes), it is judged whether the anteroposterior G of the vehicle 1 is equal to or less than a predetermined acceleration (S22). As a result, when it is judged that the anteroposterior G of the vehicle 1 is more than the predetermined acceleration (S22: No), it is estimated that the contact loads of the left and right rear wheels 2RL and 2RR may be more than the predetermined contact load and it is judged that the contact load of the wheel 2 is the eccentric abrasion load, and thus the eccentric abrasion load flag 73d is turned on (S33) to terminate the eccentric abrasion load judgment.

Meanwhile, as a result of the process of S22, when it is judged that the anteroposterior G of the vehicle 1 is equal to or less than the predetermined acceleration (S22: Yes), it is judged whether the horizontal G of the vehicle 1 is equal to or less than the predetermined acceleration (S23). As a result, when it is judged that the horizontal G of the vehicle 1 is more than the predetermined acceleration (S23: No), it is estimated that the contact load of any one of the left and right rear wheels 2RL and 2RR is more than the predetermined contact load and it is judged that the contact load of the wheel 2 is the eccentric abrasion load, and thus the eccentric abrasion load flag 73d is turned on (S33) to terminate the eccentric abrasion load judgment.

Meanwhile, as a result of the process of S23, when it is judged that the horizontal G of the vehicle 1 is equal to or less than the predetermined acceleration (S23: Yes), it is judged whether the yaw rate of the vehicle 1 is equal to or less than a predetermined yaw rate (S24). As a result, when it is judged that the yaw rate of the vehicle 1 is more than the predetermined yaw rate (S24: No), it is estimated that the contact load of any one of the left and right rear wheels 2RL and 2RR is more than the predetermined contact load and it is judged that the contact load of the wheel 2 is the eccentric abrasion load, and thus the eccentric abrasion load flag 73d is turned on (S33) to terminate the eccentric abrasion load judgment.

Meanwhile, as a result of the process of S24, when it is judged that the yaw rate of the vehicle 1 is equal to or less than the predetermined yaw rate (S24: Yes), it is judged whether the roll angle of the vehicle 1 is equal to or less than a predetermined roll angle (S25). As a result, when it is judged that the roll angle of the vehicle 1 is more than the predetermined roll angle (S25: No), it is estimated that the contact loads of the left and right rear wheels 2RL and 2RR may be more than the predetermined contact load and it is judged that the contact load of the wheel 2 is the eccentric abrasion load, and thus the eccentric abrasion load flag 73d is turned on (S33) to terminate the eccentric abrasion load judgment.

Meanwhile, as a result of the process of S25, when it is judged that the roll angle of the vehicle 1 is equal to or less than the predetermined roll angle (S25: Yes), it is judged whether the contact loads of the left and right rear wheels 2RL and 2RR are equal to or less than the predetermined contact load (S26). Further, in the process of S26, the contact loads of the left and right rear wheels 2RL and 2RR detected by the contact load sensor device 84 are compared with the threshold which is previously stored in the ROM 72 to judge whether the current contact loads of the left and right rear wheels 2RL and 2RR are equal to or less than the predetermined contact load.

As a result, when it is judged that the contact load of at least one wheel 2 of the left and right rear wheels 2RL and 2RR is more than the predetermined contact load (S26: No), it is judged that the contact load of the wheel 2 is the eccentric abrasion load, and thus the eccentric abrasion load flag 73d is turned on (S33) to terminate the eccentric abrasion load judgment.

Meanwhile, as a result of the process of S26, when it is judged that the contact loads of the left and right rear wheels 2RL and 2RR are equal to or less than the predetermined load (S26: Yes), it is judged whether the damage margins of the tire side walls of the left and right rear wheels 2RL and 2RR are equal to or less than a predetermined damage margin (S27). Further, in the process of S27, the damage margins of the tire side walls of the left and right rear wheels 2RL and 2RR detected by the side wall damage margin sensor device 85 are compared with the threshold which is previously stored in the ROM 72 to judge whether the current damage margins of the tire wide walls of the left and right rear wheels 2RL and 2RR are equal to or less than the predetermined damage margin.

As a result, when it is judged that the damage margin of the tire side wall of at least one wheel 2 of the left and right rear wheels 2RL and 2RR is more than the predetermined damage margin (S27: No), it is estimated that the contact load of the wheel 2 having the large damage margin is more than the predetermined contact load and it is judged that the contact load of the wheel 2 is the eccentric abrasion load, and thus the eccentric abrasion load flag 73d is turned on (S33) to terminate the eccentric abrasion load judgment.

Meanwhile, as a result of the process of S27, when it is judged that the damage margins of the tire side walls of the left and right rear wheels 2RL and 2RR are equal to or less than the predetermined damage margin (S27: Yes), it is judged whether the operation amount (stepping amount) of the acceleration pedal 61 is equal to or less than the predetermined operation amount (S28). As a result, when it is judged that the operation amount of the acceleration pedal 61 is more than the predetermined operation amount (S28: No), it is estimated that the contact loads of the left and right rear wheels 2RL and 2RR are more than the predetermined contact load and it is judged that the contact load of the wheel 2 is the eccentric abrasion load, and thus the eccentric abrasion load flag 73d is turned on (S33) to terminate the eccentric abrasion load judgment.

Meanwhile, as a result of the process of S28, when it is judged that the operation amount of the acceleration pedal 61 is equal to or less than the predetermined operation amount (S28: Yes), it is judged whether the operation amount (steering angle) of the steering 63 is equal to or less than the predetermined operation amount (S30). As a result, when it is judged that the operation amount of the steering 63 is more than the predetermined operation amount (S30: No), it is estimated that the contact load of any one of the left and right rear wheels 2RL and 2RR is more than the predetermined contact load and it is judged that the contact load of the wheel 2 is the eccentric abrasion load, and thus the eccentric abrasion load flag 73d is turned on (S33) to terminate the eccentric abrasion load judgment.

Meanwhile, as a result of the process of S30, when it is judged that the operation amount of the steering 63 is equal to or less than the predetermined operation amount (S30: Yes), it is judged whether the operation velocity (steering angular velocity) of the steering 63 is equal to or less than the predetermined velocity (S31). As a result, when it is judged that the operation velocity of the steering 63 is more than the predetermined velocity (S31: No), it is estimated that the contact load of any one of the left and right rear wheels 2RL and 2RR is more than the predetermined contact load and it is judged that the contact load of the wheel 2 is the eccentric abrasion load, and thus the eccentric abrasion load flag 73d is turned on (S33) to terminate the eccentric abrasion load judgment.

Meanwhile, as a result of the process of S31, when it is judged that the operation velocity of the steering 63 is equal to or less than the predetermined velocity (S31: Yes), it is judged whether the operation acceleration (steering angular acceleration) of the steering 63 is equal to or less than the predetermined acceleration (S32). As a result, when it is judged that the operation acceleration of the steering 63 is more than the predetermined acceleration (S32: No), it is estimated that the contact load of any one of the left and right rear wheels 2RL and 2RR is more than the predetermined contact load and it is judged that the contact load of the wheel 2 is the eccentric abrasion load, and thus the eccentric abrasion load flag 73d is turned on (S33) to terminate the eccentric abrasion load judgment.

Meanwhile, as a result of the process of S32, when it is judged that the operation acceleration of the steering 63 is equal to or less than the predetermined acceleration (S32: Yes), the eccentric abrasion load flag 73d is turned off (S34) to terminate the eccentric abrasion load judgment.

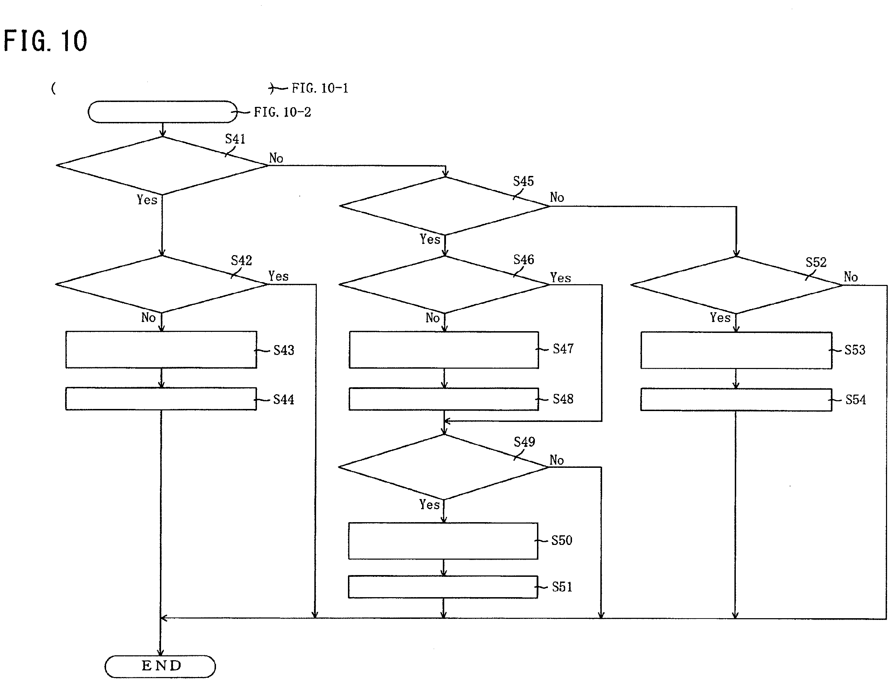

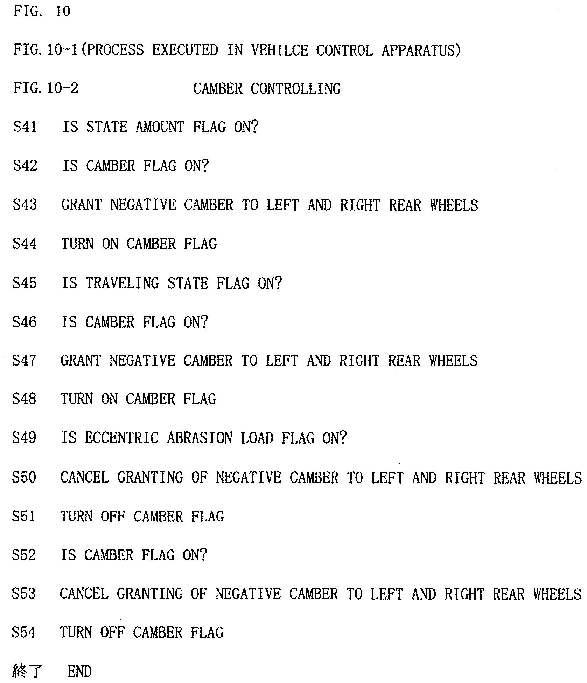

Subsequently, referring to FIG. 10, camber controlling will be described. FIG. 10 is a flowchart illustrating the camber controlling. This process is executed repeatedly (for example, at an interval of 0.2 seconds) by the CPU 71 while power of the vehicle control apparatus 100 is input and in this process, the camber angle of each wheel 2 (left and right rear wheels 2RL and 2RR) is adjusted.

The CPU 71 is associated with the camber controlling, and first judges whether the state amount flag 73b is on (S41), and when it is judged that the state amount flag 73b is on (S41: Yes), it is judged whether the camber flag 73a is on (S42). As a result, when it is judged that the camber flag 73a is off (S42: No), the RL and RR motors 91RL and 91RR are operated to adjust the camber angle of each wheel 2 (left and right rear wheels 2RL and 2RR) to the second camber angle, and the negative camber is applied to each wheel 2 (S43) and the camber flag 73a is turned on (S44) to terminate the camber controlling.

As a result, when the state amount of the vehicle 1 satisfies the predetermined condition, that is, when at least one operation amount of the operation amounts of the respective pedals 61 and 62 and the operation amount of the steering 63 is equal to or more than the predetermined operation amount, and it is judged that there is a concern that the wheel 2 may be slipped when the vehicle 1 is accelerated, braked, or is turned with the camber angle of the wheel 2 being the first camber angle, the negative camber is applied to the wheel 2 to ensure traveling stability of the vehicle 1 by using camber thrust generated in the wheel 2.

Meanwhile, as a result of the process of S42, when it is judged that the camber flag 73a is on (S42: Yes), the camber angle of the wheel 2 has already been adjusted to the second camber angle, and thus the process of S43 and S44 is skipped and the camber controlling is terminated.

In this regard, as a result of the process of S41, when it is judged that the state amount flag 73b is off (S41: No), it is judged whether the traveling state flag 73c is on (S45), and when it is judged that the traveling state flag 73c is on (S45: Yes), it is judged whether the camber flag 73a is on (S46). As a result, when it is judged that the camber flag 73a is off (S46: No), the RL and RR motors 91RL and 91RR are operated to adjust the camber angle of each wheel 2 (left and right rear wheels 2RL and 2RR) to the second camber angle, and the negative camber is applied to each wheel 2 (S47) and the camber flag 73a is turned on (S48) to execute process of S49.

As a result, when the traveling state of the vehicle 1 is the predetermined direct advance state, that is, when the traveling velocity of the vehicle 1 is equal to or more than the predetermined velocity and the operation amount of the steering 63 is equal to or less than the predetermined operation amount, and the vehicle 1 directly advances at a comparatively high speed, the negative camber is applied to the wheel 2 to ensure direct-advance stability of the vehicle 1 by using horizontal rigidity of the vehicle 2.

Meanwhile, as a result of the process of S46, when it is judged that the camber flag 73a is on (S46: Yes), the camber angle of the wheel 2 has already been adjusted to the second camber angle, and thus the process of S47 and S48 is skipped and it is judged whether the eccentric abrasion load flag 73d is on (S49). As a result, when it is judged that the eccentric abrasion load flag 73d is on (S49: Yes), the RL and RR motors 91RL and 91RR are operated to adjust the camber angle of each wheel 2 (left and right rear wheels 2RL and 2RR) to the first camber angle, and the applying of the negative camber to each wheel 2 is cancelled (S50) and the camber flag 73a is turned off (S51) to terminate the camber controlling.

As a result, when the contact load of the wheel 2 is the eccentric abrasion load, that is, when the vehicle 1 travels with the negative camber being applied to the wheel 2, eccentric abrasion of the tire may be suppressed by cancelling the applying of the negative camber to the wheel 2 in the case where the eccentric abrasion is caused in the tire (tread).

Meanwhile, as a result of the process of S49, when it is judged that the eccentric abrasion load flag 73d is off (S49: No), it is judged that the contact load of the wheel 2 is not the eccentric abrasion load and the tire (tread) may not be eccentrically abraded even though the vehicle 1 travels with the negative camber being applied to the wheel 2, and thus the process of S50 and S51 is skipped and the camber controlling is terminated.

In this regard, as a result of the process of S45, when it is judged that the traveling state flag 73c is off (S45: No), it is judged whether the camber flag 73a is on (S52). As a result, when it is judged that the camber flag 73a is on (S52: Yes), the RL and RR motors 91RL and 91RR are operated to adjust the camber angle of each wheel 2 (left and right rear wheels 2RL and 2RR) to the first camber angle, and the applying of the negative camber to each wheel 2 is canceled (S53) and the camber flag 73a is turned off (S54) to terminate the camber controlling.

As a result, when the state amount of the vehicle 1 does not satisfy the predetermined condition and the traveling state of the vehicle 1 is not the predetermined direct-advance state, that is, when the traveling stability of the vehicle 1 needs not be preferentially ensured, the applying of the negative camber to the wheel 2 is cancelled to avoid an influence of the camber thrust and achieve fuel efficiency saving.

Meanwhile, as a result of the process of S52, when it is judged that the camber flag 73a is off (S52: No), the camber angle of the wheel 2 has already been adjusted to the first camber angle, and thus the process of S53 and S54 is skipped and the camber controlling is terminated.

In this way, by executing the camber controlling, when it is judged that the contact load of the wheel 2 is equal to or more than the predetermined contact load, the camber angle of the wheel 2 is adjusted to the first camber angle (a camber angle smaller than the second camber angle in absolute value) and the applying of the negative camber to the wheel 2 is cancelled, thereby suppressing the eccentric abrasion of the tire. That is, since the tire is more easily abraded as the contact load of the wheel 2 is larger, when the contact load of the wheel 2 is equal to or more than the predetermined contact load, the applying of the negative camber to the wheel 2 is cancelled, thereby suppressing the eccentric abrasion of the tire. As a result, a life-span of the tire may be improved. Further, by suppressing the eccentric abrasion of the tire, it is possible to prevent the contact surface of the tire from being uneven and ensure the traveling stability of the vehicle 1. Further, since the eccentric abrasion of the tire may be suppressed, it is possible to achieve the fuel efficiency saving.

Further, when it is judged that the state amount of the vehicle 1 satisfies the predetermined condition, the camber angle of the wheel 2 is adjusted to the second camber angle and the negative camber is applied to the wheel 2, and as a result, the traveling stability of the vehicle 1 may be ensured by using the camber thrust generated in the wheel 2. As such, when it is judged that the state amount of the vehicle 1 does not satisfy the predetermined condition and it is judged that the contact load of the wheel 2 is equal to or more than the predetermined contact load, the camber angle of the wheel 2 is adjusted to the first camber angle (the camber angle smaller than the second camber angle in absolute value) and the applying of the negative camber to the wheel 2 is cancelled, thereby suppressing the eccentric abrasion of the tire. Accordingly, it is possible to achieve both ensuring of the traveling stability and suppressing of the eccentric abrasion of the tire.

Further, when it is judged that the traveling state of the vehicle 1 is the predetermined direct-advance state, the camber angle of the wheel 2 is adjusted to the second camber angle and the negative camber is applied to the wheel 2, and as a result, the direct-advance stability of the vehicle 1 may be ensured by using the horizontal rigidity of the wheel 2. In addition, when it is judged that the traveling state of the vehicle 1 is the predetermined direct-advance state and it is judged that the contact load of the wheel 2 is equal to or more than the predetermined contact load, the camber angle of the wheel 2 is adjusted to the first camber angle (the camber angle smaller than the second camber angle in absolute value) and the applying of the negative camber to the wheel 2 is cancelled, thereby suppressing the eccentric abrasion of the tire. Accordingly, it is possible to achieve both ensuring of the direct-advance stability and suppressing of the eccentric abrasion of the tire.

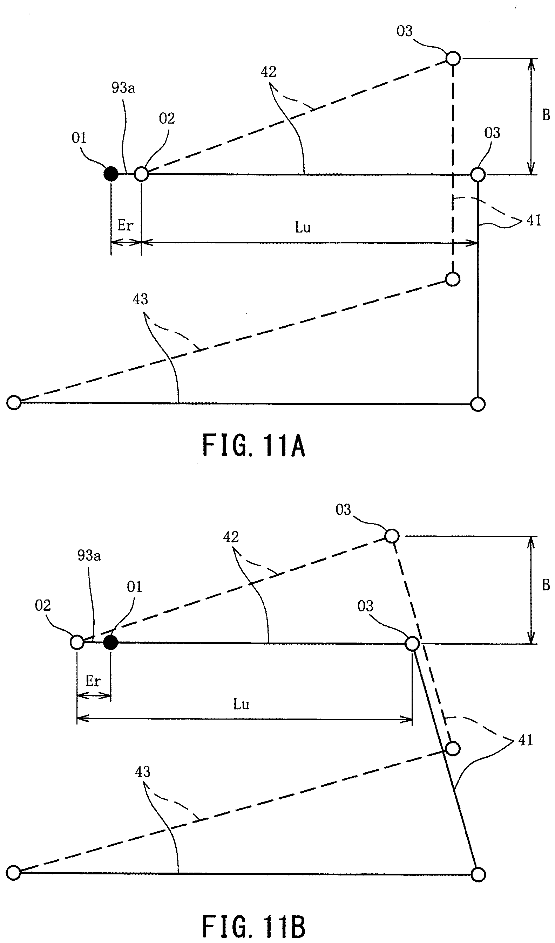

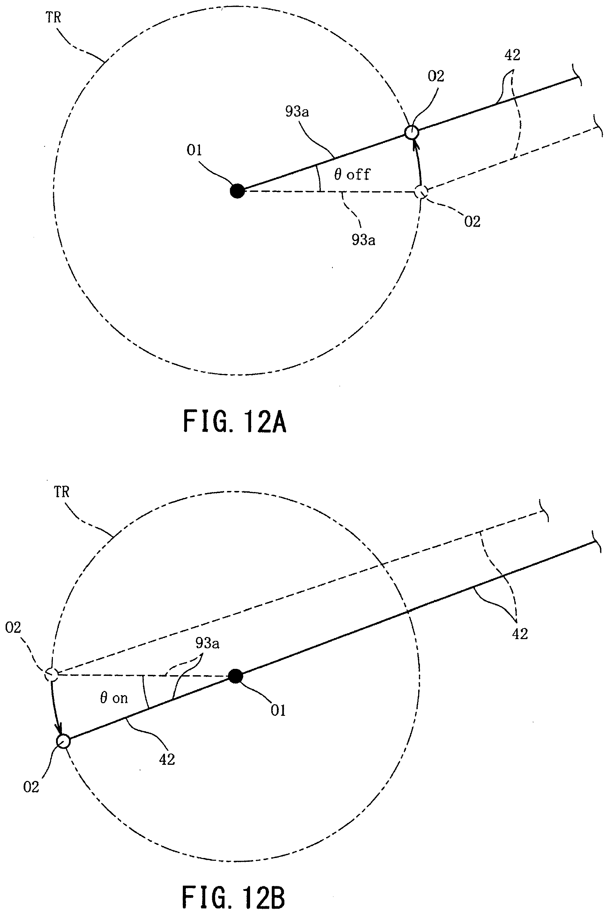

Subsequently, referring to FIGS. 11 and 12, a state change of the camber angle adjusting device 45 with respect to the vertical movement of the carrier member 41 (that is, stretching of the suspension device 14) will be described. Further, in FIGS. 11 and 12, a case in which the carrier member 41 is displaced in a bound direction, and as a result, the suspension device 14 is contracted is described, but even in a case in which the carrier member 41 is displaced in a rebound direction, and as a result, the suspension device 14 is stretched, a description thereof will be omitted similarly as the case in which the suspension device 14 is contracted in terms of a way of thinking.

FIG. 11(a) is a mimetic diagram mimetically illustrating the suspension device 14 in the first state and FIG. 11(b) is a mimetic diagram mimetically illustrating the suspension device 14 in the second state. Further, in FIG. 11, a state before the suspension device 14 is contracted (that is, a general traveling state in which external force other than a weight of the vehicle 1 does not work) is expressed by a solid line and a state in which the suspension device 14 is contracted (for example, a state in which the displacement to move the carrier member 41 in the bound direction by passing through the uneven lane, and the like is input into the suspension device 14) is expressed by a dotted line.

Further, FIGS. 12(a) and 12(b) are partially enlarged diagrams of FIGS. 11(a) and 11(b), respectively. However, in FIGS. 12(a) and 12(b), a state (that is, a state before compensation) corresponding to FIGS. 11(a) and 11(b) in which the suspension device 14 is contracted is expressed by the dotted line and a state after compensation by compensation process to be described below, from the above state is expressed by the solid line.

As illustrated in FIG. 11(a), in the first state (the state in which the camber angles of the left and right rear wheels 2RL and 2RR are adjusted to the first camber angle (= 0°), see FIG. 4(a)), the axis O1 of the wheel member 93a, the axis O2 serving as a connection shaft of the crank pin 93b and the upper arm 42, and the axis O3 serving as a connection shaft of the upper arm 42 and the carrier member 41 are positioned on the straight line in parallel in the order of the axis O1, the axis O2, and the axis O3 in a direction (a direction from the left to the right of FIG. 11(a)) toward the vehicle body BF from the wheel 2.

Therefore, as described above, in the first state, since the straight line connecting the axis O3 and the axis O2 is vertical to the tangent line on the axis O2 of the rotation trajectory TR (see FIG. 3(b)) of the axis O2, for example, although external force works on the wheel 2 from the road surface and the force is thus applied from the upper arm 42 to the wheel member 93a, the force component that rotates the wheel member 93a is not generated and the rotation of the wheel member 93a is restricted. Therefore, although the driving force of the RL and RR motors 91RL and 91RR is cancelled, the camber angle of the wheel 2 may be mechanically kept to the first camber angle. As a result, the consumption energy of the RL and RR motors 91RL and 91RR required to keep the camber angle of the wheel 2 to the predetermined angle may be reduced.

In this case, when the displacement to move the carrier member 41 in the bound direction (the upper side of FIG. 11(a)) is input into the suspension device 14, the upper arm 42 is rotated around the axis O2 as the rotation center with the displacement of the carrier member 41, as expressed by the dotted line in FIG. 11(a). As a result, as expressed by the dotted line in FIG. 12(a), the axis O1, the axis O2, and the axis O3 are not parallel to each other on the straight line, and a straight line connecting the axis O1 and the axis O2 and a straight line connecting the axis O3 and the axis O2 form a predetermined angle.

Therefore, the straight line connecting the axis O3 and the axis O2 and the tangent line of the rotation trajectory TR on the axis O2 does not form a right angle. As a result, since force is applied from the upper arm 42 to the wheel member 93a, the force component that rotates the wheel member 93a is generated and the wheel member 93a rotates, and as a result, the camber angle of the wheel 2 is changed from the first camber angle.

Accordingly, in the embodiment, when the suspension device 14 is contracted from the first state, as illustrated in FIG. 12(a), compensation process of rotating the wheel member 93a at an angle θoff is executed by the camber angle adjusting device 45, and as a result, the respective axes are parallel to each other on the straight line in the order of the axis O1, the axis O2, and the axis O3. Therefore, although the force is applied from the upper arm 42 to the wheel member 93a, the camber angle of the wheel 2 is mechanically kept to the first camber angle by restricting the rotation of the wheel member 93a, thereby reducing the consumption energy of the RL and RR motors 91RL and 91RR.

Meanwhile, in the second state (the state in which the camber angles of the left and right rear wheels 2RL and 2RR are adjusted to the second camber angle (= -3°), see FIG. 4(b)), since the axis O1, the axis O2, and the axis O3 are positioned on the straight line in parallel, as illustrated in FIG. 11(b), the rotation of the wheel member 93a may be restricted and although the driving force of the RL and RR motors 91RL and 91RR is cancelled, the camber angle of the wheel 2 may be mechanically kept at the second camber angle, similarly as in the first state.

Even in this case, when the displacement to move the carrier member 41 in the bound direction (the upper side of FIG. 11(b)) is input into the suspension device 14, the upper arm 42 is rotated around the axis O2 as the rotation center, and the straight line connecting the axis O1 and the axis O2 and the straight line connecting the axis O3 and the axis O2 form the predetermined angle as expressed by the dotted line in FIG. 12(b), similarly as in the first state. As a result, the straight line connecting the axis O3 and the axis O2 and the tangent line on the axis O2 of the rotation trajectory TR do not form the right angle, and when the force is applied from the upper arm 42 to the wheel member 93a, the wheel member 93a is rotated, and as a result, the camber angle of the wheel 2 is changed from the second camber angle.

Accordingly, in the embodiment, when the suspension device 14 is contracted from the second state, compensation process of rotating the wheel member 93a at an angle θon is executed by the camber angle adjusting device 45, as illustrated in FIG. 12(b), and as a result, the respective axes are parallel to each other on the straight line in the order of the axis O2, the axis O1, and the axis O3. As a result, similarly as in the first state, the camber angle of the wheel 2 is enabled to be mechanically kept to the second camber angle by restricting the rotation of the wheel member 93a, thereby reducing the consumption energy of the RL and RR motors 91RL and 91RR.

Herein, the relationships between the stretching amount (suspension stroke) of the suspension device 14 and the compensation angles θoff and θon of the wheel member 93a will be described. As illustrated in FIGS. 11(a) and 11(b), the suspension stroke of the suspension device 14 is defined as a distance B and a distance between the axes O2 and O3 at both ends of the upper arm 42 is defined as a distance Lu. Further, as described above, the distance between the axis O1 and the axis O2 is defined as the distance Er.

Based on geometrical relationships among the distances B, Lu, and Er before and after the suspension device 14 is stretched as illustrated in FIGS. 11 and 12, a value (see FIG. 12(a)) of the compensation angle θoff in the first state may be approximate to tan - 1 (B/(Lu + Er)) and a value (see FIG. 12(b)) of the compensation angle θon in the second state may be approximate to tan - 1 (B/(Lu - Er)). Accordingly, since the distance Lu and the distance Er are previously stored in the RAM 72 as fixed values, the CPU 71 acquires the distance B which is the suspension stroke of the suspension device 14 from the suspension stroke sensor device 83 (see FIG. 5) to calculate the values of the angles θoff and θon based on the respective distances B, Lu, and Er.

Further, the compensation angle θon in the second state becomes a larger value than the compensation angle θoff in the first state from the aforementioned approximate equation (θoff < θon). Accordingly, when the first and second states are the same as each other in distance B which is the suspension stroke of the suspension device 14, the second state has a larger angle required for compensation than the first state.

In other words, even when the suspension device 14 is suspension-stroked as long as the same distance B, the angle formed by the straight line connecting the axis O3 and the axis O2, and the tangent line of the rotation trajectory TR on the axis O2 is smaller in the second state than in the first state (that is, away from the right angle), and therefore, although the same force is applied from the upper arm 42 to the wheel member 93a, the force component that rotates the wheel member 93a is increased, and as a result, the wheel member 93a is easily rotated.

Accordingly, the suspension stroke amount ('camber off threshold' and 'camber on threshold') of the suspension device 14 which may be allowed to restrict the rotation of the wheel member 93a by mechanical friction force is smaller in the second state than in the first state. That is, a value of the 'camber on threshold' in the second state is smaller than a value of the 'camber off threshold' in the first state.

Subsequently, referring to FIG. 13, judgment of the suspension stroke amount will be described. FIG. 13 is a flowchart illustrating the judgment of the suspension stroke amount. This process is executed repeatedly (for example, at an interval of 0.2 seconds) by the CPU 71 while the power of the vehicle control apparatus 100 is input and in this process, it is judged whether the stretching amount (suspension stroke) of the suspension device 14 suspending the left and right rear wheels 2RL and 2RR is more than the predetermined threshold.

The CPU 71 is associated with the judgment of the suspension stroke amount, and first writes n = 1 in a value n (not illustrated) provided in the RAM 73 (S61) and acquires a suspension stroke amount of an n-th wheel (S62). Further, in the suspension stroke amount judgment section, a first wheel (n = 1) is defined as the right rear wheel 2RR and a second wheel (n = 2) is defined as the left rear wheel 2RL, for convenience of description.

Subsequently, it is judged whether the camber flag 73a is on (S63). As a result, in process of S63, when it is judged that the camber flag 73a is on (S63: Yes), it is judged whether the suspension stroke amount of the suspension device 14 suspending the n-th wheel is equal to or more than the camber on threshold (S64), while in the process of S63, when it is judged that the camber flag 73a is not on (that is, off) (S63: No), it is judged whether the suspension stroke amount of the suspension device 14 suspending the n-th wheel is equal to or more than the camber off threshold (S65).

Herein, the 'camber off threshold' is a limit value of the stretching amount of the suspension device 14 capable of restricting the rotation of the wheel member 93a by the mechanical friction force with respect to the force from the upper arm 42 although the compensation process of the angle θoff by the camber angle adjusting device 45 is not executed when the suspension device 14 is stretched (see FIGS. 11(a) and 12(a)) in the first state in which the camber angle of the wheel 2 is set to the first camber angle (= 0°) .

Similarly, the 'camber on threshold' is a limit value of the stretching amount of the suspension device 14 capable of restricting the rotation of the wheel member 93a by the mechanical friction force with respect to the force from the upper arm 42 although the compensation process of the angle θon by the camber angle adjusting device 45 is not executed when the suspension device 14 is stretched (see FIGS. 11(b) and 12(b)) in the second state in which the camber angle of the wheel 2 is set to the second camber angle (= -3°) .

Therefore, in the first state or the second state, when the suspension stroke amount of the suspension device 14 does not reach the camber off threshold or the camber on threshold, the rotation of the wheel member 93a is restricted by the mechanical friction force although assumed maximum external force works on the wheel 2 (the wheel member 93a is not rotated although the rotational force by each of the motors 91RL and 91RR is cancelled).

Further, the camber off threshold and the camber on threshold are acquired as measurement values by a test (a test of acquiring a limited suspension stroke to rotate the wheel member 93a when the assumed maximum external force works on the wheel 2, in the first state and the second state) using an actual vehicle, and each of the measurement values is previously stored in the RAM 72. Further, as described above, the value of the 'camber on threshold' in the second state is smaller than the value of the 'camber off threshold' in the first state.

In process of S64, when it is judged that the suspension stroke amount of the n-th wheel is equal to or more than the camber on threshold (S64: Yes), the suspension stroke amount of the suspension device 14 in which the n-th wheel is in the second state is more than the limit value, and therefore, an n-th wheel on stroke flag (a flag corresponding to the n-th wheel of the first wheel on stroke flag 73e2 and the second wheel on stroke flag 73f2) is turned on (S66) and further, an n-th wheel off stroke flag (a flag corresponding to the n-th wheel of the first wheel off stroke flag 73e1 and the second wheel off stroke flag 73f1) is turned off (S67), and then the process of S71 is executed.

Meanwhile, in process of S65, when it is judged that the suspension stroke amount of the n-th wheel is equal to or more than the camber off threshold (S65: Yes), the suspension stroke amount of the suspension device 14 in which the n-th wheel is in the first state is more than the limit value, and therefore, the n-th wheel on stroke flag (the flag corresponding to the n-th wheel of the first wheel on stroke flag 73e2 and the second wheel on stroke flag 73f2) is turned off (S68) and further, the n-th wheel off stroke flag (the flag corresponding to the n-th wheel of the first wheel off stroke flag 73e1 and the second wheel off stroke flag 73f1) is turned on (S69), and then the process of S71 is executed.

Further, in the process of S64, when it is judged that the suspension stroke amount of the n-th wheel is not equal to or more than the camber on threshold (that is, does not reach the camber on threshold) (S64: No) and in the process of S65, when it is judged that the suspension stroke amount of the n-th wheel is not equal to or more than the camber off threshold (that is, does not reach the camber off threshold) (S65: No), suspension stroke amounts of both the suspension device 14 in which the n-th wheel is in the first state and the suspension device 14 in which the n-th wheel is in the second state do not also reach the limit value, and therefore the n-th wheel on stroke flag (the flag corresponding to the n-th wheel of the first wheel on stroke flag 73e2 and the second wheel on stroke flag 73f2) and the n-th wheel off stroke flag (the flag corresponding to the n-th wheel of the first wheel off stroke flag 73e1 and the second wheel off stroke flag 73f1) are both turned off (S70) and thereafter, the process of S71 is executed.

In the process of S71, it is judged whether the value n provided in the RAM 73 reaches 2 (S71). As a result, when the value n does not reach 2 (that is, n = 1) (S71: No), each process (S62 to S69) for the second wheel (left rear wheel 2RL) is not executed, and as a result, n = n + 1 is written in the value n (S72) and thereafter, the process of S62 is executed, in order to execute each process, even with respect to the second wheel. Meanwhile, when the value n reaches 2 (that is, n = 2) (S71: Yes), executing of each process (S62 to S69) for the first and second wheels (that is, the left and right rear wheels 2RL and 2RR) is completed, and as a result, the judgment of the suspension stroke amount is terminated.

Subsequently, referring to FIG. 14, the compensation process will be described. FIG. 14 is a flowchart illustrating the compensation process. This process is executed repeatedly (for example, at an interval of 0.2 seconds) by the CPU 71 while the power of the vehicle control apparatus 100 is input, and in this process, an angle of a wheel shaft (the axis 01 of the wheel member 93) in the respective wheels 2 (left and right rear wheels 2RL and 2RR) is compensated (that is, compensated to the first state or the second state) according to the suspension stroke amount of each suspension device 14.

The CPU 71 is associated with the compensation process, and first judges whether the camber angle is being set, that is, whether the negative camber is being applied to the left and right rear wheels 2RL and 2RR (the camber angle is changed from the first camber angle (0°) to the second camber angle (-3°)) or the applying of the negative camber to the left and right rear wheels 2RL and 2RR is being cancelled (the camber angle is changed from the second camber angle (-3°) to the first camber angle (0°)) (S80) .

As a result of the process of S80, when it is judged that the camber angle is being set (S80: Yes), although the angles of the wheel shafts (the axes O1 of the wheel member 93 in the left and right wheels 2RL and 2RR deviates from each other and the camber angle adjusting device 45 deviates from the first state or the second state, the camber angle adjusting device 45 returns to the first state or the second state by setting the camber angle as described above, and as a result, the compensation process needs not be performed by the process of S81. Accordingly, in this case (S80: Yes), the process of S81 is skipped and the compensation process is terminated.

Meanwhile, as a result of the process of S80, when it is judged that the camber angle is not being set (S80: No), the angles of the wheel shafts (the axes O1 of the wheel member 93) deviates from each other in the left and right wheels 2RL and 2RR and the camber angle adjusting device 45 deviates from the first state or the second state, and as a result, the process of S81 is executed in order to make the camber angle adjusting device 45 be in the first state or the second state.

That is, first, m = 1 is written in a value m (not illustrated) provided in the RAM 73 (S81). Further, in the compensation process, a first wheel (m = 1) is defined as the right rear wheel 2RR and a second wheel (m = 2) is defined as the left rear wheel 2RL, for convenience of description.

Subsequently, it is judged whether an m-th wheel on suspension stroke flag (a flag corresponding to the m-th wheel of the first wheel on stroke flag 73e2 and the second wheel on stroke flag 73f2) is on (S82). As a result, in the process of S82, when it is judged that the m-th wheel on suspension stroke flag is on (S82: Yes), a suspension stroke amount of the suspension device 14 in which the m-th wheel is in the second state (the state in which the negative camber is applied to the wheel 2) is equal to or more than the limit value (camber on threshold), and as a result, the compensation angle (the angle θon, see FIGS. 11(b) and 12(b)) of the camber angle adjusting device 45 is calculated at a side of suspending the m-th wheel (S83), and the wheel member 93a is rotated by the camber angle adjusting device 45 as large as the calculated angle θon, such that an angle of the wheel shaft (the axis O1 of the wheel member 93) in the m-th wheel is compensated (S84) and thereafter, process of S88 is executed.

As a result, in the camber angle adjusting device 45 suspending the m-th wheel, the respective axes may be parallel to each other (may be in the second state) on the straight line in the order of the axis O2, the axis O1, and the axis O3 (see FIG. 12(b), and thus although the force is applied from the upper arm 42 to the wheel member 93a, the rotation of the wheel member 93a is restricted and the camber angle of the wheel 2 may be mechanically kept to the first camber angle. Accordingly, since the rotational force of the RL and RR motors 91RL and 91RR may be cancelled, the consumption energy is reduced.

Meanwhile, in the process of S82, when it is judged that the m-th wheel on suspension stroke flag is not on (that is off) (S82: No), it is judged whether the m-th off suspension stroke flag (the flag corresponding to the m-th wheel of the first wheel off stroke flag 73e1 and the second wheel off stroke flag 73f1) is off (S85).

As a result, in the process of S82, when it is judged that the m-th wheel off suspension stroke flag is on (S85: Yes), a suspension stroke amount of the suspension device 14 in which the m-th wheel is in the first state (the state in which the negative camber applied to the wheel 2 is cancelled) is equal to or more than the limit value (camber off threshold), and as a result, the compensation angle (the angle θoff, see FIGS. 11(a) and 12(a)) of the camber angle adjusting device 45 is calculated at the side of suspending the m-th wheel (S86), and the wheel member 93a is rotated by the camber angle adjusting device 45 as large as the calculated angle θoff, such that the angle of the wheel shaft (the axis O1 of the wheel member 93) in the m-th wheel is compensated (S87) and thereafter, the process of S88 is executed.

As a result, in the camber angle adjusting device 45 suspending the m-th wheel, the respective axes may be parallel to each other (may be in the first state) on the straight line in the order of the axis O1, the axis O2, and the axis O3 ((see FIG. 12(a)), and thus although the force is applied from the upper arm 42 to the wheel member 93a, the rotation of the wheel member 93a is restricted and the camber angle of the wheel 2 may be mechanically kept to the first camber angle. Accordingly, since the rotational force of the RL and RR motors 91RL and 91RR may be cancelled, the consumption energy is reduced.

Herein, although the case of the first state and the case of the second state (see FIG. 11) are the same as each other in the suspension stroke amount of the suspension device 14, both cases are different in the suspension stroke amount of the suspension device 14 which may be allowed to restrict the rotation of the wheel member 93a by the mechanical friction force. As a result, the first state and the second state are based on the same threshold because, in the first state, each of the motors 91RL and 91RR is unnecessarily operated even in a range to restrict the rotation of the wheel member 93a by the mechanical friction force, and as a result, the consumption energy is increased, while in the second state, the compensation process by each of the motors 91RL and 91RR is not performed even over the range to restrict the rotation of the wheel member 93a by the mechanical friction force and the wheel member 93a is rotated by the force received from the upper arm 42, and as a result, the camber angle of the wheel 2 is changed.

In this regard, in the embodiment, different thresholds (camber off threshold and camber on threshold) are set in the respective cases of the first and second states, and it is judged whether the suspension stroke amount of each suspension device 14 is more than the limit value (each flag is turned on/off) based on the respective thresholds (see FIG. 13), and as a result, the camber angle of each wheel 2 may be compensated at a timing appropriate to each of the first and second states. As a result, an unnecessary operation of each of the motors 91RL and 91RR may be suppressed and the consumption energy may be efficiently reduced, and simultaneously, the rotation of the wheel member 93a by the force received from the upper arm 42 and the change in the camber angle of the wheel 2 may be efficiently suppressed.

In particular, in the embodiment, since the value of the threshold (camber on threshold) in the second state is set to the value smaller than the value of the threshold (camber off threshold) in the first state, the angle θon may be compensated by operating each of the motors 91RL and 91RR below the range to restrict the rotation of the wheel member 93a by the mechanical friction force and the rotation of the wheel member 93a by the force received from the upper arm 42 may be significantly restricted, in the second state in which the limit value of the suspension stroke amount of the suspension device 14 is low. As a result, the change in the camber angle may be significantly suppressed. Meanwhile, in the first state in which the limit value of the suspension stroke amount of the suspension device 14 is high, each of the motors 91RL and 91RR may be suppressed from being unnecessarily operated even in the range to restrict the rotation of the wheel member 93a by the mechanical friction force with respect to the force received from the upper arm 42, and the consumption energy may be reduced.

Further, in the process of each of S84 and S87, in the case of the compensation of the angle of the wheel shaft (the axis O1 of the wheel member 93) in each wheel 2, the wheel member 93a is rotated such that the respective shafts O1 to O3 are parallel to each other on the straight line, and as a result, although the force is applied from the upper arm 42 to the wheel member 93a, the wheel member 93a may be significantly restricted from being rotated. Accordingly, thereafter, even when the suspension stroke of the suspension device 14 is generated, re-execution of the compensation may be minimized. As a result, while the change in the camber angle of the wheel 2 is suppressed, the operation of each of the motors 91RL and 91RR may be efficiently suppressed and the consumption energy may be reduced.

In the process of S85, when it is judged that the m-th wheel off suspension stroke flag is not on (that is, off) (S85: No), the suspension stroke amount of the suspension device 14 suspending the m-th wheel has not yet reached the limit value (that is, the camber off threshold and camber on threshold) regardless of the first state or the second state, and the compensation of the camber angle by the camber angle adjusting device 45 of the m-th wheel need not be performed, and thus the process of S88 is executed without executing the process of each of S83, S84, S86, and S87.

In this way, when it is judged that the value of the suspension stroke of the suspension device 14 does not reach the predetermined threshold (camber off threshold and camber on threshold) (that is, when the mechanical friction force is stronger than the force component to rotate the wheel member 93a in the force received from the upper arm 42 and the rotation of the wheel member 93a may be restricted by the mechanical friction force), the compensation of the camber angle (S83, S84, S86, and S87) by the camber angle adjusting device 45 is not performed, and as a result, the unnecessary operation of each of the motors 91RL and 91RR may be suppressed and the consumption energy may be reduced.

In the process of S88, it is judged whether the value m provided in the RAM 73 reaches 2 (S88). As a result, when the value m does not reach 2 (that is, m = 1) (S88: No), each process (S82 to S87) for the second wheel (left rear wheel 2RL) is not executed, and as a result, m = m + 1 is written in the value m (S89) and thereafter, the process of S82 is executed, in order to execute each process even with respect to the second wheel. Meanwhile, when the value m reaches 2 (that is, m = 2) (S88: Yes), executing of each of the processes S82 to S87 for the first and second wheels (that is, the left and right rear wheels 2RL and 2RR) is completed, and as a result, the compensation process is terminated.

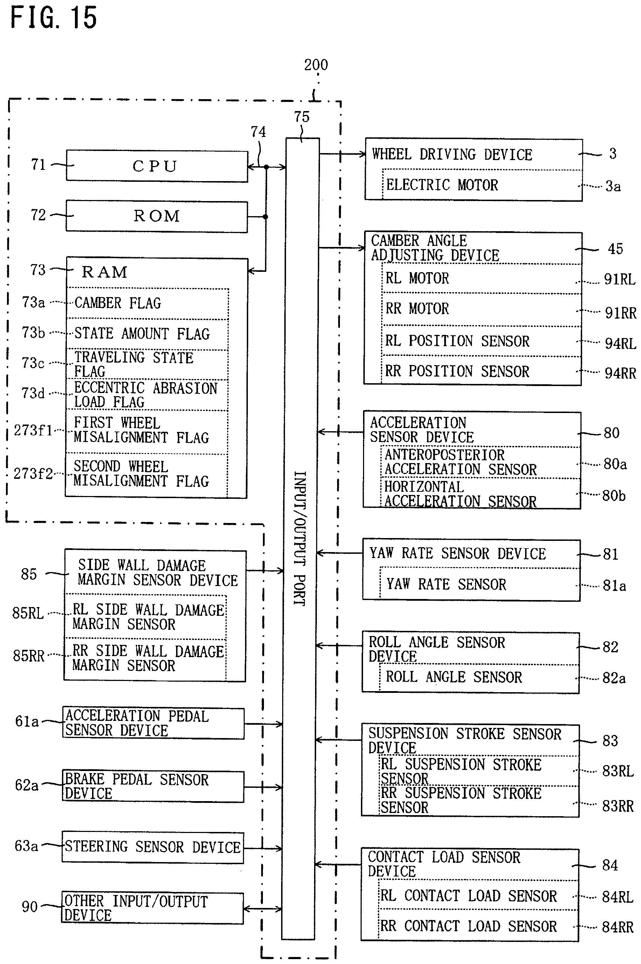

Subsequently, referring to FIGS. 15 to 18, a second embodiment will be described. Further, in the second embodiment, a case in which the vehicle 1 in the first embodiment is controlled by a vehicle control apparatus 200 will be described as an example. Further, the same reference numerals refer to the same elements as the first embodiment and a description thereof will be omitted.

FIG. 15 is a block diagram illustrating an electrical configuration of the vehicle control apparatus 200 in the second embodiment. A first wheel misalignment flag 273f1 and a second wheel misalignment flag 273f2 are provided in the RAM 73.

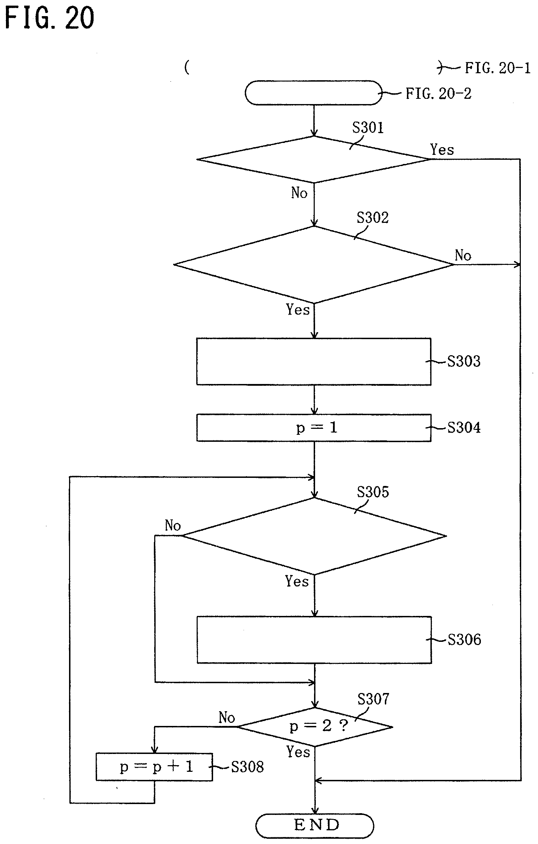

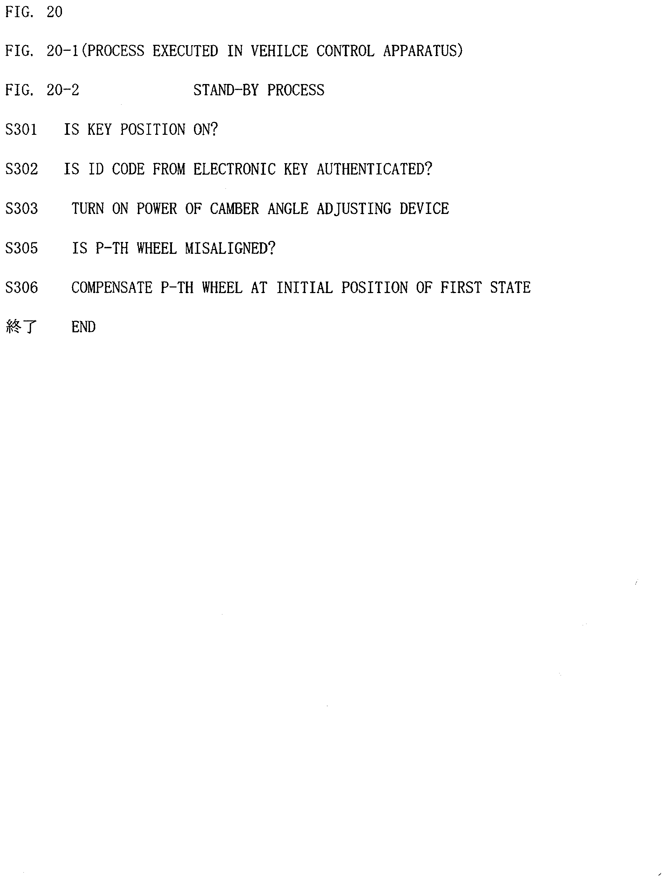

The first wheel misalignment flag 273f1 is a flag indicating whether when a rotational position (phase) of the wheel member 93a at the first wheel (in the embodiment, the right rear wheel 2RR) side is rotated (misaligned) by an operation of external force from a state adjusted to a first state or a second state, a rotation amount thereof (misalignment amount) is equal to or more than a predetermined threshold (that is, a 'wheel misalignment threshold (not illustrated)' stored in the ROM 72), and is switched to an on or off state at the time of executing judgment of the wheel misalignment amount to be described below (see FIG. 20).

The second wheel misalignment flag 273f2 is a flag corresponding to the first wheel misalignment flag 273f1, and since the state of the wheel member 93a or the used threshold as the reference is the same except that the left rear wheel 2RL is targeted, a description thereof will be omitted.

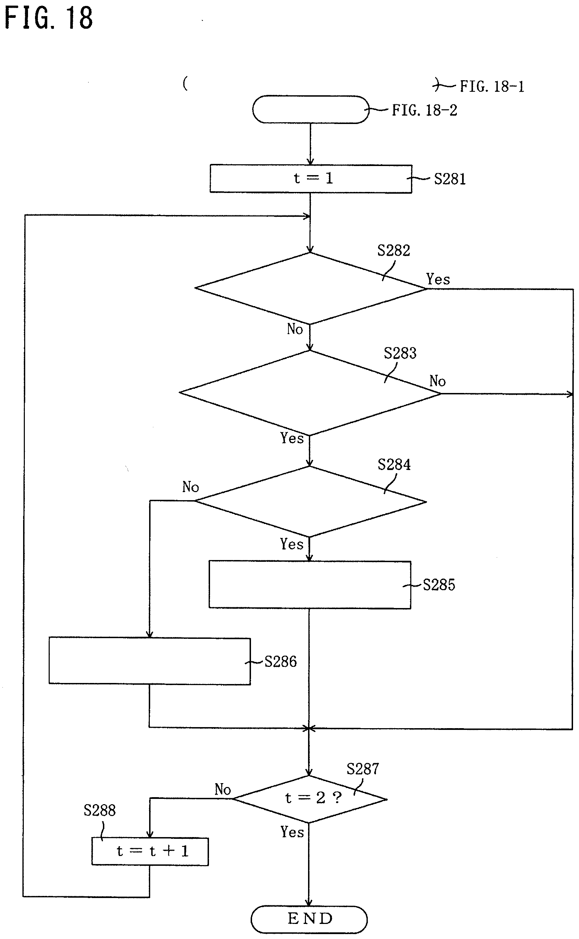

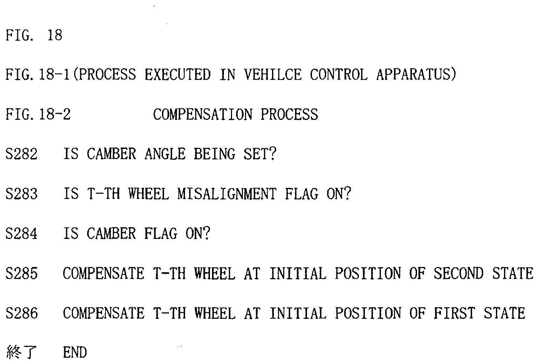

Further, both the wheel misalignment flags 273f1 and 273f2 are switched to the on state when the rotation amount (misalignment amount) of the corresponding wheel member 93a is equal to or more than the wheel misalignment threshold and switched to the off state when the rotation amount (misalignment amount) does not reach the wheel misalignment threshold. The CPU 71 compensates the operation angle (the phase of the crank member 93, see FIG. 3) of the corresponding camber angle adjusting device 45 in the compensation process illustrated in FIG. 18 when each of the wheel misalignment flags 273f1 and 273f2 are on.

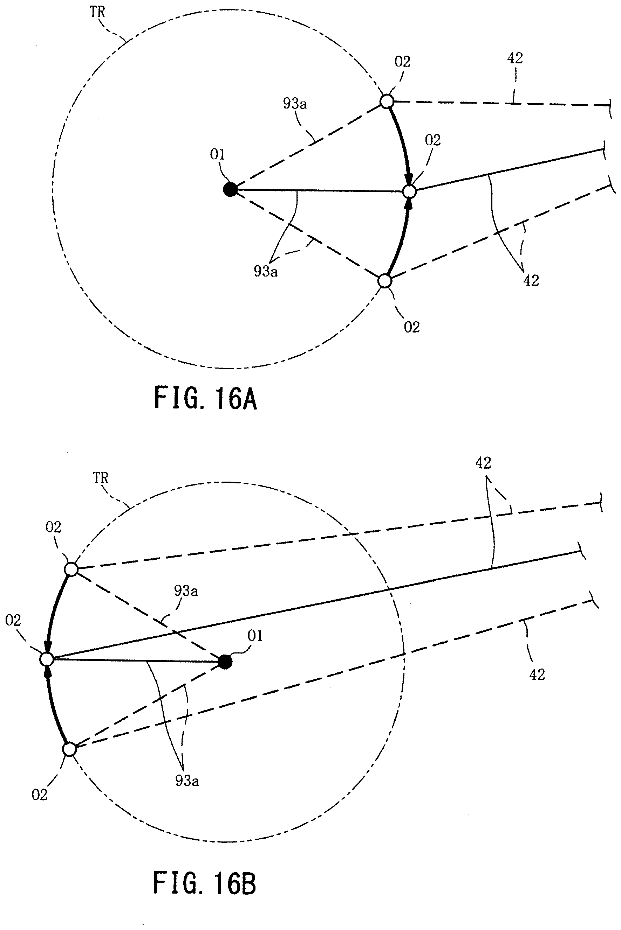

Subsequently, referring to FIG. 16, a state change of the camber angle adjusting device 45 with respect to the vertical movement of the carrier member 41 (that is, the stretching of the suspension device 14) will be described. Further, in FIG. 16, the case in which the carrier member 41 is displaced in the bound direction, and as a result, the suspension device 14 is contracted is described, but even in the case in which the carrier member 41 is displaced in the rebound direction, and as a result, the suspension device 14 is stretched, the description thereof will be omitted similarly as the case in which the suspension device 14 is contracted in terms of the way of thinking.

FIGS. 16(a) and 16(b) are partial enlarged diagrams of the suspension device 14 in the first state and the second state, respectively and correspond to FIGS. 11(a) and 11(b), respectively. However, in FIGS. 16(a) and 16(b), a state (that is, a state before the wheel member 93a is rotated (the rotational position is misaligned) by the operation of the external force) corresponding to FIGS. 11(a) and 11(b) in which the suspension device 14 is contracted is expressed by the solid line and a state after the wheel member 93a is rotated (the rotational position is misaligned) by the operation of the external force from the above state is expressed by the dotted line, respectively. That is, the states expressed by the dotted line in FIGS. 11(a) and 11(b) are expressed by the solid line in FIGS. 16(a) and 16(b).

From the state expressed by the solid line in FIG. 16(a), when external force in a direction to press the upper arm 42 onto the wheel member 93a works on the wheel member 93a from the upper arm 42, a force component in a direction to move the axis O2 to the lower side of FIG. 16(a) is generated and the wheel member 93a is rotated clockwise in FIG. 16(a) by the force component. Meanwhile, when external force in a direction to separate the upper arm 42 from the wheel member 93a works on the wheel member 93a from the upper arm 42, a force component in a direction to move the axis O2 to the upper side of FIG. 16(a) is generated and the wheel member 93a is rotated counterclockwise in FIG. 16(a) by the force component. As a result, as expressed by the dotted line in FIG. 16(a), the rotational position of the wheel member 93a is misaligned and the camber angle of the wheel 2 is changed from the first camber angle.

Therefore, in the embodiment, when the rotational position of the wheel member 93a is misaligned by the operation of the external force, compensation process of rotating the wheel member 93a in a reverse direction to the misalignment direction by the operation of the external force and returning the wheel member 93a to an initial position (that is, the position of the first state) is executed as expressed by an arrow in FIG. 16(a). As a result, the wheel member 93a may be placed at a position where the rotational restriction by the mechanical friction force is easily used and the consumption energy of the RL and RR motors 91RL and 91RR may be reduced. Further, since the rotation of the wheel member 93a at the initial position (the position of the first state) is performed in a direction in which the angle formed by the straight line connecting the axis O3 and the axis O2 and the tangent line on the axis O2 of the rotation trajectory TR of the axis O2 is close to the right angle particularly, in a state in which the suspension device 14 is not stretched (that is, the general traveling state in which external force other than the weight of the vehicle 1 does not work), driving force of the RL and RR motors 91RL and 91RR required for the rotation may be reduced and from this point of view, the consumption energy may be reduced.

Meanwhile, from the state expressed by the solid line in FIG. 16(b), when the external force in the direction to press the upper arm 42 onto the wheel member 93a works on the wheel member 93a from the upper arm 42, a force component in a direction to move the axis O2 to the lower side of FIG. 16(b) is generated and the wheel member 93a is rotated counterclockwise in FIG. 16(b) by the force component. Meanwhile, when the external force in a direction to separate the upper arm 42 from the wheel member 93a works on the wheel member 93a from the upper arm 42, a force component in a direction to move the axis O2 to the upper side of FIG. 16(b) is generated and the wheel member 93a is rotated clockwise in FIG. 16(b) by the force component. As a result, as expressed by the dotted line in FIG. 16(b), the rotational position of the wheel member 93a is misaligned and the camber angle of the wheel 2 is changed from the first camber angle.

In the embodiment, even in this case, similarly as in the first state, compensation process of rotating the wheel member 93a in a reverse direction to the misalignment direction by the operation of the external force and returning the wheel member 93a to the initial position (that is, the position of the second state) is executed as expressed by an arrow in FIG. 16(b), and the consumption energy is reduced while restricting the rotation of the wheel member 93a.

Further, a 'first rotational position' described in the claims corresponds to the initial position of the first state or the second state in the embodiment.

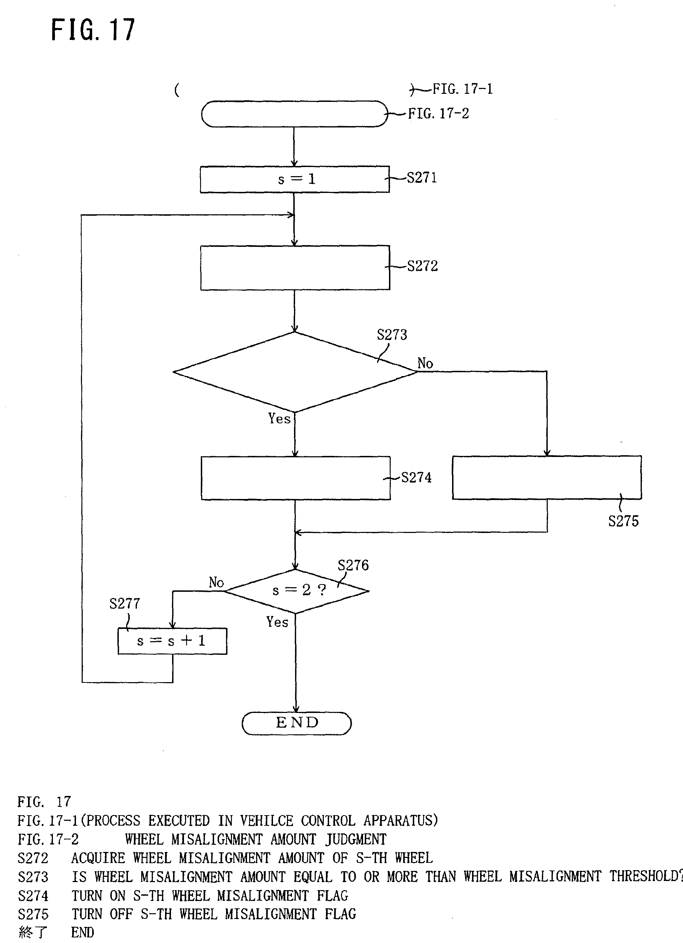

FIG. 17 is a flowchart illustrating judgment of the wheel misalignment amount. This process is executed repeatedly (for example, at an interval of 0.2 seconds) by the CPU 71 while the power of the vehicle control apparatus is input, and in this process, it is judged whether the rotation amount (misalignment amount) of the wheel member 93a by the operation of the external force is more than the predetermined threshold.

The CPU 71 is associated with the judgment of the wheel misalignment amount, and first writes s = 1 in a value s (not illustrated) provided in the RAM 73 (S271) and acquires a wheel misalignment amount of the wheel member 93a in the suspension device 14 suspending an s-th wheel (S272). Herein, the wheel misalignment amount is a rotation amount from the initial position when the wheel member 93a is rotated (misaligned) by the operation of the external force while the state in which the rotational position (phase) of the wheel member 93a is adjusted to the first state or the second state is set as the initial position. Further, in the wheel misalignment amount judgment, a first wheel (s = 1) is defined as the right rear wheel 2RR and a second wheel (s = 2) is defined as the left rear wheel 2RL, for convenience of description.

Subsequently, it is judged whether the wheel misalignment amount of the wheel member 93a in the suspension device 14 suspending the s-th wheel is equal to or more than a wheel misalignment threshold (S273). Herein, the 'wheel misalignment threshold' is a limit value of the wheel misalignment amount of the wheel member 93a to restrict the rotation of the wheel member 93a by the mechanical friction force when predetermined intensity of external force (reference external force) is input from the upper arm 42 with respect to the wheel member 93a, in a state in which the suspension device 14 is not suspension-stroked (that is, the general traveling state in which external force other than the weight of the vehicle 1 does not work).

Therefore, when the wheel misalignment amount of the wheel member 93a does not reach the wheel misalignment threshold, although the reference external force works on the wheel 2, the rotation of the wheel member 93a is restricted by the mechanical friction force (although the rotational force by each of the motors 91RL and 91RR is cancelled, the wheel member 93a is not rotated). Further, the wheel misalignment threshold is acquired as a measurement value by a test (a test of acquiring a wheel misalignment amount of a rotation limit of the wheel member 93a when the reference external force works on the wheel 2) using the actual vehicle, and is previously stored in the ROM 72.

In process of S273, when it is judged that the wheel misalignment amount of the s-th wheel is equal to or more than the wheel misalignment threshold (S273: Yes), the wheel misalignment amount of the wheel member 93a in the suspension device 14 suspending the s-th wheel is more than the limit value, and as a result, an s-th wheel misalignment flag (a flag corresponding to the s-th wheel of the first wheel misalignment flag 273f1 and the second wheel misalignment flag 273f2) is turned on (S274) and process of S276 is executed.

Meanwhile, in the process of S273, when it is judged that the wheel misalignment amount of the s-th wheel is not equal to or more than the wheel misalignment threshold (that is, does not reach the wheel misalignment threshold) (S273: No), the wheel misalignment amount of the wheel member 93a in the suspension device 14 suspending the s-th wheel does not reach the limit value, and as a result, the s-th wheel misalignment flag (the flag corresponding to the s-th wheel of the first wheel misalignment flag 273f1 and the second wheel misalignment flag 273f2) is turned off (S275) and the process of S276 is executed.

In the process of S276, it is judged whether the value s provided in the RAM 73 reaches 2 (S276). As a result, when the value s does not reach 2 (that is, s = 1) (S276: No), each of the processes (S272 to S275) for the second wheel (left rear wheel 2RL) is not executed, and as a result, s = s + 1 is written in the value s (S277) and thereafter, the process of S272 is executed, in order to execute each process even with respect to the second wheel. Meanwhile, when the value s reaches 2 (that is, s = 2) (S276: Yes), executing of each process (S272 to S275) for the first and second wheels (that is, the left and right rear wheels 2RL and 2RR) is completed, and as a result, the judgment of the wheel misalignment amount is terminated.

FIG. 18 is a flowchart illustrating the compensation process. This process is executed repeatedly (for example, at an interval of 0.2 seconds) by the CPU 71 while the power of the vehicle control apparatus 200 is input, and in this process, the angle of the wheel shaft (the axis O1 of the wheel member 93) in the respective wheels 2 (left and right rear wheels 2RL and 2RR) is compensated according to the wheel misalignment amount of the wheel member 93a in each suspension device 14.

The CPU 71 is associated with the compensation process, and first writes t = 1 in a value t (not illustrated) provided in the RAM 73 (S281). Further, in the compensation process, a first wheel (t = 1) is defined as the right rear wheel 2RR and a second wheel (t = 2) is defined as the left rear wheel 2RL, for convenience of description.

After the process of S281, it is judged whether the camber angle is being set (S282) . That is, in order to apply the negative camber to the left and right rear wheels 2RL and 2RR (change the camber angle from the first camber angle (0°) to the second camber angle (-3°)) or contrary to this, cancel the applying of the negative camber to the left and right rear wheels 2RL and 2RR (change the camber angle from the second camber angle (-3°) to the first camber angle (0°)), each of the motors 91RL and 91RR of the camber angle adjusting device 45 is rotated to judge whether the wheel member 93a is rotated by the driving force (S282).

As a result of the process of S282, when it is judged that the camber angle is not being set (S282: No), a setting operation of setting the camber angles of the left and right rear wheels 2RL and 2RR to the first camber angle or the second camber angle ends and the wheel member 93a has already stopped (that is, set to the first state or the second state), and therefore subsequently, it is judged whether a t-th wheel misalignment flag (a flag corresponding to a t-th wheel of the first wheel misalignment flag 273f1 and the second wheel misalignment flag 273f2) is on (S283).

As the result of the process of S283, when it is judged that the t-th wheel misalignment flag is on (S283: Yes), the wheel member 93a is rotated (the rotational position is misaligned) by the operation of the external force and the rotational position of the wheel member 93a needs to be compensated. Therefore, in this case (S283: Yes), in order to determine whether to compensate the wheel member 93a to the first state or the second state (see FIG. 16), it is judged whether the camber flag 73a is on (S284).

As a result of the process of S284, when it is judged that the camber flag 73a is on (S284; Yes), before the wheel member 93a is rotated (misalignment of the rotational position) by the operation of the external force, the camber angle of the wheel 2 is adjusted to the second camber angle and the wheel member 93a is in the second state, and as a result, the wheel member 93a corresponding to the t-th wheel is compensated to the initial position (that is, the position of the second state) as expressed by the arrow in FIG. 16(b) (S285) to execute process of S287.

Meanwhile, as the result of the process of S284, when it is judged that the camber flag 73a is not on, that is, off (S284; No), before the wheel member 93a is rotated (misalignment of the rotational position) by the operation of the external force, the camber angle of the wheel 2 is adjusted to the first camber angle and the wheel member 93a is in the first state, and as a result, the wheel member 93a corresponding to the t-th wheel is compensated to the initial position (that is, the position of the first state) as expressed by the arrow in FIG. 16(a) (S286) to execute the process of S287.

As a result, the wheel member 93a may be positioned (returned) to the initial position (that is, the position of the first state or the second state) where the rotation is easily restricted by the mechanical friction force. That is, since the rotational position of the wheel member 93a is returned to the initial position to use the rotation restriction by the mechanical friction force again, the driving force of the RL and RR motors 91RL and 91RR may be cancelled, and as a result, the consumption energy may be reduced.

Further, in this way since the rotation of the wheel member 93a at the initial position (the position of the first state or the second state) is performed in a direction in which the angle formed by the straight line connecting the axis O3 and the axis O2 and the tangent line on the axis O2 of the rotation trajectory TR of the axis O2 is close to the right angle particularly, in the state in which the suspension device 14 is not stretched (that is, the general traveling state in which external force other than the weight of the vehicle 1 does not work), the driving force of the RL and RR motors 91RL and 91RR required for the rotation may be reduced and even from this regard, the consumption energy may be reduced.

Further, as the compensation method in this case, the following method is also considered. That is, even by compensation which follows the displacement of the upper arm 42 (rotation around the axis O2 as the rotation center) accompanied by the vertical movement of the carrier member 41 and rotates the wheel member 93a to position the axis O1 on the straight line connecting the axis O2 and the axis O3, the rotation of the wheel member 93a may be restricted by the mechanical friction force. However, in this compensation method, since the wheel member 93a needs to be rotated with the displacement of the upper arm 42, high responsiveness is required to drive the RL and RR motors 91RL and 91RR and a driving time is lengthened, thereby increasing the consumption energy.

In this regard, in the embodiment, since the rotation of the wheel member 93a need not follow the displacement of the upper arm 42, while decreasing the request for the responsiveness to the driving of the RL and RR motors 91RL and 91RR and the driving time may be shortened, thereby reducing the consumption energy as much.

Herein, from the state in which the axis O1 is positioned on the straight line connecting the axis O2 and the axis O3, when the wheel member 93a is rotated (the rotational position is misaligned) by the operation of the external force, and the axis O1 is not positioned on the straight line connecting the axis O2 and the axis O3 (see FIG. 16), the straight line connecting the axis O2 and the axis O3, and the tangent line on the axis O2 of the rotation trajectory TR of the axis O2 do not form the right angle, but when the wheel misalignment amount of the wheel member 93a is comparatively small, a variation in the angle formed by the straight line connecting the axis O2 and the axis O3, and the tangent line on the axis O2 of the rotation trajectory TR of the axis O2 is comparatively small, and as a result, even the force component to rotate the wheel member 93a in force increased from the upper arm 42 to the wheel member 93a becomes also comparatively smaller. As a result, the mechanical friction force is stronger than the force component to rotate the wheel member 93a and the rotation of the wheel member 93a may be kept in a restriction state (a state to be resistant to the external force). Therefore, even in this case, the RL motor 91RL or the RR motor 91RR is driven and the compensation of returning the rotational position of the wheel member 93a to the initial position is performed, and as a result, the RL motor 91RL or the RR motor 91RR is unnecessarily operated.

Accordingly, in the embodiment, when it is judged that the value of the wheel misalignment amount of the wheel member 93a by the operation of the external force is equal to or more than the wheel misalignment threshold (S284: Yes), the RL motor 91RL or the RR motor 91RR is driven and the compensation of returning the rotational position of the wheel member 93a to the initial position is performed (S285 or S286), and as a result, the unnecessary operation of the RL motor 91RL or the RR motor 91RR may be suppressed and the consumption energy may be reduced.

In process of S287, it is judged whether the value t provided in the RAM 73 reaches 2 (S287). As a result, when the value t does not reach 2 (that is, t = 1) (S287: No), each process (S282 to S286) for the second wheel (left rear wheel 2RL) is not executed, and as a result, t = t + 1 is written in the value t (S288) and thereafter, the process of S282 is executed, in order to execute each of the processes even with respect to the second wheel. Meanwhile, when the value t reaches 2 (that is, t = 2) (S287: Yes), executing of each of the processes 282 to S286 for the first and second wheels (that is, the left and right rear wheels 2RL and 2RR) is completed, and as a result, the compensation process is terminated.

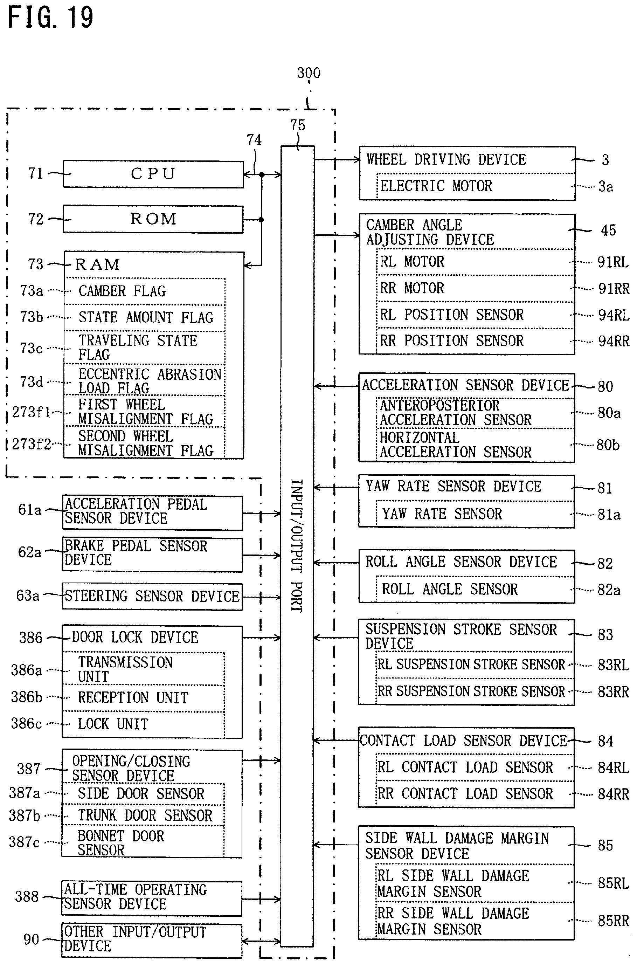

Subsequently, referring to FIGS. 19 and 20, a third embodiment will be described. Further, in the third embodiment, a case in which the vehicle 1 in the first embodiment is controlled by a vehicle control apparatus 300 will be described as an example. Further, the same reference numerals refer to the same elements as each embodiment described above and a description thereof will be omitted.

FIG. 19 is a block diagram illustrating an electrical configuration of the vehicle control apparatus 300 in the third embodiment. The vehicle control apparatus 300 includes a door lock device 386, an opening/closing sensor device 387, and an all-time operating sensor device 388.

The door lock device 386 is a device that locks and unlocks each door (not illustrated) such as a side door of the vehicle 1, and the like, based on combination of an ID code by wireless communication with an electronic key (corresponding to a 'terminal device' disclosed in claim 5 or 6, not illustrated) and includes a transmission unit 386a transmitting a request signal to the electronic key, a reception unit 386b receiving an ID code signal as an answer signal transmitted from the electronic key, a lock unit 386c locking and unlocking a door, and a control circuit controlling the units.

The request signal is intermittently transmitted from the transmission unit 386a of the door lock device 386, the electronic key enters within a reaching range of the request signal, and when the request signal is received, an ID code signal depending on its own ID code is transmitted from the electronic key. When the ID code signal is received in the reception unit 386b of the door lock device 386, the ID code is extracted from the ID code signal and combined with the ID code carried by the door lock device 386. As a result of the combination, when the ID code is matched, the electronic key is authenticated.

Herein, the transmission unit 386a of the door lock device 386 includes an out-vehicle antenna in which the reaching range of the request signal is outside the vehicle and an in-vehicle antenna in which the reaching range of the request signal is in the cabin (all not illustrated), and a used antenna is switched according to a state of the vehicle.

That is, when the door is locked while there is no owner of the electronic key in the cabin the vehicle 1, the request signal is transmitted from the out-vehicle antenna. In this case, when the electronic key is authenticated, an owner of the electronic key is present at a predetermined position outside the vehicle, and as a result, each door is unlocked by the lock unit 386c. The owner of the electronic key opens the side door to get in the vehicle by the unlocking.

When the owner of the electronic key gets in the vehicle and closes the door (alternatively, when the owner of the electronic key does not get in the vehicle and closes the door), the door lock device 386 switches the out-vehicle antenna to the in-vehicle antenna and intermittently transmits the request signal from the in-vehicle antenna at the time of detecting the closing of the door. In this case, when the electronic key is authenticated, it is judged that the electronic key is present in the cabin of the vehicle 1 and when a key position is operated to an on state, the wheel driving device 3 which stops is started and becomes an operable state.

When the owner of the electronic key gets out of the vehicle and closes the door (alternatively, when the owner of the electronic key does not get out of the vehicle and closes the door), the door lock device 386 switches the in -vehicle antenna to the out-vehicle antenna and intermittently transmits the request signal from the out-vehicle antenna at the time of detecting the closing of the door. In this case, when the electronic key is authenticated, it is judged that the electronic key is present outside the vehicle 1 and each door is locked.

The opening/closing sensor device 387 is a device for detecting an opening/closing state of each door of the vehicle 1 and outputting the opening/closing state to the CPU 71, and primarily includes a side door sensor 387a, a trunk sensor door sensor 387b, a bonnet sensor 387c, and an output circuit (not illustrated) process a detection result of each of the sensors 387a to 387c and outputting the processed detection result to the CPU 71. The CPU 71 may acquire the opening/closing state (whether the door is opened or closed) of each door based on the detection result of each of the sensors 387a to 387c.

The all-time operating sensor device 388 is a device for detecting whether the camber angle is changed in the wheel 2 and outputting the detection result to the CPU 71. Further, the all-time operating sensor device 388 will be described in the fourth and fifth embodiments.

Further, in the embodiment, when a start button commanding the start of the wheel driving device 3 is not pressed (that is, the key position is in an off state), the power is supplied to only the vehicle control apparatus 300, the door lock device 386, and the all-time operating sensor device 388 from a constant power supply and the power is not supplied to the rest of the components including the
camber angle adjusting device 45. Meanwhile, when the start button is pressed (that is, the key position is in the on state), the power is supplied even to the rest of the components (that is, all components).

Subsequently, referring to FIG. 20, stand-by process in the third embodiment will be described. FIG. 20 is a flowchart illustrating the stand-by process. This process is executed repeatedly (for example, at an interval of 0.2 seconds) by the CPU 71 while the power of the vehicle control apparatus 300 is input, and in this process, the camber angle of the wheel 2 is suppressed from being changed by external force accompanied by operations such as, for example, loading of luggage on the vehicle 1, person's getting in the vehicle 1, or opening/closing of each door when the power of the camber angle adjusting device 45 is turned off.

The CPU 71 is associated with the stand-by process, and judges whether the key position is in the on state (S301). Further, the case in which the key position is in the on state means the state in which the start button commanding the start of the wheel driving device 3 is pressed.

However, in the case where as the key position, three positions are provided, which include an off position in which the stop of the wheel driving device 3 is commanded and the key is enabled to be inserted and removed, an ACC position in which the wheel driving device 3 is not started but the power is supplied to predetermined components (for example, a car audio, and the like) from an ACC power supply, and an IG-ON position to command the start of the wheel driving device 3, it is judged that the key position is in the on state when the key position is at the IG-ON position.

In process of S301, when it is judged that the key position is in the on state (S301: Yes), as described above, the power is supplied to all of the components of the vehicle 1, and accordingly, the power is supplied even to the camber angle adjusting device 45, and therefore the process after S302 is skipped and the stand-by process is terminated. Further, in this case, as described above, the compensation of returning the wheel member 93a to the initial position is performed by the processes of FIGS. 7 to 10, FIG. 17, and FIG. 18.

Meanwhile, in the process of S301, when it is judged that the key position is not in the on state (S301: No), the start button is not pressed and the power is supplied to only the vehicle control apparatus 300, the door lock device 386, and the all-time operating sensor device 388 from the constant power supply and the power is not supplied to the rest of the components including the camber angle adjusting device 45, as described above.

Therefore, for example, even when the external force accompanied by the operation such as the loading of the luggage on the vehicle 1, the person's getting in the vehicle 1, or the opening/closing of each door works on the vehicle 1 and the wheel member 93a is thus misaligned, the compensation of returning the wheel member 93a to the initial position may not be performed. In this case, as described above, the vehicle 1 has a structure in which the axis O1 is positioned on the straight line connecting the axis O2 and the other connection shaft O3 (using a so-called top dead point of a crank mechanism) to keep the camber angle of the wheel 2 at a predetermined angle (see FIGS. 11 and 16). As a result, when the external force works on the vehicle 1, the wheel member 93a is misaligned from the first rotational position and when the misalignment is more than a predetermined amount, there is a concern in that the camber angle of the wheel 2 may be radically changed.

Therefore, in the process of S301, when it is judged that the key position is not in the on state (S301: No), subsequently, it is judged whether the ID code is authenticated from the electronic key (that is, whether the electronic key is authenticated) (S302) and it is checked whether there is a possibility that the external force works on the vehicle 1.

That is, when the key position is in the off state (when the start button is not pressed, S301: No), the case in which the ID code is authenticated from the electronic key (S302; Yes) means that the owner of the electronic key is present outside the vehicle 1 or the owner of the electronic key is present in the cabin of the vehicle 1 and there is a high possibility that the external force will work on the vehicle 1 with getting-in/off of the owner of the electronic key or other persons, loading/unloading of the luggage on/from the trunk or the cabin of the vehicle, or opening/closing of a trunk door or a bonnet.

Therefore, in this case (S302: Yes), the power of the camber angle adjusting device 45 is turned on (S303) to make the camber angle of the wheel 2 be adjustable and thereafter, the process after S304 is executed to execute the process of returning the wheel member 93a to the initial position (first rotational position).

Meanwhile, in the process of S302, when the ID code from the electronic key is not authenticated (S302: No), the owner of the electronic key is not present outside the vehicle 1 and the owner of the electronic key is not present even in the vehicle 1, and there is a low possibility that the external force will work on the vehicle 1 with the getting-in/off of the owner of the electronic key or other persons, the loading/unloading of the luggage on/from the trunk or the cabin of the vehicle, or the opening/closing of the trunk door or the bonnet. Therefore, in this case (S302: No), the process after S303 is skipped and the stand-by process is terminated.

In the process after S304, first, p = 1 is written in a value p (not illustrated) provided in the RAM 73 (S304) and thereafter, it is judged whether the wheel member 93a of the suspension device 14 suspending a p-th wheel is not misaligned (S305). Further, in the stand-by process, a first wheel (p = 1) is defined as the right rear wheel 2RR and a second wheel (p = 2) is defined as the left rear wheel 2RL, for convenience of description.

In the process of S305, when it is judged that the wheel member 93a of the p-th wheel is misaligned (S305: Yes), the external force works on the vehicle 1 and when this state is abandoned , there is a concern that the camber angle of the wheel 2 will be radically changed because the misalignment amount of the wheel member 93a is more than the predetermined amount, and as a result, the wheel member 93a corresponding to the p-th wheel is compensated to the initial position (that is, the first rotational position) of the first state (S306) and the process of S307 is executed.

Meanwhile, in the process of S305, when it is judged that the wheel member 93a of the p-th wheel is not misaligned (S305: No), the external force does not work on the vehicle 1 and there is no concern that the camber angle of the wheel 2 will be radically changed, and as a result, the process of S306 is skipped and the process of S307 is executed.

Further, in the vehicle control apparatus 300, when the start button is turned off (that is, the key position is operated to be in the off state) and the wheel driving device 3 stops, the camber angle of the wheel 2 is adjusted to the first state and thereafter, the power of the camber angle adjusting device 45 is turned off. As a result, since the vehicle 1 stops while the camber angle of the wheel 2 is 0°, a burden to the wheel 2 is alleviated even when a stop period is long to suppress a profile thereof from being deformed, as compared with a case in which the vehicle 1 stops while the negative camber of 3° is applied.

Further, in the process of S305, it is preferably that a condition for judging that the wheel member 93a is misaligned is a condition in which the wheel misalignment amount is equal to or more than the wheel misalignment threshold (see FIG. 17) described in the first embodiment. When the wheel misalignment amount does not reach the wheel misalignment threshold, the rotation of the wheel member 93a may be kept in the restriction state (the state to be resistant to the external force) by the mechanical friction force, and thus the unnecessary operation of the RL motor 91RL or the RR motor 91RR may be suppressed and the consumption energy may be reduced.

In the process of S307, it is judged whether the value n provided in the RAM 73 reaches 2 (S307). As a result, when the value p does not reach 2 (that is, p = 1) (S307: No), each of the processes (S305 and S306) for the second wheel (left rear wheel 2RL) is not executed, and as a result, p = p + 1 is written in the value p (S308) and thereafter, the process of S305 is executed, in order to execute each of the processes even with respect to the second wheel. Meanwhile, when the value p reaches 2 (that is, p = 2) (S307: Yes), executing of each process (S305 and S306) for the first and second wheels (that is, the left and right rear wheels 2RL and 2RR) is completed, and as a result, the stand-by process is terminated.

As described above, in the embodiment, when the owner of the electronic key approaches the vehicle 1 even while the power of the camber angle adjusting device 45 is turned off, the power of the camber angle adjusting device 45 is turned on and the compensation operation for compensating the misalignment of the wheel member 93a is executable, and as a result, although the external force works on the vehicle 1 and the wheel member 93a is misaligned from the first rotational position, the misalignment of the wheel member 93a is compensated and the wheel member 93a may be returned to the initial position. As a result, the misalignment of the wheel member 93a may be suppressed from being more than the predetermined amount and the camber angle of the wheel 2 may be suppressed from being radically changed.

Further, in this way, at the time when the ID code from the electronic key is authenticated, the power of the camber angle adjusting device 45 is turned on and the compensation operation for compensating the misalignment of the wheel member 93a is executable, and as a result, the compensation operation may be executable in advance before the external force works on the vehicle 1 (for example, the luggage is loaded on the trunk of the vehicle 1). Accordingly, the misalignment of the wheel member 93a may be more significantly suppressed from being more than the predetermined amount and the camber angle of the wheel 2 may be more significantly suppressed from being radically changed.

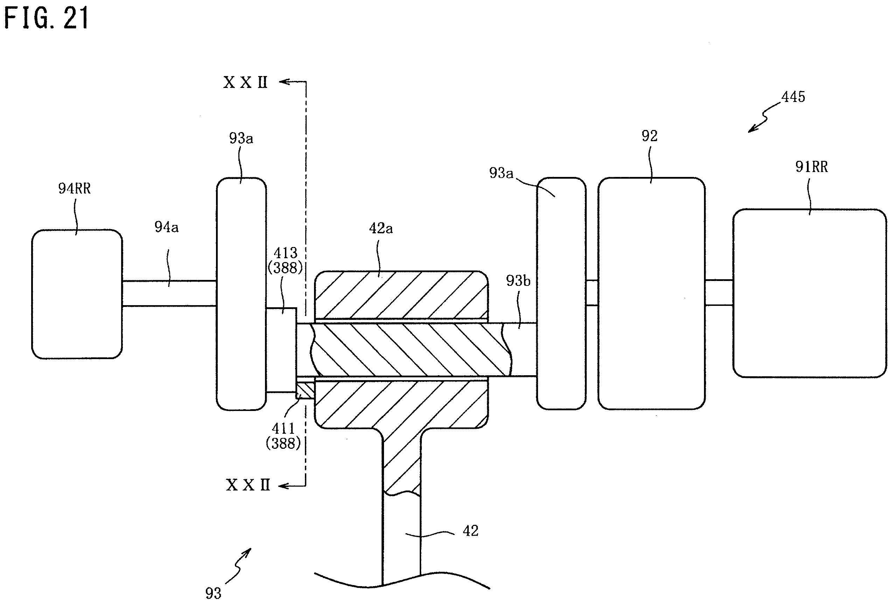

Subsequently, referring to FIGS. 21 to 24, a fourth embodiment will be described. Further, in the fourth embodiment, a case in which the vehicle 1 in the first embodiment is controlled by a vehicle control apparatus 300 will be described as an example. Further, the same reference numerals refer to the same elements as each embodiment described above and a description thereof will be omitted.

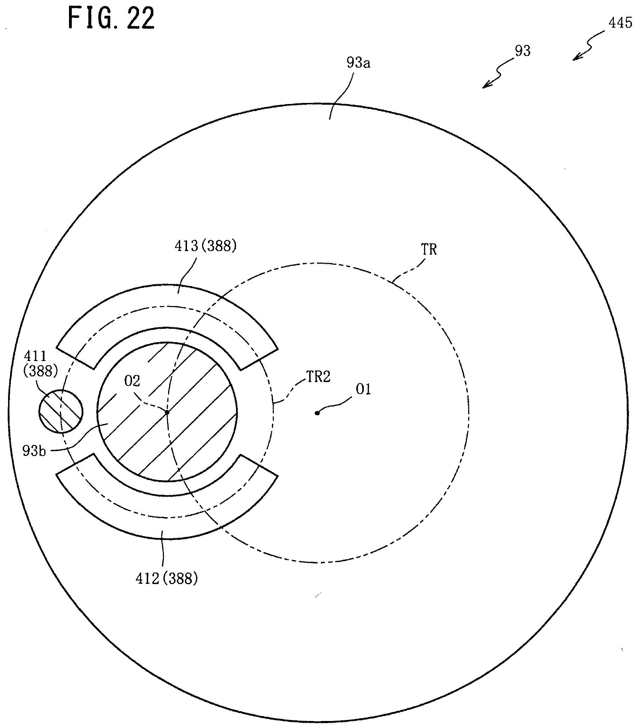

FIG. 21 is a top mimetic diagram of a camber angle adjusting device 445 in the fourth embodiment. Further, FIG. 22 is a cross-sectional mimetic diagram of the camber angle adjusting device 445 taken along line XXII-XXII of FIG. 21. Further, FIG. 21 illustrates a partial cross-sectional state of some components. In addition, the state illustrated in FIG. 22 corresponds to the first state.

Herein, since the camber angle adjusting device 445 is the same as the camber angle adjusting device 45 in the first embodiment in configurations except that the camber angle adjusting device 445 includes the all-time operating sensor device 388, a description thereof will be omitted.

The all-time operating sensor device 388 is a sensor device for detecting whether the wheel member 93a is rotated (misaligned) from the state, in which the rotational position (phase) of the wheel member 93a is adjusted to the first state or the second state, by the predetermined amount, and is configured by a mechanical sensor device to be capable of executing the detection even when the power of the camber angle adjusting device 45 is turned off.

As illustrated in FIGS. 21 and 22, the all-time operating sensor device 388 includes an arm-side terminal 411 and wheel-side terminals 412 and 413. The arm-side terminal 411 is a cross-sectional circular terminal and protrudes on the side of the connection portion 42a of the upper arm 42. Therefore, when the connection portion 42a of the upper arm 42 is rotated around the axis O2 of the crank pin 93b with the rotation of the wheel member 93a, the arm-side terminal 411 is moved on the rotation trajectory TR2 around the axis O2.

The wheel-side terminals 412 and 413 are terminals in which shapes from the view of the axes O1 and O2 are formed by segmenting an annular part (two sites which are opposite to each other by sandwiching the center shaft O2) around the center shaft O2, and protrude on the side of the wheel member 93a. The wheel-side terminals 412 and 413 are installed on the rotation trajectory TR2 of the arm-side terminal 411 and formed at a protruding height capable of contacting the arm-side terminal 411.

Accordingly, when the connection portion 42a of the upper arm 42 is rotated around the center shaft O2 of the crank pin 93b with the rotation of the wheel member 93a, three types of states are formed, which include a contact state in which the arm-side terminal 411 contacts the wheel-side terminal 412, a contact state in which the arm-side terminal 411 contacts the wheel-side terminal 413, and a non-contact state in which the arm-side terminal 411 does not contact any one of the wheel-side terminals 412 and 413.

Herein, the state illustrated in FIG. 22 corresponds to the first state (the state in which the camber angle is adjusted to 0°, see FIG. 4(a)) and in the first state, the respective terminals 411 to 413 are in the non-contact state. When the wheel member 93a is rotated in one direction (for example, clockwise in FIG. 22) around the axis O1 from the first state, the arm-side terminal 411 contacts the wheel-side terminal 412, while when the wheel member 93a is rotated in the other direction (counterclockwise in FIG. 22), the arm-side terminal 411 contacts the wheel-side terminal 413. In the embodiment, when the camber angle of the wheel 2 is -0.5°, end positions (that is, a range segmenting a part from an annular shape) of the wheel-side terminals 412 and 413 are set such that the arm-side terminal 411 contacts the wheel-side terminals 412 and 413.

Further, in the embodiment, even in the second state (the state in which the camber angle is adjusted to -3°, see FIG. 4(b)), the respective terminals 411 to 413 are in the non-contact state, and when the wheel member 93a is rotated in one direction or the other direction around the axis O1 from the second state, the arm-side terminal 411 contacts the wheel-side terminal 412 or the wheel-side terminal 413. In the embodiment, when the camber angle of the wheel 2 is -2.5°, the end positions of the wheel-side terminals 412 and 413 are set such that the arm-side terminal 411 contacts the wheel-side terminals 412 and 413.

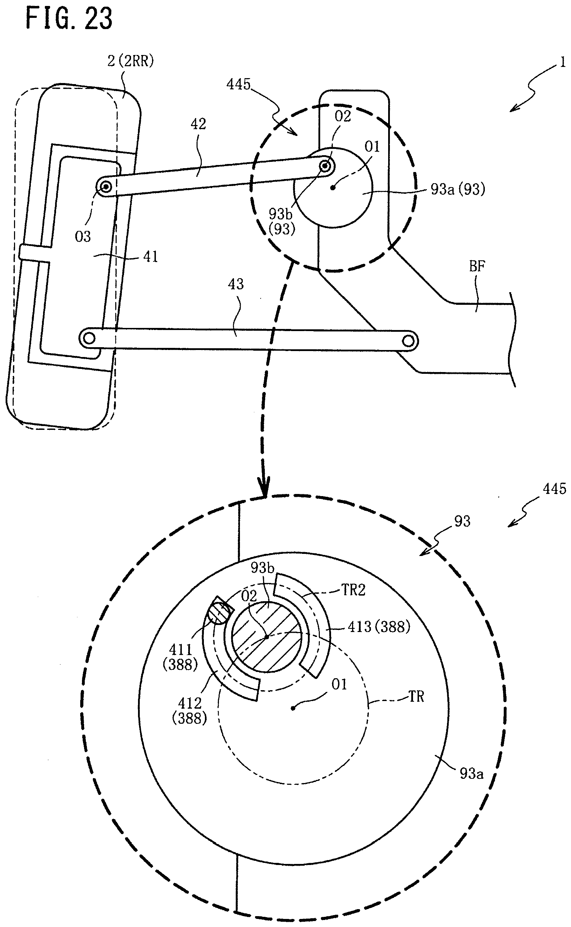

FIG. 23 is a front mimetic diagram of the vehicle 1 illustrating the state in which the camber angle of the wheel 2 is changed from the first state. Further, in FIG. 23, the position of the wheel 2 in the first state is mimetically illustrated by using the dotted line and a part of the crank member 93 partially enlarged from the view of a cross section.

As illustrated in FIG. 23, in the first state in which the camber angle of the wheel 2 is adjusted to 0°, when the external force works on the camber angle adjusting device 445 with the operation such as the loading of the luggage on the vehicle 1, and the wheel member 93a is rotated, for example, clockwise in FIG. 23 around the axis 01, the crank pin 93b is moved on the rotation trajectory TR and the arm-side terminal 411 provided in the upper arm 42 is moved on the rotation trajectory TR2, and when the camber angle of the wheel 2 reaches -0.5°, the arm-side terminal 411 contacts the wheel-side terminal 412.

Further, by the operation of the external force, even in the case where the wheel member 93a is rotated counterclockwise, when the camber angle of the wheel 2 reaches -0.5°, the arm-side terminal 411 contacts the wheel-side terminal 413. Accordingly, by monitoring a change in resistance values of the respective terminals 411 to 413, the wheel member 93a may be rotated (misaligned), that is, the camber angle of the wheel 2 may be changed.

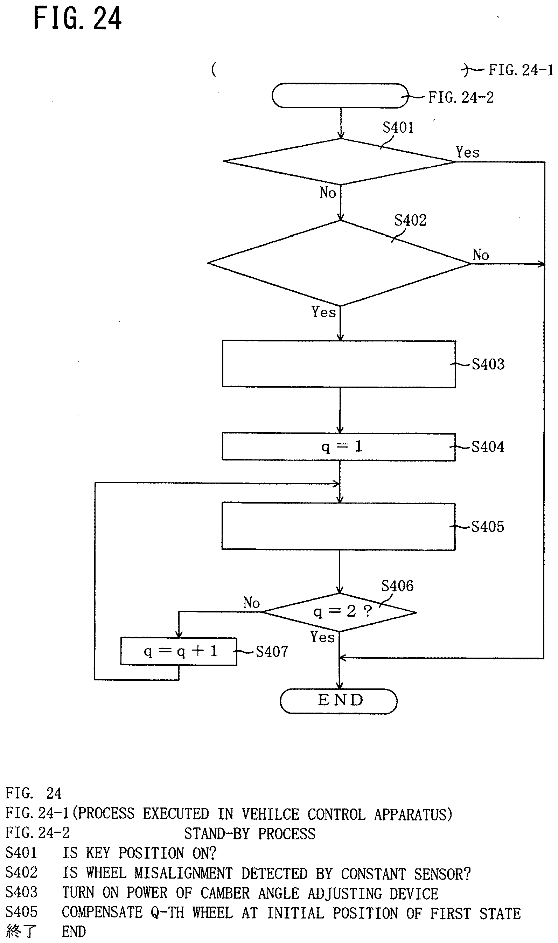

Subsequently, referring to FIG. 24, stand-by process in the fourth embodiment will be described. FIG. 24 is a flowchart illustrating the stand-by process. This process is executed repeatedly (for example, at an interval of 0.2 seconds) by the CPU 71 while the power of the vehicle control apparatus 300 is input, and in this process, the camber angle of the wheel 2 is suppressed from being changed by external force accompanied by the operations such as, for example, the loading of luggage on the vehicle 1, the person's getting in the vehicle 1, or the opening/closing of each door when the power of the camber angle adjusting device 45 is turned off.

The CPU 71 is associated with the stand-by process, and judges whether the key position is in the on state (S401). Further, since the method of judging whether the key position is in the on state is the same as that in the third embodiment (S301), a description thereof will be omitted.

In the process of S401, when it is judged that the key position is in the on state (S401: Yes), as described above, the power is supplied to all of the components of the vehicle 1, and as a result, since the power is supplied even to the camber angle adjusting device 45, the process after S402 is skipped and the stand-by process is terminated. Further, in this case, as described above, the compensation of returning the wheel member 93a to the initial position is performed by the processes of FIGS. 7 to 10, FIG. 17, and FIG. 18.

Meanwhile, in the process of S401, when it is judged that the key position is not in the on state (S401: No), the start button is not pressed, and as described above, the power is supplied to only the vehicle control apparatus 300, the door lock device 386, and the all-time operating sensor device 388 from the constant power supply and the power is not supplied to the rest of the components including the camber angle adjusting device 45, and as a result, for example, when the external force accompanied by the operation such as the loading of the luggage on the vehicle 1, the person's getting in the vehicle 1, or the opening/closing of each door works on the vehicle 1, the wheel member 93a is misaligned.

Therefore, in the fourth embodiment, it is judged whether the misalignment of the wheel member 93a is detected by the all-time operating sensor device 388 (S402). As described above, the camber angle of the wheel 2 reaches -0.5° and the arm-side terminal 411 of the all-time operating sensor device 388 contacts any one of the wheel-side terminals 412 and 413 to detect the misalignment (rotation of the predetermined amount or more) of the wheel member 93a.

As a result of the judgment in the process of S402, when it is judged that the misalignment of the wheel member 93a is not detected (S402: No), the external force does not work on the vehicle 1 or the external force works on the vehicle 1, but the misalignment (rotation amount) from the first rotational position of the wheel member 93a by the operation of the external force is still small, and as a result, in this step, it is considered that there is a low possibility that the camber angle of the wheel 2 will be radically changed. Therefore, in this case (S402: No), the process after S403 is skipped and the stand-by process is terminated.

Meanwhile, as a result of the judgment in the process of S402, when it is judged that the misalignment of the wheel member 93a is detected (S402: Yes), the external force works on the vehicle 1, and as a result, the misalignment (rotation amount) from the first rotational position of the wheel member 93a increases and when the misalignment is more than the predetermined amount, there is a concern in that the camber angle of the wheel 2 may be radically changed.

Therefore, in this case (S402: Yes), the power of the camber angle adjusting device 445 is turned on (S403) to make the camber angle of the wheel 2 be adjustable and thereafter, the process after S404 is executed to execute the process of returning the wheel member 93a to the initial position (first rotational position in the embodiment).

In the process after S404, first, q = 1 is written in a value q (not illustrated) provided in the RAM 73 (S404) and thereafter, the wheel member 93a corresponding to a q-th wheel is compensated to the initial position (that is, the first rotational position) of the first state (S405) to execute the process of S406. Further, in the stand-by process, a first wheel (q = 1) is defined as the right rear wheel 2RR and a second wheel (q = 2) is defined as the left rear wheel 2RL, for convenience of description.

Further, similarly as in the aforementioned third embodiment, in the vehicle control apparatus 300, when the start button is turned off (that is, the key position is operated to be in the off state) and the wheel driving device 3 stops, the camber angle of the wheel 2 is adjusted to the first state and thereafter, the power of the camber angle adjusting device 445 is turned off.

In the process of S406, it is judged whether the value q provided in the RAM 73 reaches 2 (S406). As a result, when the value q does not reach 2 (that is, q = 1) (S406: No), each of the processes (S406 and S407) for the second wheel (left rear wheel 2RL) is not executed, and as a result, q = q + 1 is written in the value q (S407) and thereafter, the process of S405 is executed, in order to execute each of the processes even with respect to the second wheel. Meanwhile, when the value q reaches 2 (that is, q = 2) (S406: Yes), executing of each of the process S405 for the first and second wheels (that is, the left and right rear wheels 2RL and 2RR) is completed, and as a result, the stand-by process is terminated.

As described above, in the embodiment, even in the case where the power of the camber angle adjusting device 45 is turned off, when the external force works on the vehicle 1 and the wheel member 93a is misaligned from the first rotational position, the power of the camber angle adjusting device 45 is turned on and the compensation operation for compensating the misalignment of the wheel member 93a is executable. Accordingly, before the misalignment of the wheel member 93a increases, the misalignment of the wheel member 93a is compensated and the wheel member 93a may be returned to the initial position (first rotational position). As a result, the rotation amount of the wheel member 93a may be suppressed from being more than the predetermined amount and the camber angle of the wheel 2 may be suppressed from being radically changed.

Further, in this way, when the change in the camber angle of the wheel 2 (the misalignment of the wheel member 93a) is detected, that is, when the external force works on the vehicle 1 and further, the wheel member 93a is actually misaligned by the operation, the compensation operation by the camber angle adjusting device 445 is executable, and as a result, although the external force does not work on the vehicle 1 or the external force works on the vehicle 1, but is does not have the same intensity as the force for rotating the wheel member 93a as large as the predetermined amount or more, it is possible to suppress the power of the camber angle adjusting device 445 from being unnecessarily turned on (a stop state from being cancelled). Accordingly, unnecessary energy consumption may be reduced and the consumption energy may be suppressed as much.

Further, in the embodiment, the all-time operating sensor device 388 is constituted by a sensor (the arm-side terminal 411 and the wheel-side terminals 412 and 413) detecting relative rotation between the crank pin 93b of the crank member 93 and the connection portion 42a of the upper arm 42 and thus may comparatively easily detect the state in which the camber angle of the wheel 2 is -0.5°.

That is, in the range of the camber angle of 3° from the first state (the camber angle of 0°) to the second state (the camber angle of -3°), since it is necessary to detect a change (a state in which the camber angle of 0° in the first state is changed to the camber angle of -0.5°) in the camber angle of the wheel 2 of 0.5°, in a method (for example, a method in a fifth embodiment) of detecting the displacement of the wheel 2 accompanied by the change (0.5°) of the camber angle in a straight-line direction, the displacement amount is very small, and as a result, a high-precision sensor device is required.

In this regard, by the method in the embodiment of detecting the displacement of the connection portion 42a to the wheel member 93a in a rotational direction, the camber angle of 3° from the first state (the camber angle of 0°) to the second state (the camber angle of -3°) corresponds to 180° around the crank pin 93b and the change of the camber angle of 0.5° corresponds to approximately 30° around the crank pin 93b, and as a result, the displacement amount is comparatively increased and the detection may be facilitated.

Further, the all-time operating sensor device 388 in the embodiment is formed in a shape formed by the wheel-side terminals 412 and 413 are formed in a shape formed by segmenting only a part (a region corresponding to the change of the camber angle of 0.5° from the first state or the second state) of the annular shape and a region other than the segmented parts is continuously formed. Accordingly, although the camber angle is continuously changed at the time when and after the camber angle of the wheel 2 is changed from the first state or the second state by 0.5°, the arm-side terminal 411 and the wheel-side terminals 412 and 413 may keep a contact state. That is, although the camber angle of the wheel 2 is changed (that is, the misalignment of the wheel member 93a increases), the arm-side terminal 411 and the wheel-side terminals 412 and 413 may be prevented from being in a non-contact state.

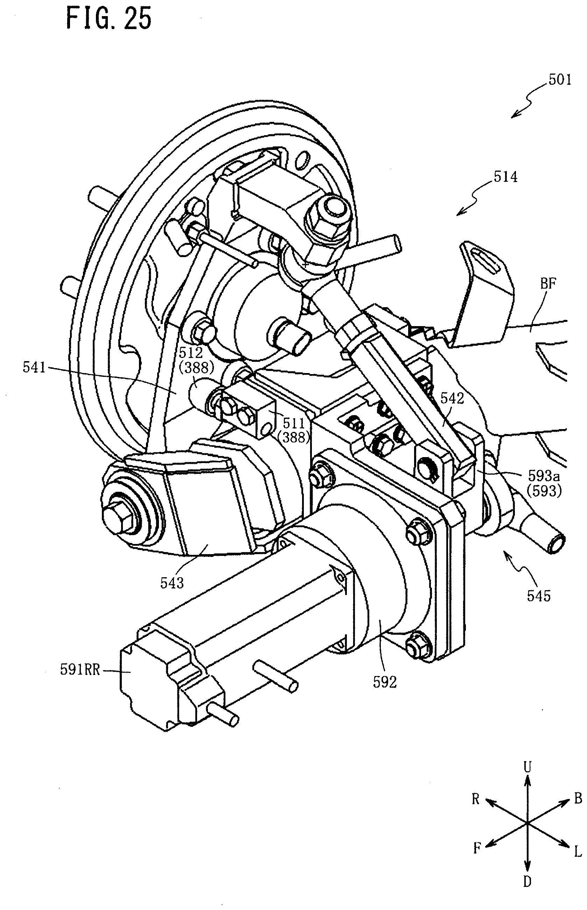

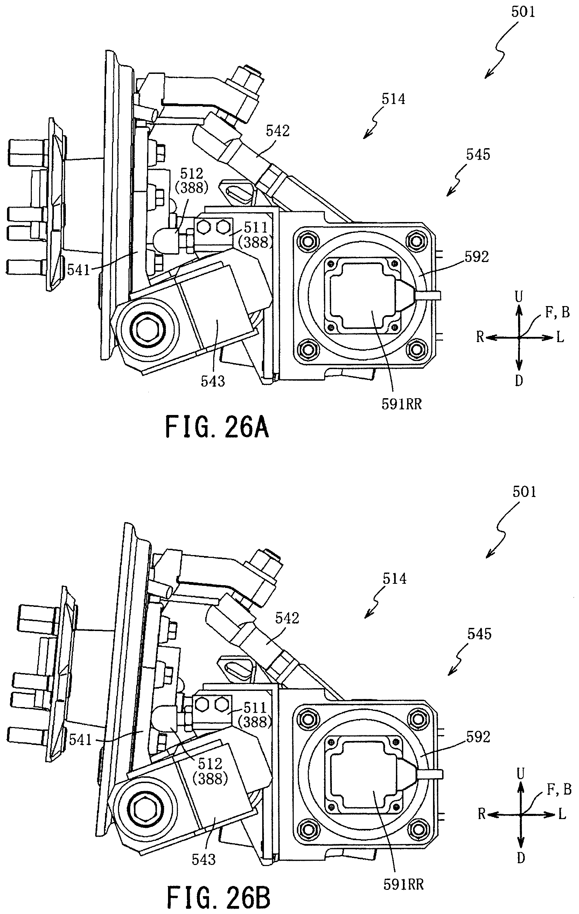

Subsequently, referring to FIGS. 25 and 26, a fifth embodiment will be described. Further, in the fifth embodiment, a case in which a vehicle 501 is controlled by the vehicle control apparatus 300 will be described as an example. Further, the same reference numerals refer to the same elements as each embodiment described above and a description thereof will be omitted.

Herein, since the vehicle 501 is the same as the vehicle 1 in the first embodiment in terms of other components except that a suspension device 514 is different from the suspension device 14 in the first embodiment, a description thereof will be omitted. However, the suspension device 514 and the suspension device 14 are different from each other in terms of the size, shape, or capacity of each component, but the same as each other in terms of a configuration of a structure in which the camber angle of the wheel 2 is adjusted and a structure in which the camber angle of the wheel 2 is held by using the crank mechanism and operations thereof.

FIG. 25 is a perspective view of the suspension device 514 in the fifth embodiment. Further, since left and right configurations of the suspension device 514 are common, only the suspension device 514 that suspends the right rear wheel 2RR will be hereinafter described and the suspension device 14 that suspends the left rear wheel 2RL will not be described.

As illustrated in FIG. 25, the suspension device 514 has the double wishbone type suspension structure, and primarily includes a carrier member 541 rotatably holding the wheel 2 (right rear wheel 2RR), an upper arms 542 and a lower arm 543 connecting the carrier member 541 to the vehicle body BF to be vertically movable placed vertically at a predetermined interval, and a camber angle adjusting device 545 interposed between the upper arm 542 and the vehicle body BF. Herein, the lower arm 543 is installed in two. Further, in FIG. 25, a coil spring and a shock absorber serving as the shock-absorbing devices are not illustrated.

Further, an RR motor 591RR of the camber angle adjusting device 545, a deceleration device 592, and a wheel member 593a illustrated in FIG. 25 correspond to the RR motor 91RR of the camber angle adjusting device 45, the deceleration device 92, and the wheel member 93a in the first embodiment, respectively.

As illustrated in FIG. 25, the all-time operating sensor device 388 in the fifth embodiment includes a main body part 511 mounted on the lower arm 543 and a contacted part 512 held in the main body part 511, and is configured as a push-on type sensor device of which turn-on and off are switched with straight-line direction displacement of the contacted part 512.

The contacted part 512 protrudes toward the carrier member 541 from the main body part 511 and is held in the main body part 511 to be displaced in a direction close to and a direction distant from the carrier member 541 (that is, the arrow R-L direction of FIG. 25).

A pressing member (for example, the coil spring) is provided in the main body part 511, which presses the contacted part 512 toward the carrier member 541 side and the contacted part 512 is held at an initial position by pressing force of the pressing member. When the carrier member 541 is tilted toward the contacted part 512, the contacted part 512 is returned from the initial position and when a returning amount reaches a predetermined amount, an internal contact terminal becomes in a contact state and an on state is formed. Meanwhile, when the carrier member 541 is tilted toward a side distant from the contacted part 512, the contacted part 512 is returned to the initial position by the pressing force of the pressing member and the internal contact terminal becomes in a non-contact state and an off state is formed.

FIG. 26(a) is a front view of the suspension device 514 in a first state and FIG. 26(b) is a front view of the suspension device 514 in a second state.

As illustrated in FIG. 26(a), in the first state (the state in which the camber angle is adjusted to 0°, see FIG. 4(a)), the contacted part 512 positioned at the initial position has a gap from the carrier member 541, and as a result, the all-time operating sensor device 388 becomes in the off state (the state in which the internal contact terminal is in the non-contact state).

When the first state is transited to the second state (the state in which the camber angle is adjusted to -3°, see FIG. 4(b)) illustrated in FIG. 26(b), the contacted part 512 and the carrier member 541 contact each other, during the transition and when the contacted part 511 is returned from the initial position and the returning amount reaches the predetermined amount, the all-time operating sensor device 388 becomes in the on state (the state in which the internal contact terminal is in the contact state) .

Further, in the embodiment, when the camber angle of the wheel 2 is -0.5°, the internal contact terminal is configured such that the all-time operating sensor device 399 is in the on state. In addition, after the camber angle of the wheel 2 reaches -0.5°, the all-time operating sensor device 388 keeps the on state while the internal contact terminal is in the contact state during the period when the first state is transited to the second state (that is, while the camber angle of the wheel 2 is adjusted from -0.5° to -3°) .

As illustrated in FIG. 26(a), in the first state in which the camber angle of the wheel 2 is adjusted to 0°, when the camber angle of the wheel 2 is changed by the external force accompanied by the operation such as the loading of the luggage on the vehicle 1, the contacted part 512 is returned toward the main body part 511 from the initial position by the carrier member 541 and when the camber angle of the wheel 2 reaches -0.5°, the internal contact terminal is in the contact state and the all-time operating sensor device 388 is turned on. Accordingly, the on/off state (that is, a change in the resistance value according to the contact/non-contact state of the internal contact terminal) of the all-time operating sensor device 388 is monitored to change the camber angle of the wheel 2 to a predetermined angle (rotate (misalign) the wheel member 593a by a predetermined amount).

Therefore, instead of configuring the all-time operating sensor device 388 by the arm-side terminal 411 and the wheel-side terminals 412 and 413 in the fourth embodiment, even when the all-time operating sensor device 388 is constituted by the main body part 511 and the contacted part 512 as in the embodiment, the stand-by process (see FIG. 24) is executed to thereby suppress the misalignment (rotation amount) of the wheel member 593a from being more than the predetermined amount and the camber angle of the wheel 2 from being radically changed, similarly as in the fourth embodiment.

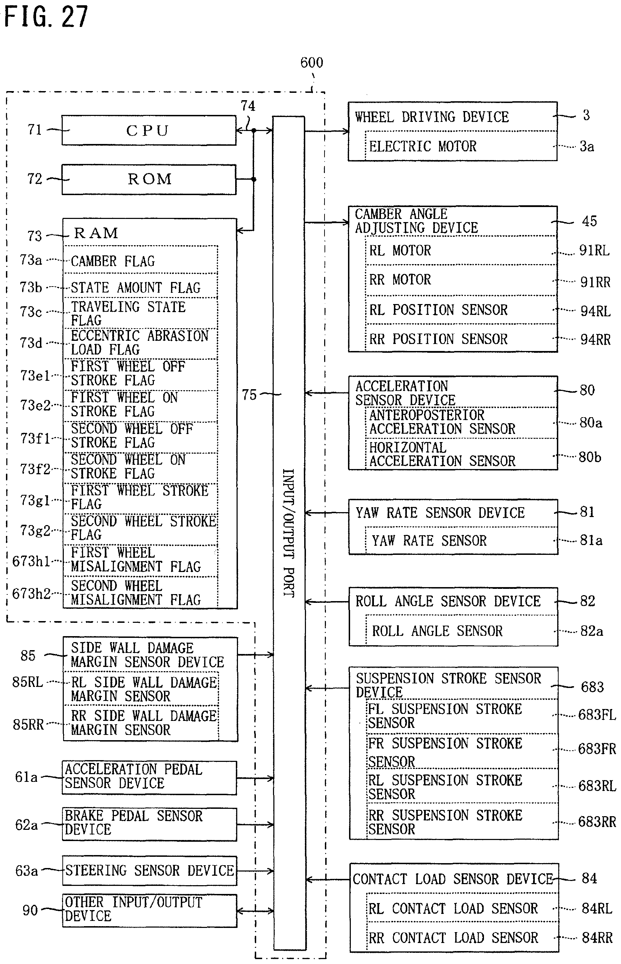

Subsequently, referring to FIGS. 27 to 33, a sixth embodiment will be described. Further, in the sixth embodiment, a case in which the vehicle 1 in the first embodiment is controlled by a vehicle control apparatus 600 will be described as an example. Further, the same reference numerals refer to the same elements as those of the first embodiment and a description thereof will be omitted.

FIG. 27 is a block diagram illustrating an electrical configuration of the vehicle control apparatus 600 in the sixth embodiment. A first wheel misalignment flag 673h1 and a second wheel misalignment flag 673h2 are provided in the RAM 73.

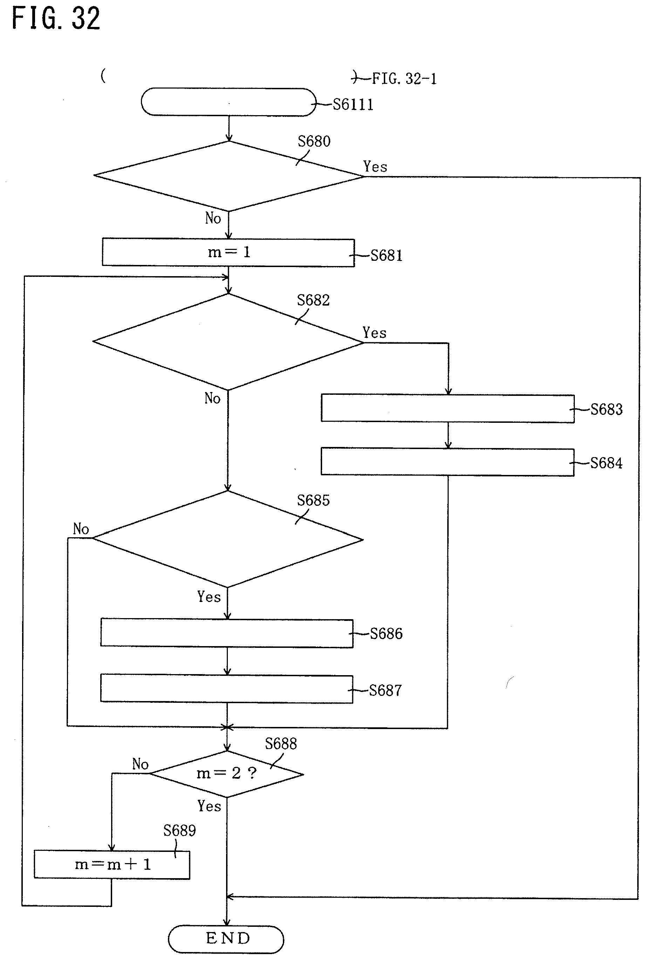

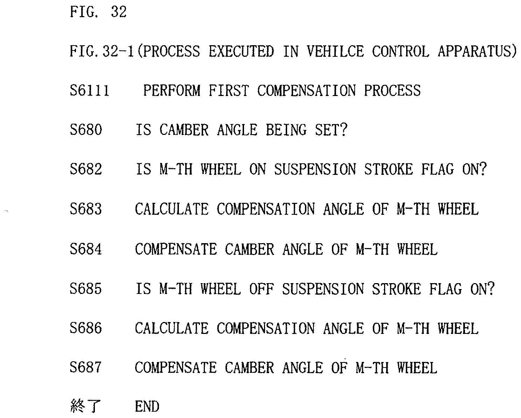

The first wheel misalignment flag 673h1 is a flag indicating whether when a rotational position (phase) of the wheel member 93a at the first wheel (in the embodiment, the right rear wheel 2RR) side is rotated (misaligned) by the operation of the external force from the state adjusted to the first state or the second state, the rotation amount (misalignment amount) is equal to or more than a predetermined threshold (that is, the 'wheel misalignment threshold (not illustrated)' stored in the ROM 72), and is switched to on or off at the time of executing judgment of the wheel misalignment amount to be described below (see FIG. 32).

The second wheel misalignment flag 673h2 is a flag corresponding to the first wheel misalignment flag 673h1 and since the state of the wheel member 93a or the used threshold as the reference is the same except that the left rear wheel 2RL is targeted, a description thereof will be omitted.

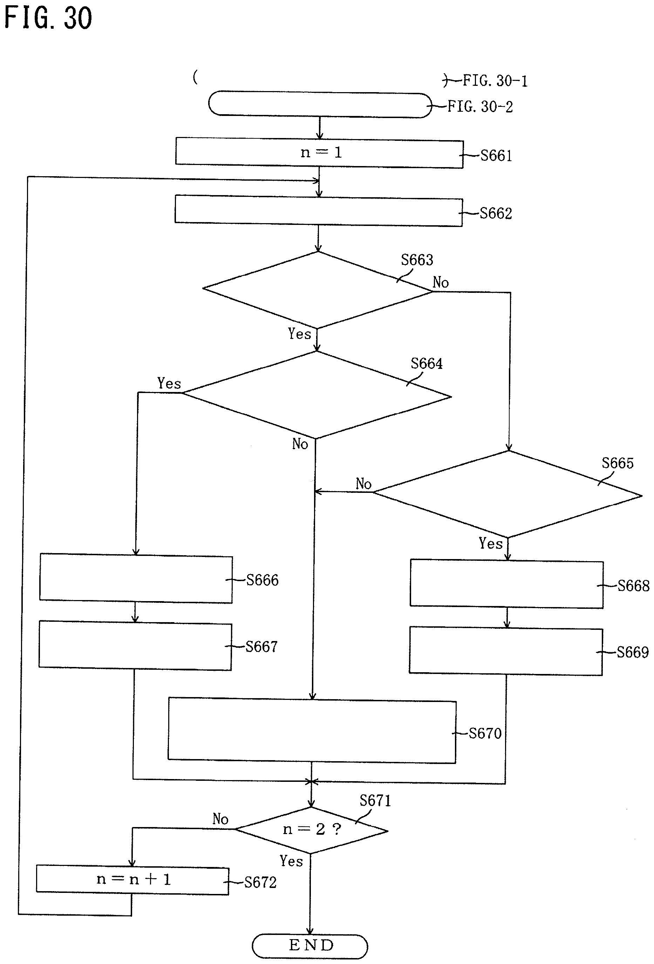

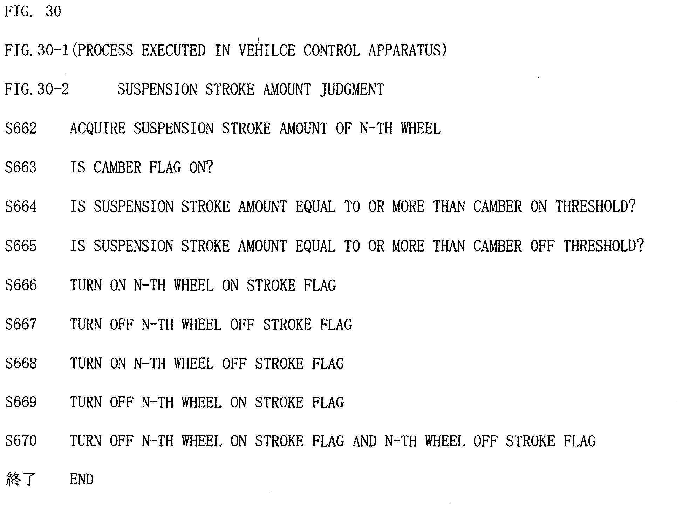

Further, both the wheel misalignment flags 673h1 and 673h2 are switched to the on state when the rotation amount (misalignment amount) of the corresponding wheel member 93a is equal to or more than the wheel misalignment threshold and switched to the off state when the rotation amount (misalignment amount) does not reach the wheel misalignment threshold. The CPU 71 compensates the operation angle (the phase of the crank member 93, see FIG. 3) of the corresponding camber angle adjusting device 45 in the compensation process illustrated in FIG. 30 when each of the wheel misalignment flags 673h1 to 673h2 are on.

A suspension stroke sensor device 683 is a device for detecting the stretching amount of each suspension device 4 suspending the left and right front wheels 2FL and 2FR to the vehicle body BF and the stretching amount of each suspension device 14 suspending the left and right rear wheels 2RL and 2RR to the vehicle body BF, and outputting the detection result to the CPU 71, and includes total four sensors of an FL suspension stroke sensor 683FL, an FR suspension stroke sensor 683FR, an RL suspension stroke sensor 683RL, and an RR suspension stroke sensor 683RR that each detect the stretching amount of each of the suspension devices 4 and 14, and an output circuit (not illustrated) process detection results of the respective suspension stroke sensors 683FL to 683RR and outputting the processed detection results to the CPU 71.

In the embodiment, each of the suspension stroke sensors 683FL to 683RR is configured by the strain gauge, and each of the suspension stroke sensors 683FL to 683RR is installed at a shock absorber (not illustrated) of each of the suspension devices 4 and 14.

Further, the CPU 71 may also acquire contact loads of the left and right front wheels 2FL and 2FR and the left and right rear wheels 2RL and 2RR based on the detection result (stretching amount) of each of the suspension stroke sensors 683FL to 683RR input from the suspension stroke sensor device 683. That is, since the contact load of the wheel 2 and the stretching amount of the suspension devices 4 and 14 have a proportional relationship with each other, when the stretching amount of the suspension devices 4 and 14 is set as X and a damping constant of the suspension devices 4 and 14 is set as k, the contact load F of the wheel 2 is expressed by F = kX.

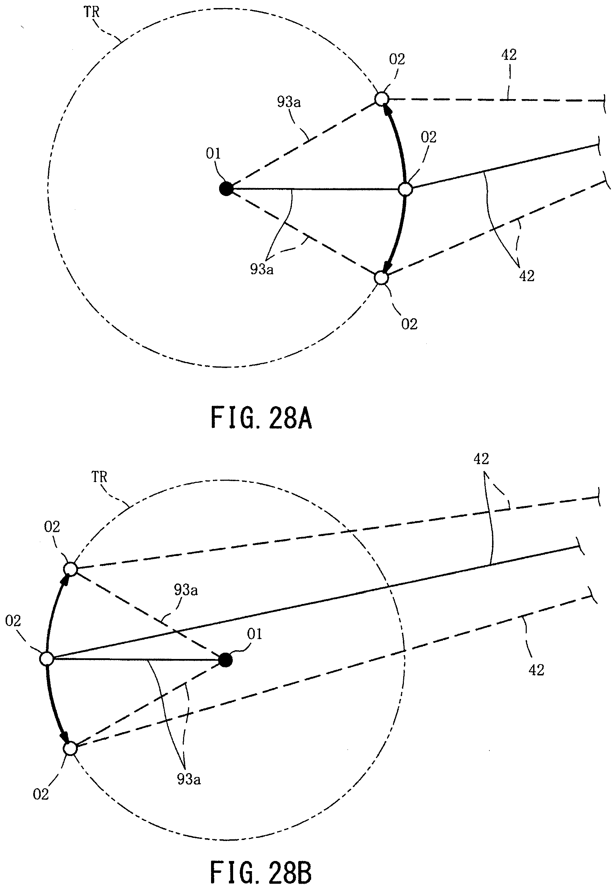

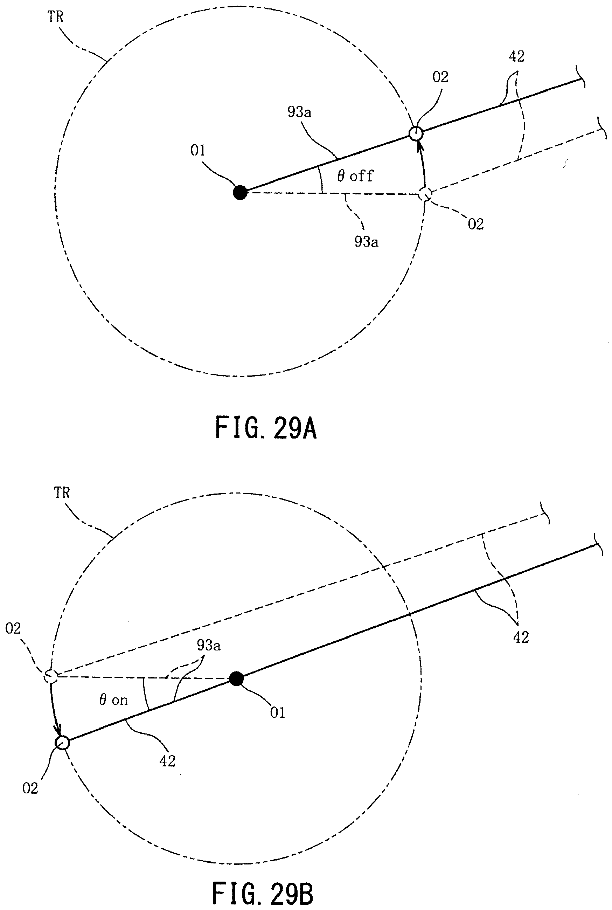

Subsequently, referring to FIGS. 28 and 29, a state change of the camber angle adjusting device 45 with respect to the vertical movement of the carrier member 41 (that is, stretching of the suspension device 14) will be described. Further, in FIGS. 28 and 29, a case in which the carrier member 41 is displaced in a bound direction, and the suspension device 14 is contracted is described, but even in a case in which the carrier member 41 is displaced in a rebound direction, and the suspension device 14 is stretched, a description thereof will be omitted similarly as the case in which the suspension device 14 is contracted in terms of a way of thinking.

FIGS. 28(a) and 29(a) are partially enlarged diagrams of the suspension device 14 in the first state and FIGS. 28(b) and 29(b) are partially enlarged diagram of the suspension device 14 in the second state. However, in FIGS. 28(a) and 28(b), a state (that is, a state before the wheel member 93a is rotated (the rotational position is misaligned) by the operation of the external force) corresponding to FIGS. 11(a) and 11(b) in which the suspension device 14 is contracted is expressed by the solid line and a state after the wheel member 93a is rotated (the rotational position is misaligned) by the operation of the external force from the state is expressed by the dotted line, respectively. That is, the state expressed by the dotted line in FIGS. 11(a) and 11(b) is expressed by the solid line in FIGS. 28(a) and 28(b). However, in FIGS. 29(a) and 29(b), a state (that is, a state before compensation) corresponding to FIGS. 11(a) and 11(b) in which the suspension device 14 is contracted is expressed by the dotted line and a state after compensation by first compensation process to be described below (see FIG. 32), from the state is expressed by the solid line, respectively.

From the state expressed by the solid line in FIG. 28(a), when external force in a direction to press the upper arm 42 onto the wheel member 93a works on the wheel member 93a from the upper arm 42, a force component in a direction to move the axis O2 to the lower side of FIG. 28(a) is generated and the wheel member 93a is rotated clockwise in FIG. 28(a) by the force component. Meanwhile, when the external force in a direction to separate the upper arm 42 from the wheel member 93a works on the wheel member 93a from the upper arm 42, a force component in a direction to move the axis O2 to the upper side of FIG. 28(a) is generated and the wheel member 93a is rotated counterclockwise in FIG. 28(a) by the force component. As a result, as illustrated by the dotted line in FIG. 28(a), the rotational position of the wheel member 93a is misaligned and the camber angle of the wheel 2 is changed from the first camber angle.

Therefore, in the embodiment, when a movement state of the vehicle 1 is looser than a predetermined movement state, the first compensation process (see FIG. 32) is executed. That is, when the suspension device 14 is contracted from the first state, compensation process of rotating the wheel member 93a at an angle θoff is executed by the camber angle adjusting device 45 as illustrated in FIG. 29(a), and as a result, the respective axes are parallel to each other on the straight line in the order of the axis O1, the axis O2, and the axis O3. Therefore, although the force is applied from the upper arm 42 to the wheel member 93a, the camber angle of the wheel 2 is enabled to be mechanically kept to the first camber angle by restricting the rotation of the wheel member 93a, thereby reducing the consumption energy of the RL and RR motors 91RL and 91RR.

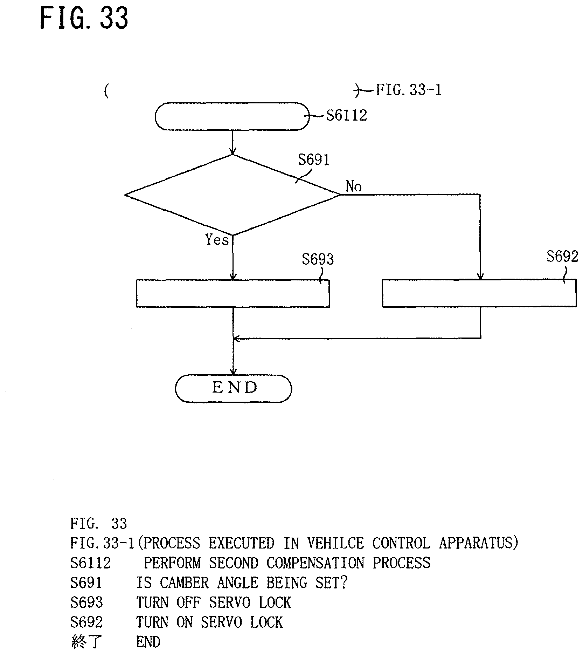

Therefore, when the movement state of the vehicle 1 is not looser than the predetermined movement state, second compensation process (see FIG. 33) is executed. That is, when a setting operation of setting the wheel member 93a to the first state is terminated, the camber angle adjusting device 45 (RL motor 91RL and RR motor 91RR) is set in a servo lock state to restrict the rotation of the wheel member 93a. As a result, the wheel member 93a is suppressed from being rotated (the rotational position from being misaligned) by the operation of the external force and the camber angle of the wheel 2 is suppressed from being changed from the first camber angle. Further, in this way, by setting each of the motors 91RL and 91RR in the servo lock state while the wheel member 93a is in the first state, the mechanical friction force may be easily used for restricting the rotation of the wheel member 93a, thereby reducing the consumption energy of each of the motors 91RL and 91RR as much.

Meanwhile, from the state expressed by the solid line in FIG. 28(b), when the external force in the direction to press the upper arm 42 onto the wheel member 93a works on the wheel member 93a from the upper arm 42, a force component in a direction to move the axis O2 to the lower side of FIG. 28(b) is generated and the wheel member 93a is rotated counterclockwise in FIG. 28(b) by the force component. Meanwhile, when the external force in a direction to separate the upper arm 42 from the wheel member 93a works on the wheel member 93a from the upper arm 42, a force component in a direction to move the axis O2 to the upper side of FIG. 28(b) is generated and the wheel member 93a is rotated clockwise in FIG. 28(b) by the force component. As a result, as illustrated by the dotted line in FIG. 28(b), the rotational position of the wheel member 93a is misaligned and the camber angle of the wheel 2 is changed from the first camber angle.

In the embodiment, even in this case, when the movement state of the vehicle 1 is looser than the predetermined movement state, the first compensation process (see FIG. 32) is executed, similarly as in the first state. That is, when the suspension device 14 is contracted from the second state, compensation process of rotating the wheel member 93a at an angle θon is executed by the camber angle adjusting device 45 as illustrated in FIG. 29(b), and as a result, the respective axes are parallel to each other on the straight line in the order of the axis O2, the axis O1, and the axis O3. As a result, similarly as in the first state, the camber angle of the wheel 2 is enabled to be mechanically kept to the second camber angle by restricting the rotation of the wheel member 93a, thereby reducing the consumption energy of the RL and RR motors 91RL and 91RR.

Meanwhile, when the movement state of the vehicle 1 is not looser than the predetermined movement state, the second compensation process (see FIG. 33) is executed similarly as in the case of the first state. That is, when a setting operation of setting the wheel member 93a to the second state is terminated, the camber angle adjusting device 45 (RL motor 91RL and RR motor 91RR) is set in the servo lock state to restrict the rotation of the wheel member 93a, thereby suppressing the camber angle of the wheel 2 from being changed from the second camber angle. Further, even in this case, by setting each of the motors 91RL and 91RR in the servo lock state while the wheel member 93a is in the second state, the mechanical friction force may be easily used for restricting the rotation of the wheel member 93a, thereby reducing the consumption energy of each of the motors 91RL and 91RR.

Herein, the relationships between the stretching amount (suspension stroke) of the suspension device 14 and the compensation angles θoff and θon of the wheel member 93a will be described. The suspension stroke of the suspension device 14 is defined as the distance B and a distance between the axes O2 and O3 at both ends of the upper arm 42 is defined as the distance Lu. Further, as described above, the distance between the axis O1 and the axis O2 is defined as the distance Er (see FIGS. 11(a) and 11(b)).

Based on geometrical relationships among the distances B, Lu, and Er before and after the suspension device 14 is stretched as illustrated in FIG 29, a value (see FIG. 29(a)) of the compensation angle θoff in the first state may be approximate to tan - 1 (B/Lu + Er) and a value (see FIG. 29(b)) of the compensation angle θon in the second state may be approximate to tan -1 (B/Lu - Er). Accordingly, since the distance Lu and the distance Er are previously stored in the RAM 72 as fixed values, the CPU 71 acquires the distance B which is the suspension stroke of the suspension device 14 from the suspension stroke sensor device 683 (see FIG. 15) to calculate the values of the angles θoff and θon based on the respective distances B, Lu, and Er.

Further, the compensation angle θon in the second state becomes a larger value than the compensation angle θoff in the first state from the aforementioned approximate equation (θoff < θon). Accordingly, when the first and second states are the same as each other in distance B which is the suspension stroke of the suspension device 14, the second state has a larger angle required for compensation than the first state.

In other words, even when the suspension device 14 is suspension-stroked as long as the same distance B, the angle formed by the straight line connecting the axis O3 and the axis O2, and the tangent line on the axis O2 of the rotation trajectory TR is smaller in the second state than in the first state (that is, away from the right angle), and therefore, although the same force is applied from the upper arm 42 to the wheel member 93a, the force component that rotates the wheel member 93a is increased, and as a result, the wheel member 93a is easily rotated.

Therefore, the suspension stroke amount ('camber off threshold' and 'camber on threshold') of the suspension device 14 which may be allowed to restrict the rotation of the wheel member 93a by mechanical friction force is smaller in the second state than in the first state. That is, a value of the 'camber on threshold' in the second state is smaller than a value of the 'camber off threshold' in the first state.

Subsequently, referring to FIG. 30, judgment of the suspension stroke amount will be described. FIG. 30 is a flowchart illustrating the judgment of the suspension stroke amount. This process is executed repeatedly (for example, at an interval of 0.2 seconds) by the CPU 71 while the power of the vehicle control apparatus 600 is input and in this process, it is judged whether the stretching amount (suspension stroke) of the suspension device 14 suspending the left and right rear wheels 2RL and 2RR is more than the predetermined threshold.

The CPU 71 is associated with the judgment of the suspension stroke amount, and first writes n = 1 in a value n (not illustrated) provided in the RAM 73 (S661) and acquires a suspension stroke amount of an n-th wheel (S662). Further, in the suspension stroke amount judgment section, a first wheel (n = 1) is defined as the right rear wheel 2RR and a second wheel (n = 2) is defined as the left rear wheel 2RL, for convenience of description.

Subsequently, it is judged whether the camber flag 73a is on (S663). As a result, in the process of S663, when it is judged that the camber flag 73a is on (S663: Yes), it is judged whether the suspension stroke amount of the suspension device 14 suspending the n-th wheel is equal to or more than the camber on threshold (S664), while in the process of S663, when it is judged that the camber flag 73a is not on (that is, off) (S663: No), it is judged whether the suspension stroke amount of the suspension device 14 suspending the n-th wheel is equal to or more than the camber off threshold (S665).

Herein, the 'camber off threshold' is a limit value of the stretching amount of the suspension device 14 capable of restricting the rotation of the wheel member 93a by the mechanical friction force with respect to the force from the upper arm 42 although the compensation process of the angle θoff by the camber angle adjusting device 45 is not executed when the suspension device 14 is stretched (see FIGS. 11(a) and 28(a)), in the first state in which the camber angle of the wheel 2 is set to the first camber angle (= 0°) .

Similarly, the 'camber on threshold' is a limit value of the stretching amount of the suspension device 14 capable of restricting the rotation of the wheel member 93a by the mechanical friction force with respect to the force from the upper arm 42 although the compensation process of the angle θon by the camber angle adjusting device 45 is not executed when the suspension device 14 is stretched (see FIGS. 11(b) and 28(b)), in the second state in which the camber angle of the wheel 2 is set to the second camber angle (= -3°) .

Therefore, in the first state or the second state, when the suspension stroke amount of the suspension device 14 does not reach the camber off threshold or the camber on threshold, the rotation of the wheel member 93a is restricted by the mechanical friction force although assumed maximum external force works on the wheel 2 (the wheel member 93a is not rotated although the rotational force by each of the motors 91RL and 91RR is cancelled).

Further, the camber off threshold and the camber on threshold are acquired as measurement values by a test (a test of acquiring a limited suspension stroke to rotate the wheel member 93a when the assumed maximum external force works on the wheel 2, in the first state and the second state) using an actual vehicle, and each of the measurement values is previously stored in the RAM 72. Further, as described above, the value of the 'camber on threshold' in the second state is smaller than the value of the 'camber off threshold' in the first state.

In the process of S664, when it is judged that the suspension stroke amount of the n-th wheel is equal to or more than the camber on threshold (S664: Yes), the suspension stroke amount of the suspension device 14 when the n-th wheel is in the second state is more than the limit value, and therefore an n-th wheel on stroke flag (a flag corresponding to the n-th wheel of the first wheel on stroke flag 73e2 and the second wheel on stroke flag 73f2) is turned on (S666) and further, an n-th wheel off stroke flag (a flag corresponding to the n-th wheel of the first wheel off stroke flag 73e1 and the second wheel off stroke flag 73f1) is turned off (S667), and then the process of S771 is executed.

In the process of S665, when it is judged that the suspension stroke amount of the n-th wheel is equal to or more than the camber off threshold (S665: Yes), the suspension stroke amount of the suspension device 14 when the n-th wheel is in the first state is more than the limit value, and therefore the n-th wheel on stroke flag (the flag corresponding to the n-th wheel of the first wheel on stroke flag 73e2 and the second wheel on stroke flag 73f2) is turned off (S668) and further, the n-th wheel off stroke flag (the flag corresponding to the n-th wheel of the first wheel off stroke flag 73e1 and the second wheel off stroke flag 73f1) is turned on (S669), and then the process of S771 is executed.

Further, in the process of S664, when it is judged that the suspension stroke amount of the n-th wheel is not equal to or more than the camber on threshold (that is, does not reach the camber on threshold) (S664: No) and in the process of S665, when it is judged that the suspension stroke amount of the n-th wheel is not equal to or more than the camber off threshold (that is, does not reach the camber off threshold) (S665: No), suspension stroke amounts of both the suspension device 14 in which the n-th wheel is in the first state and the suspension device 14 in which the n-th wheel is in the second state do not also reach the limit value, and therefore the n-th wheel on stroke flag (the flag corresponding to the n-th wheel of the first wheel on stroke flag 73e2 and the second wheel on stroke flag 73f2) and the n-th wheel off stroke flag (the flag corresponding to the n-th wheel of the first wheel off stroke flag 73e1 and the second wheel off stroke flag 73f1) are both turned off (S770) and thereafter, the process of S771 is executed.

In the process of S771, it is judged whether the value n provided in the RAM 73 reaches 2 (S771). As a result, when the value n does not reach 2 (that is, n = 1) (S771: No), each of the processes (S662 to S669) for the second wheel (left rear wheel 2RL) is not executed, and as a result, n = n + 1 is written in the value n (S772) and thereafter, the process of S662 is executed, in order to execute each of the processes even with respect to the second wheel. Meanwhile, when the value n reaches 2 (that is, n = 2) (S771: Yes), executing of each process (S662 to S669) for the first and second wheels (that is, the left and right rear wheels 2RL and 2RR) is completed, and as a result, the judgment of the suspension stroke amount is terminated.

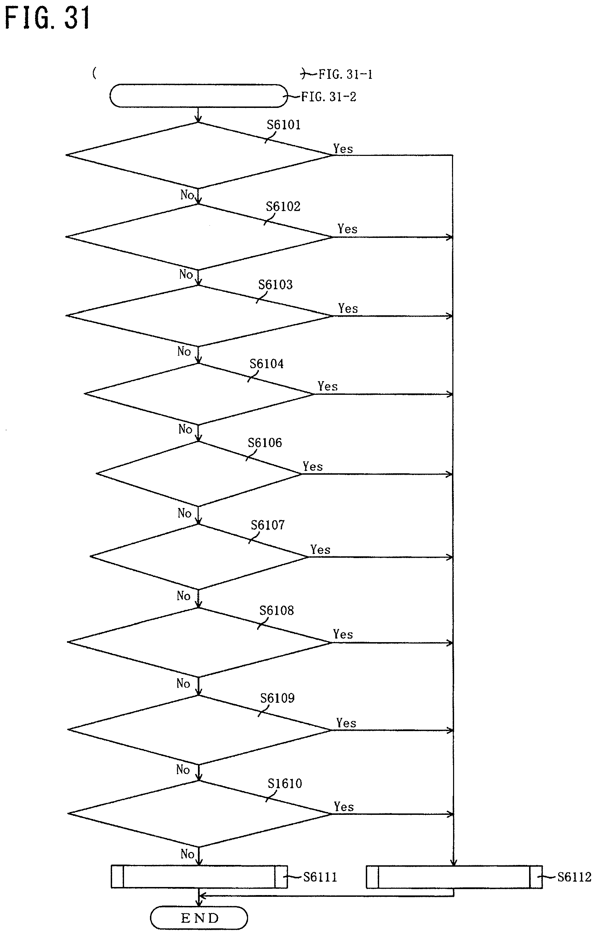

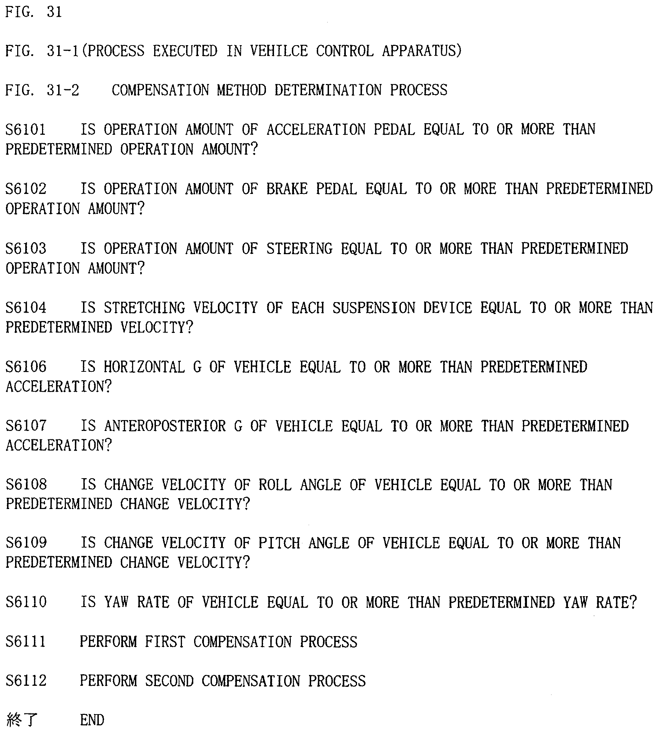

Subsequently, referring to FIG. 31, compensation method determination process will be described. FIG. 31 is a flowchart illustrating the compensation method determination process. This process is executed repeatedly (for example, at an interval of 0.2 seconds) by the CPU 71 while power of the vehicle control apparatus 600 is input and in this process, a compensation method of the camber angle adjusting device 45 is determined and executed according to the movement state of the vehicle 1.

The CPU 71 is associated with the compensation method determination process, and first, judges whether the operation amount (stepping amount) of the acceleration pedal 61 is equal to or more than a predetermined operation amount (S6101). As a result, when it is judged that the operation amount of the acceleration pedal 61 is equal to or more than the predetermined operation amount (S6101: Yes), it is estimated that, for example, a rear wheel side of the vehicle 1 is subducted and the suspension device 14 is suspension-stroked largely at a high speed, with sudden acceleration, and as a result, high responsiveness to compensation of the camber angle adjusting device 45 is required, and therefore second compensation process (S6112) is executed and the compensation method determination process is terminated.

Meanwhile, as a result of the process of S6101, when it is judged that the operation amount of the acceleration pedal 61 is less than the predetermined operation amount (S6101: No), subsequently, it is judged whether the operation amount of the brake pedal 62 is equal to or more than a predetermined operation amount (S6102). As a result, when it is judged that the operation amount of the brake pedal 62 is equal to or more than the predetermined operation amount (S6102: Yes), it is estimated that, for example, the vehicle 1 is nosedived and the suspension device 14 is suspension-stroked largely at the high speed, with sudden braking, and as a result, the high responsiveness to compensation of the camber angle adjusting device 45 is required, and therefore the second compensation process (S6112) is executed and the compensation method determination process is terminated.

Meanwhile, as a result of the process of S6102, when it is judged that the operation amount of .the brake pedal 62 is less than the predetermined operation amount (S6102: No), subsequently, it is judged whether an operation amount of the steering 63 is equal to or more than a predetermined operation amount (S6103). As a result, when it is judged that the operation amount of the steering 63 is equal to or more than the predetermined operation amount (S6103: Yes), it is estimated that, for example, the vehicle 1 is rolled and the suspension device 14 is suspension-stroked largely at the high speed, with sudden turn, and as a result, the high responsiveness to compensation of the camber angle adjusting device 45 is required, and therefore the second compensation process (S6112) is executed and the compensation method determination process is terminated.

Meanwhile, as a result of the process of S6103, when it is judged that the operation amount of the steering 63 is less than the predetermined operation amount (S6103: No), subsequently, it is judged whether a suspension stroke velocity (stretching velocity) of each of the suspension devices 4 and 14 is equal to or more than a predetermined velocity (S6104). As a result, when it is judged that the suspension stroke velocity of each of the suspension devices 4 and 14 is equal to or more than the predetermined velocity (S6104: Yes), it is estimated that, for example, as the wheel 2 passes through the uneven lane or travels a rough road, the suspension devices 4 and 14 is suspension-stroked at the high speed, and as a result, the high responsiveness to compensation of the camber angle adjusting device 45 is required, and therefore the second compensation process (S6112) is executed and the compensation method determination process is terminated.

Meanwhile, as a result of the process of S6104, when it is judged that the suspension stroke velocity of each of the suspension device 4 and 14 is less than the predetermined velocity (S6104: No), subsequently, it is judged whether a horizontal G of the vehicle 1 is equal to or more than a predetermined acceleration (S6106). As a result, when it is judged that the horizontal G of the vehicle 1 is equal to or more than the predetermined acceleration (S6106: Yes), it is estimated that, for example, the vehicle 1 is rolled and the suspension device 14 is suspension-stroked largely at the high speed, with the sudden turn or influence due to horizontal window, and as a result, the high responsiveness to compensation of the camber angle adjusting device 45 is required, and therefore the second compensation process (S6112) is executed and the compensation method determination process is terminated.

Meanwhile, as a result of the process of S6106, when it is judged that the horizontal G of the vehicle 1 is less than the predetermined acceleration (S6106: No), subsequently, it is judged whether anteroposterior G of the vehicle 1 is equal to or more than the predetermined acceleration (S6107). As a result, when it is judged that the anteroposterior G of the vehicle 1 is equal to or more than the predetermined acceleration (S6107: Yes), it is estimated that, for example, the rear wheel side of the vehicle 1 is subducted or nosedived and the suspension device 14 is suspension-stroked largely at the high speed, with the sudden acceleration or sudden braking, and as a result, the high responsiveness to compensation of the camber angle adjusting device 45 is required, and therefore the second compensation process (S6112) is executed and the compensation method determination process is terminated.

Meanwhile, as a result of the process of S6107, when it is judged that the anteroposterior G of the vehicle 1 is less than the predetermined acceleration (S6107: No), subsequently, it is judged whether a change velocity of a roll angle of the vehicle 1 is equal to or more than a predetermined change velocity (S6108). As a result, when it is judged that the roll angle change velocity of the vehicle 1 is equal to or more than the predetermined change velocity (S6108: Yes), it is estimated that, for example, the vehicle 1 is subjected to high-speed postural change in a roll direction and the suspension device 14 is suspension-stroked at the high speed, with the sudden turn, and as a result, the high responsiveness to compensation of the camber angle adjusting device 45 is required, and therefore the second compensation process (S6112) is executed and the compensation method determination process is terminated.

Meanwhile, as a result of the process of S6108, when it is judged that the roll angle change velocity of the vehicle 1 is less than the predetermined change velocity (S6108: No), subsequently, it is judged whether a change velocity of a pitch angle of the vehicle 1 is equal to or more than a predetermined change velocity (S6109). As a result, when it is judged that the pitch angle change velocity of the vehicle 1 is equal to or more than the predetermined change velocity (S6109: Yes), it is estimated that, for example, the vehicle 1 is subjected to high-speed postural change in a pitch direction and the suspension device 14 is suspension-stroked at the high speed, with the sudden acceleration or sudden braking, and as a result, the high responsiveness to compensation of the camber angle adjusting device 45 is required, and therefore the second compensation process (S6112) is executed and the compensation method determination process is terminated.

Meanwhile, as a result of the process of S6109, when it is judged that the pitch angle change velocity of the vehicle 1 is less than the predetermined change velocity (S6109: No), subsequently, it is judged whether a yaw rate of the vehicle 1 is equal to or more than a predetermined yaw rate (S6110). As a result, when it is judged that the yaw rate of the vehicle 1 is equal to or more than the predetermined yaw rate (S6110: Yes), it is estimated that, for example, only one wheel of the left and right wheels 2 passes through the uneven lane and thus, the yaw rate is equal to or more than the predetermined value, and even in this case, it is estimated that the suspension devices 4 and 14 are suspension-stroked at the high speed, and as a result, the high responsiveness to compensation of the camber angle adjusting device 45 is required, and therefore the second compensation process (S6112) is executed and the compensation method determination process is terminated.

Meanwhile, as a result of the process of S6110, when it is judged that the yaw rate of the vehicle 1 is less than the predetermined yaw rate (S6110: No), a roll or pitch (that is, the change in the suspension stroke in the camber angle adjusting device 45) which occurs in the vehicle 1 is continuous and loose, and it is estimated that the high responsiveness to compensation of the camber angle adjusting device 45 is not comparatively required, and therefore the first compensation process (S6111) is executed and the compensation method determination process is terminated.

In this way, in the compensation method determination process, at the time of compensating the camber angle adjusting device 45, when it is judged that the movement state of the vehicle 1 is looser than the predetermined movement state (S6101 to S6110: No), the first compensation process (S6111) is executed, while when it is judged that the movement state of the vehicle 1 is not looser than the predetermined movement state (any one process of S6101 to S6110: No), the second compensation process (S6112) is executed.

Further, in the compensation method determination process, since it is judged whether the movement state of the vehicle 1 is looser than the predetermined movement state based on the operation amount of the operating member (the acceleration pedal 61, the brake pedal 62, or the steering 63), it may be judged whether the movement state of the vehicle 1 is looser than the predetermined movement state at the time of operating the operating member such as the acceleration pedal 61, or the like. That is, since the judgment may be performed with high responsiveness (for example, before the operation such as the acceleration or turn is performed and the suspension device 14 of the rear wheels 2RL and 2RR side or a turn outer wheel is actually suspension-stroked), the compensation by the first compensation section (S6111) or the second compensation section (S6112) is easily performed before the wheel member 93a is rotated by the operation of the external force to more significantly suppress the camber angle of the wheel 2 from being changed from the predetermined camber angle.

Subsequently, referring to FIG. 32, the first compensation process (S6111) will be described. FIG. 32 is a flowchart illustrating the first compensation process. This process is executed in the compensation method determination process (see FIG. 31), and in this process, the angle of the wheel shaft (the axis O1 of the wheel member 93) in each wheel 2 (left and right rear wheels 2RL and 2RR) is compensated according to the suspension stroke amount of each suspension device 14.

The CPU 71 is associated with the first compensation process (S6111), and first judges whether the camber angle is being set, that is, whether the negative camber is being applied to the left and right rear wheels 2RL and 2RR (the chamber angle is changed from the first camber angle (0°) to the second camber angle (-3°) or the applying of the negative camber to the left and right rear wheels 2RL and 2RR is being cancelled (the camber angle is changed from the second camber angle (-3°) to the first camber angle (0°)) (S680).

As a result of the process of S680, when it is judged that the camber angle is being set (S680: Yes), although the axis O1 is not positioned on the straight line connecting the axis O2 and the axis O3, the camber angle adjusting device 45 returns to the first state or the second state by the aforementioned setting operation of the camber angle, and as a result, executing the compensation process by the process of S681 becomes unnecessary. Accordingly, in this case (S680: Yes), the process of S681 is skipped and the compensation process is terminated.

Meanwhile, as a result of the process of S680, when it is judged that the camber angle is not being set (S680: No), in a state where the axis O1 is not positioned on the straight line connecting the axis O2 and the axis O3, the process after S681 is executed in order to make the state to the state where the axis O1 is positioned on the straight line connecting the axis O2 and the axis O3.

That is, first, m = 1 is written in a value m (not illustrated) provided in the RAM 73 (S681). Further, in the compensation process, a first wheel (m = 1) is defined as the right rear wheel 2RR and a second wheel (m = 2) is defined as the left rear wheel 2RL, for convenience of description.

Subsequently, it is judged whether an m-th wheel on suspension stroke flag (a flag corresponding to the m-th wheel of the first wheel on stroke flag 73e2 and the second wheel on stroke flag 73f2) is on (S682). As a result, in the process of S682, when it is judged that the m-th wheel on suspension stroke flag is on (S682: Yes), a suspension stroke amount of the suspension device 14 in which the m-th wheel is in the second state (the state in which the negative camber is applied to the wheel 2) is equal to or more than the limit value (camber on threshold), and as a result, the compensation angle (the angle θοn, see FIGS. 11(b) and 29(b)) of the camber angle adjusting device 45 is calculated at a side of suspending the m-th wheel (S683), and the wheel member 93a is rotated by the camber angle adjusting device 45 as large as the calculated angle θon, such that an angle of the wheel shaft (the axis 01 of the wheel member 93) in the m-th wheel is compensated (S684) and thereafter, the process of S688 is executed.

As a result, in the camber angle adjusting device 45 suspending the m-th wheel, the respective axes may be parallel to each other on the straight line in the order of the axis O2, the axis O1, and the axis O3 (see FIG. 29(b)), and thus although the force is applied from the upper arm 42 to the wheel member 93a, the rotation of the wheel member 93a may be restricted and the camber angle of the wheel 2 may be mechanically kept to the first camber angle. Accordingly, since the rotational force of the RL and RR motors 91RL and 91RR may be cancelled, the consumption energy is reduced.

Meanwhile, in the process of S682, when it is judged that the m-th wheel on suspension stroke flag is not on (that is off) (S682: No), it is judged whether the m-th wheel off suspension stroke flag (the flag corresponding to the m-th wheel of the first wheel off stroke flag 73e1 and the second wheel off stroke flag 73f1) is off (S685).

As a result, in the process of S682, when it is judged that the m-th wheel off suspension stroke flag is on (S685: Yes), a suspension stroke amount of the suspension device 14 in which the m-th wheel is in the first state (the state in which the negative camber applied to the wheel 2 is cancelled) is equal to or more than the limit value (camber off threshold), and as a result, the compensation angle (the angle θoff, see FIGS. 11(a) and 29(a)) of the camber angle adjusting device 45 is calculated at the side of suspending the m-th wheel (S686), and the wheel member 93a is rotated by the camber angle adjusting device 45 as large as the calculated angle θoff, such that the angle of the wheel shaft (the axis O1 of the wheel member 93) in the m-th wheel is compensated (S687) and thereafter, the process of S688 is executed.

As a result, in the camber angle adjusting device 45 suspending the m-th wheel, the respective axes may be parallel to each other on the straight line in the order of the axis O1, the axis O2, and the axis O3 (see FIG. 29(a), and thus although the force is applied from the upper arm 42 to the wheel member 93a, the rotation of the wheel member 93a may be restricted and the camber angle of the wheel 2 may be mechanically kept to the first camber angle. Accordingly, since the rotational force of the RL and RR motors 91RL and 91RR may be cancelled, the consumption energy is reduced.

Herein, the case of the first state and the case of the second state (see FIG. 11) are the same as each other in the suspension stroke amount of the suspension device 14, both cases are different in the suspension stroke amount of the suspension device 14 which may be allowed to restrict the rotation of the wheel member 93a by the mechanical friction force. As a result, the first state and the second state are based on the same threshold because in the first state, each of the motors 91RL and 91RR is unnecessarily operated even in a range to restrict the rotation of the wheel member 93a by the mechanical friction force, and as a result, the consumption energy is increased, while in the second state, the compensation process by each of the motors 91RL and 91RR is not performed and the wheel member 93a is rotated by the force received from the upper arm 42, even over the range to restrict the rotation of the wheel member 93a by the mechanical friction force,, and as a result, the camber angle of the wheel 2 is changed.

In this regard, in the embodiment, different thresholds (camber off threshold and camber on threshold) are set in the respective cases of the first and second states, and it is judged whether the suspension stroke amount of each suspension device 14 is more than the limit value (each flag is turned on/off) based on the respective thresholds (see FIG. 29), and as a result, the camber angle of each wheel 2 may be compensated at a timing appropriate to each of the first and second states. As a result, an unnecessary operation of each of the motors 91RL and 91RR may be suppressed and the consumption energy may be efficiently reduced, and simultaneously, the rotation of the wheel member 93a by the force received from the upper arm 42 and the change in the camber angle of the wheel 2 may be efficiently suppressed.

In particular, in the embodiment, since the value of the threshold (camber on threshold) in the second state is set to the value smaller than the value of the threshold (camber off threshold) in the first state, the angle θon is compensated by operating each of the motors 91RL and 91RR below the range to restrict the rotation of the wheel member 93a by the mechanical friction force and the rotation of the wheel member 93a by the force received from the upper arm 42 may be significantly restricted, in the second state in which the limit value of the suspension stroke amount of the suspension device 14 is low. As a result, the change in the camber angle may be significantly suppressed. Meanwhile, in the first state in which the limit value of the suspension stroke amount of the suspension device 14 is high, each of the motors 91RL and 91RR may be suppressed from being unnecessarily operated even in the range to restrict the rotation of the wheel member 93a by the mechanical friction force with respect to the force received from the upper arm 42, and the consumption energy may be reduced.

Further, in the process of each of S684 and S687, in the case of the compensation of the angle of the wheel shaft (the axis O1 of the wheel member 93) in each wheel 2, the wheel member 93a is rotated such that the respective shafts O1 to O3 are parallel to each other on the straight line, and as a result, although the force is applied from the upper arm 42 to the wheel member 93a, the wheel member 93a may be significantly restricted from being rotated. Accordingly, thereafter, even when the suspension stroke of the suspension device 14 is generated, re-execution of the compensation may be minimized. As a result, while the change in the camber angle of the wheel 2 is suppressed, the operation of each of the motors 91RL and 91RR may be efficiently suppressed and the consumption energy may be reduced.

In the process of S685, when it is judged that the m-th wheel off suspension stroke flag is not on (that is, off) (S685: No), the suspension stroke amount of the suspension device 14 suspending the m-th wheel without following the first state or the second state has not yet reached the limit value (that is, the camber off threshold and camber on threshold), and the compensation of the camber angle by the camber angle adjusting device 45 of the m-th wheel need not be performed, and thus the process of S688 is executed without executing the process of each of S683, S684, S686, and S687.

In this way, when it is judged that the value of the suspension stroke of the suspension device 14 does not reach the predetermined threshold (camber off threshold and camber on threshold) (that is, when the mechanical friction force is stronger than the force component to rotate the wheel member 93a in the force received from the upper arm 42 and the rotation of the wheel member 93a may be restricted by the mechanical friction force), the compensation of the camber angle (S683, S684, S686, and S687) by the camber angle adjusting device 45 is not performed, and as a result, the unnecessary operation of each of the motors 91RL and 91RR may be suppressed and the consumption energy may be reduced.

In the process of S688, it is judged whether the value m provided in the RAM 73 reaches 2 (S688). As a result, when the value m does not reach 2 (that is, m = 1) (S688: No), each of the processes (S682 to S687) for the second wheel (left rear wheel 2RL) is not executed, and as a result, m = m + 1 is written in the value m (S689) and thereafter, the process of S682 is executed, in order to execute each of the processes even with respect to the second wheel. Meanwhile, when the value m reaches 2 (that is, m = 2) (S688: Yes), executing of each of the processes S682 to S687 for the first and second wheels (that is, the left and right rear wheels 2RL and 2RR) is completed, and as a result, the compensation process is terminated.

Subsequently, referring to FIG. 33, the second compensation process (S6112) will be described. FIG. 33 is a flowchart illustrating the second compensation process. This process is executed within the aforementioned compensation method determination process (see FIG. 31), and in this process, the rotation of the wheel member 93a is restricted and the camber angle of the wheel 2 is suppressed from being changed.

The CPU 71 is associated with the second compensation process (S6112), and first, judges whether the camber angle is being set (S691). That is, in order to apply the negative camber to the left and right rear wheels 2RL and 2RR (change the camber angle from the first camber angle (0°) to the second camber angle (-3°)) or contrary to this, cancel the applying of the negative camber to the left and right rear wheels 2RL and 2RR (change the camber angle from the second camber angle (-3°) to the first camber angle (0°)), each of the motors 91RL and 91RR of the camber angle adjusting device 45 is rotated to judge whether the wheel member 93a is rotated by the driving force (S691).

As a result of the process of S691, when it is judged that the camber angle is not being set (S691: No), the setting operation of setting the camber angles of the left and right rear wheels 2RL and 2RR to the first camber angle or the second camber angle is terminated and the wheel member 93a has already stopped (that is, set to the first state or the second state), and as a result, the servo lock of the camber angle adjusting device 45 (the RL motor 91RL and the RR motor 91RR) is turned on (S692) in order to suppress the wheel member 93a from being rotated (the rotational position from being misaligned) by the operation of the external force and thereafter, the second compensation process (S6112) is terminated.

As a result, the rotation of the wheel member 93a may be restricted while the camber angle adjusting device 45 (RL motor 91RL and RR motor 91RR) is subjected to the servo lock. Accordingly, the wheel member 93a is suppressed from being rotated from the first state or the second state (the rotational position from being misaligned) with respect to the external force input into the wheel member 93a from the wheel 2 (left and right rear wheels 2RL and 2RR) through the upper arm 42, and the camber angle of the wheel 2 may be suppressed from being changed from the first camber angle or the second camber angle.

In this case, since the wheel member 93a is in the first state or the second state, the straight line connecting the axis O3 and the axis O2 and the tangent line on the axis O2 of the rotation trajectory TR (see FIG. 3(b)) of the axis O2 may be close to the right angle, in the general travelling state. Accordingly, even when the force is applied from the upper arm 42 to the wheel member 93a, the force component to rotate the wheel member 93a may be suppressed from being generated, and as a result, the rotation of the wheel member 93a may be restricted even by the mechanical friction force. As such, since the rotation of the wheel member 93a may be restricted even by the mechanical friction force in addition to the rotation restriction by the servo lock, the consumption energy of each of the motors 91RL and 91RR consumed for the servo lock may be suppressed as much.

Meanwhile, in the process of S691, when it is judged that the camber angle is being set (S691: Yes), the servo lock of the camber angle adjusting device 45 (the RL motor 91RL and the RR motor 91RR) is turned off in order to prevent the setting operation of setting the camber angles of the left and right rear wheels 2RL and 2RR to the first camber angle or the second camber angle from being interfered (S693) and thereafter, the second compensation process is terminated.

Further, in the second compensation process (S6112), since the restriction of the rotation of the wheel member 93a by setting the camber angle adjusting device 45 (the RL motor 91RL and the RR motor 91RR) to the servo lock state is performed constantly when it is judged that the setting operation of the camber angle is completed, the wheel member 93a may be prevented from being rotated by the operation of the external force and the camber angle of the wheel 2 may be significantly suppressed from being changed.

Further, since the rotation of the wheel member 93a is configured to be restricted by setting the camber angle adjusting device 45 (the RL motor 91RL and the RR motor 91RR) to the servo lock state, the camber angle adjusting device 45 may serve as both an actuator that rotates the wheel member 93a in order to a camber angle and an actuator that restricts the rotation of the wheel member 93a in order to suppress the change in the camber angle. That is, since the rotation of the wheel member 93a may be restricted and the change in the camber angle may be suppressed by using the existing actuator for adjusting the camber angle, other components (for example, a mechanical brake device, and the like) for restricting the rotation of the wheel member 93a need not be additionally provided, and a product cost may be reduced and a decrease in weight may be achieved. Further, since the rotation of the wheel member 93a is configured to be restricted by using the servo lock, high responsiveness may be acquired. Accordingly, since it is possible to shorten a response time until the rotation of the wheel member 93 is restricted after receiving a command, the change in camber angle of the wheel 2 may be suppressed more significantly.

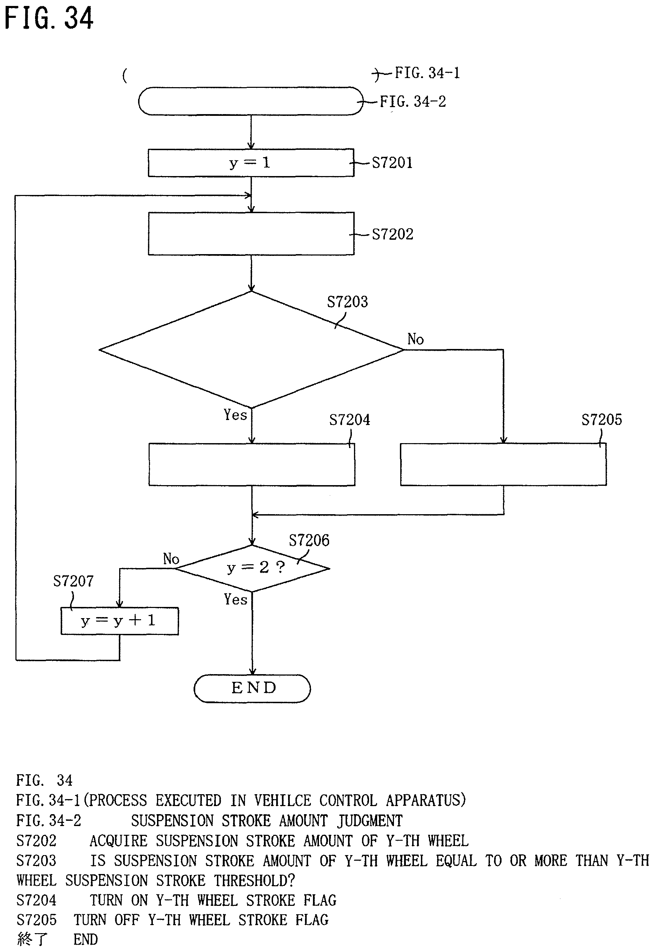

Subsequently, referring to FIGS. 34 to 35, a vehicle control apparatus in a seventh embodiment will be described. In the sixth embodiment, in the second compensation process, the case has been described, in which the servo lock of the RL and RR motors 91RL and 91RR is turned on constantly after the setting operation of the camber angle is completed, but in the seventh embodiment, in the second compensation process, when the setting operation of the camber angle is completed and the suspension stroke amount is equal to or more than the threshold, the servo lock of the RL and RR motors 91RL and 91RR is turned on.

In addition, the vehicle control apparatus in the seventh embodiment has the vehicle 1 described in the first embodiment as a control target and includes the same components as the vehicle control apparatus 600. Further, the same reference numerals refer to the same elements as each embodiment described above and a description thereof will be omitted.

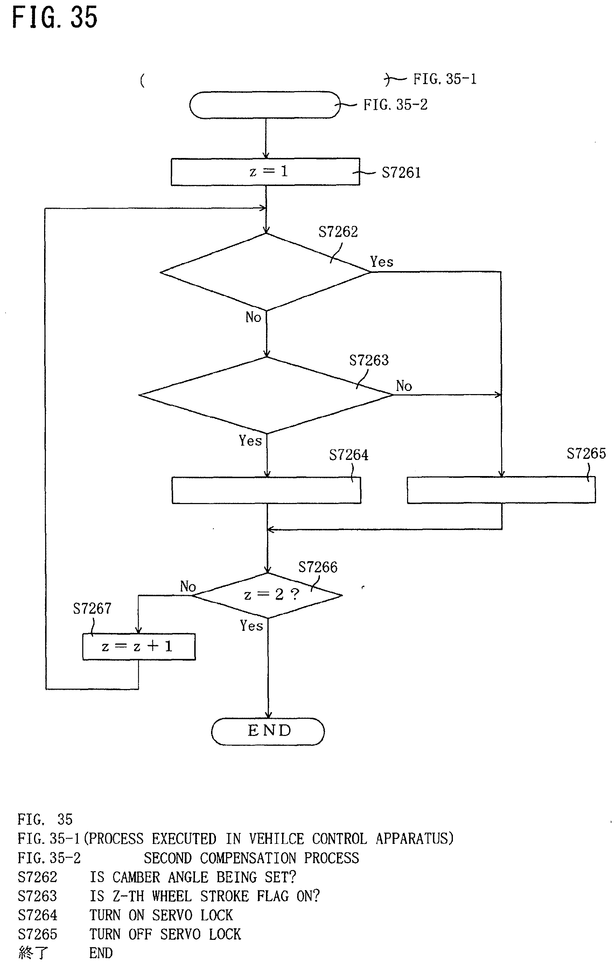

Herein, the vehicle control apparatus in the embodiment includes the driving control circuit illustrated in FIG. 6 similarly as the case of the first embodiment. That is, when the camber angle of the wheel 2 (left and right rear wheels 2RL and 2RR) is adjusted to the first camber angle or the second camber angle, and the camber angle adjusting device 45 (see FIG. 3) is set to the first state or the second state, the aforementioned short circuit is formed. Further, when the servo lock is turned on (see S7264 of FIG. 35), the formation of the short circuit is cancelled and the short circuit is formed with turn-off of the servo lock (see S7265 of FIG. 35). As a result, similarly as the case of the first embodiment, the brake may be put on the rotation of the wheel member 93a.

FIG. 34 is a flowchart illustrating judgment of the suspension stroke amount in the seventh embodiment. This process is executed repeatedly (for example, at an interval of 0.2 seconds) by the CPU 71 while the power of the vehicle control apparatus is input and in this process, it is judged whether the stretching amount (suspension stroke) of the suspension device 14 suspending the left and right rear wheels 2RL and 2RR is more than a predetermined threshold.

The CPU 71 is associated with the judgment of the suspension stroke amount, and first writes y = 1 in a value y (not illustrated) provided in the RAM 73 (S7201) and acquires a suspension stroke amount of a y-th wheel (S7202). Further, in the suspension stroke amount judgment, a first wheel (y = 1) is defined as the right rear wheel 2RR and a second wheel (y = 2) is defined as the left rear wheel 2RL, for convenience of description.

Subsequently, it is judged whether the suspension stroke amount of the suspension device 14 suspending the y-th wheel is equal to or more than a suspension stroke threshold (S7203). Herein, the 'suspension stroke threshold' is a limit value of the stretching amount of the suspension device 14 capable of restricting the rotation of the wheel member 93a by the mechanical friction force with respect to the external force input from the upper arm 42 when the suspension device 14 is stretched (see FIGS. 11 and 28).

Therefore, when the suspension stroke amount of the suspension device 14 does not reach the suspension stroke threshold, although assumed maximum external force works on the wheel 2, the rotation of the wheel member 93a is restricted by the mechanical friction force (although the rotational force by each of the motors 91RL and 91RR is cancelled, the wheel member 93a is not rotated). Further, the suspension stroke threshold is acquired as a measurement value by a test (a test of acquiring a suspension stroke of a rotation limit of the wheel member 93a when the assumed maximum external force works on the wheel 2) using the actual vehicle, and is previously stored in the ROM 72.

In the process of S7203, when it is judged that the suspension stroke amount of the y-th wheel is equal to or more than the suspension stroke threshold (S7203: Yes), the suspension stroke amount of the suspension device 14 suspending the y-th wheel is more than a limit value, and as a result, a y-th wheel stroke flag (a flag corresponding to the y-th wheel of the first wheel stroke flag 73g1 and the second wheel stroke flag 73g2) is turned on (S7204), and the process of S7206 is executed.

Meanwhile, in the process of S7203, when it is judged that the suspension stroke amount of the y-th wheel is not equal to or more than the suspension stroke threshold (that is, does not reach the suspension stroke threshold) (S7203: No), the suspension stroke amount of the suspension device 14 suspending the y-th wheel does not reach the limit value, and as a result, the y-th wheel stroke flag (the flag corresponding to the y-th wheel of the first wheel stroke flag 73g1 and the second wheel stroke flag 73g2) is turned off (S7205), and the process of S7206 is executed.

In the process of S7206, it is judged whether the value y provided in the RAM 73 reaches 2 (S7206). As a result, when the value y does not reach 2 (that is, y = 1) (S7206: No), each of the processes (S7202 to S7205) for the second wheel (left rear wheel 2RL) is not executed, and as a result, y = y + 1 is written in the value y (S7207) and thereafter, the process of S7202 is executed, in order to execute each of the processes even with respect to the second wheel. Meanwhile, when the value y reaches 2 (that is, y = 2) (S7206: Yes), executing of each process (S7202 to S7205) for the first and second wheels (that is, the left and right rear wheels 2RL and 2RR) is completed, and as a result, the judgment of the suspension stroke amount is terminated.

Subsequently, referring to FIG. 35, the second compensation process will be described. FIG. 35 is a flowchart illustrating the second compensation process. This process is executed within the aforementioned compensation method determination process (see FIG. 31), and in this process, the servo lock states of the RL and RR motors 91RL and 91RR are switched according to the suspension stroke amount of each suspension device 14.

The CPU 71 is associated with the second compensation process, and first writes z = 1 in a value z (not illustrated) provided in the RAM 73 (S7261). Further, in the second compensation process, a first wheel (z = 1) is defined as the right rear wheel 2RR and a second wheel (z = 2) is defined as the left rear wheel 2RL, for convenience of description.

After the process of S7261, it is judged whether the camber angle is being set (S7262). That is, in order to apply the negative camber to the left and right rear wheels 2RL and 2RR (change the camber angle from the first camber angle (0°) to the second camber angle (-3°)) or contrary to this, cancel the applying of the negative camber to the left and right rear wheels 2RL and 2RR (change the camber angle from the second camber angle (-3°) to the first camber angle (0°)), each of the motors 91RL and 91RR of the camber angle adjusting device 45 is rotated to judge whether the wheel member 93a is rotated by the driving force (S7262).

As a result of the process of S7262, when it is judged that the camber angle is not being set (S7262: No), the setting operation of setting the camber angles of the left and right rear wheels 2RL and 2RR to the first camber angle or the second camber angle is terminated and the wheel member 93a has already stopped (that is, set to the first state or the second state).

Therefore, in this case (S7262: No), it is judged whether a z-th wheel stroke flag (a flag corresponding to a z-th wheel of the first wheel stroke flag 73g1 and the second wheel stroke flag 73g2) is on (S7263), and when it is judged that the z-th wheel stroke flag is on (S7263: Yes), the servo lock of the camber angle adjusting device 45 (the RL motor 91RL or the RR motor 91RR) corresponding to the z-th wheel is turned on (S7264), and the process of S7266 is executed. As a result, the unnecessary operation of the RL motor 91RL or the RR motor 91RR may be suppressed while the rotation of the wheel member 93a (the rotational position is misaligned) by the operation of the external force is suppressed, and the consumption energy may be reduced.

That is, from the state in which the axis O1 is positioned on the straight line connecting the axis O2 and the axis O3, when the axis O1 is not positioned on the straight line connecting the axis O2 and the axis O3 by the suspension stroke of the suspension device 14 with the vertical movement of the carrier member 41, the straight line connecting the axis O2 and the axis O3, and the tangent line on the axis O2 of the rotation trajectory TR of the axis O2 do not form the right angle (see FIGS. 11 and 28), but when the suspension stroke amount of the suspension device 14 with the vertical movement of the carrier member 41 is comparatively small, the variation in the angle formed by the straight line connecting the axis O2 and the axis O3, and the tangent line on the axis O2 of the rotation trajectory TR of the axis O2 is comparatively small, and as a result, the force component to rotate the wheel member 93a in the force applied from the upper arm 42 to the wheel member 93a also becomes comparatively smaller. As a result, the mechanical friction force is stronger than the force component to rotate the wheel member 93a and the rotation of the wheel member 93a may be kept in a restriction state (a state to be resistant to the external force). Therefore, even in this case, the RL motor 91RL or the RR motor 91RR is driven to restrict the rotation of the wheel member 93a, and as a result, the RL motor 91RL or the RR motor 91RR is unnecessarily operated.

Accordingly, in the embodiment, when it is judged that the value of the suspension stroke amount of the suspension device 14 with the vertical movement of the carrier member 41 is equal to or more than the suspension stroke threshold (that is, as the case in which the z-th wheel stroke flag is turned on, when it is judged that the displacement amount (suspension stroke amount) of the carrier member 41 is large not to restrict the rotation of the wheel member 93a only by the mechanical friction force when predetermined external force is input) (S7263: Yes), the servo lock is turned on (S7264) and the rotation of the wheel member 93a is restricted, and as a result, the unnecessary operation of the RL motor 91RL or the RR motor 91RR may be suppressed and the consumption energy may be reduced.

Further, in this way, when it is judged that the value of the suspension stroke amount of the suspension device 14 with the vertical movement of the carrier member 41 is equal to or more than the suspension stroke threshold (S7263: Yes), the servo lock is turned on (S7264) and the rotation of the wheel member 93a is restricted to prevent the wheel member 93a from being rotated (the rotational position from being misaligned) by the operation of the external force and more significantly suppress the camber angle of the wheel 2 from being changed.

Meanwhile, as a result of the process of S7262, when it is judged that the camber angle is being set (S7262: Yes), the servo lock of the camber angle adjusting device 45 (the RL motor 91RL and the RR motor 91RR) is turned off in order to prevent the setting operation of setting the camber angles of the left and right rear wheels 2RL and 2RR to the first camber angle or the second camber angle from being interfered (S7265) and thereafter, the process of S7266 is executed.

Further, in the process of S7263, when it is judged that the z-th wheel stroke flag is not on, that is, off (S7263: No), it is considered that the suspension stroke amount of the suspension device 14 with the vertical movement of the carrier member 41 is comparatively small and the rotation of the wheel member 93a may be kept in a restriction state (a state to be resistant to the external force) by the mechanical friction force, and as a result, the servo lock of the camber angle adjusting device 45 (the RL motor 91RL and the RR motor 91RR) is turned off in order to prevent the RL motor 91RL or the RR motor 91RR from being unnecessarily operated (S7265), and the process of S7266 is executed.

In the process of S7266, it is judged whether the value z provided in the RAM 73 reaches 2 (S7266). As a result, when the value z does not reach 2 (that is, z = 1) (S7266: No), each of the processes (S7262 to S7265) for the second wheel (left rear wheel 2RL) is not executed, and as a result, z = z + 1 is written in the value z (S7267) and thereafter, the process of S7262 is executed, in order to execute each of the processes even with respect to the second wheel. Meanwhile, when the value z reaches 2 (that is, z = 2) (S7266: Yes), executing of each process (S7262 to S7265) for the first and second wheels (that is, the left and right rear wheels 2RL and 2RR) is completed, and as a result, the second compensation process is terminated.

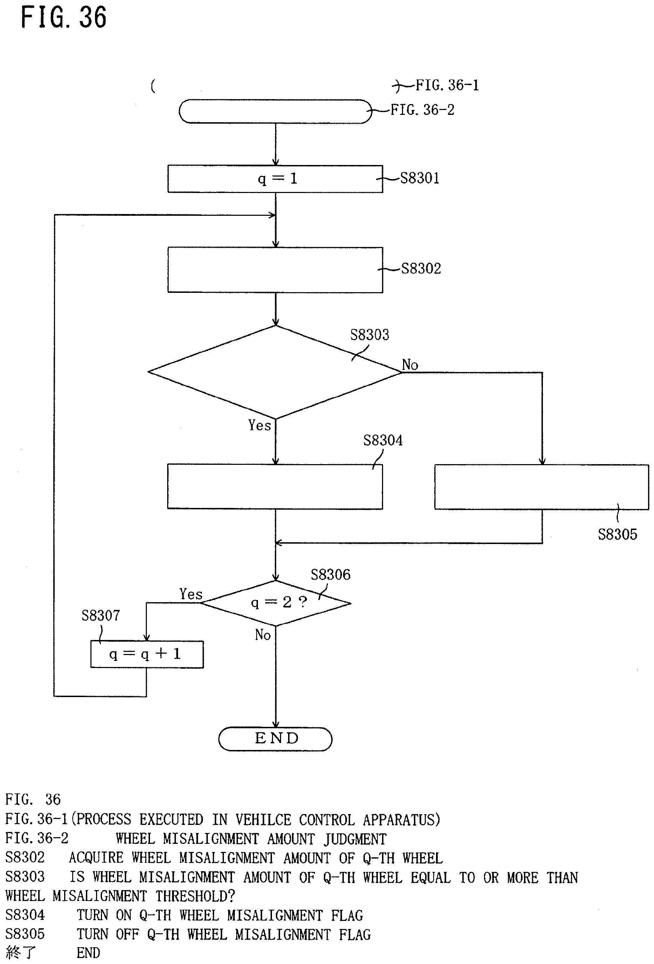

Subsequently, referring to FIGS. 36 to 37, a vehicle control apparatus in an eighth embodiment will be described. In the sixth embodiment, in the second compensation process, the case has been described, in which the servo lock of the RL and RR motors 91RL and 91RR is turned on constantly after the setting operation of the camber angle is completed, but in the eighth embodiment, in the second compensation process, when the setting operation of the camber angle is completed and the rotation amount (misalignment amount) of the wheel member 93a by the operation of the external force is equal to or more than a threshold, the servo lock of the RL and RR motors 91RL and 91RR is turned on.

Further, the vehicle control apparatus in the eighth embodiment has the vehicle 1 described in the first embodiment as a control target and includes the same components as the vehicle control apparatus 600. Further, the same reference numerals refer to the same elements as each embodiment described above and a description thereof will be omitted.

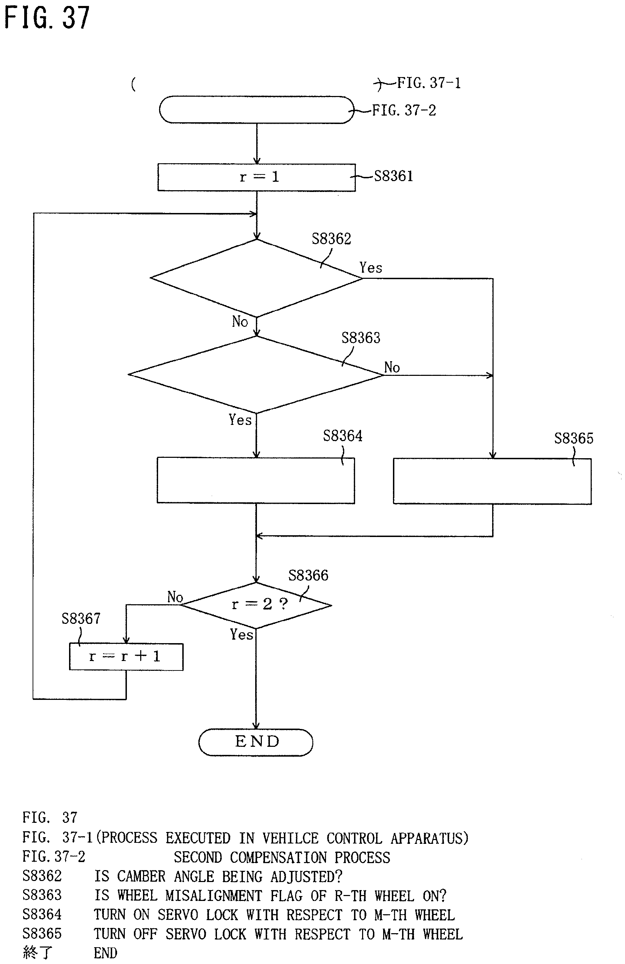

Herein, the vehicle control apparatus in the embodiment includes the driving control circuit illustrated in FIG. 6 similarly as the case of the first embodiment. That is, when the camber angle of the wheel 2 (left and right rear wheels 2RL and 2RR) is adjusted to the first camber angle or the second camber angle, and the camber angle adjusting device 45 (see FIG. 3) is set to the first state or the second state, the aforementioned short circuit is formed. Further, when the servo lock is turned on (see S8364 of FIG. 37), the formation of the short circuit is cancelled and the short circuit is formed with turn-off of the servo lock (see S8365 of FIG. 37). As a result, similarly as the case of the first embodiment, the brake may be put on the rotation of the wheel member 93a.

FIG. 36 is a flowchart illustrating judgment of the wheel misalignment amount in the eighth embodiment. This process is executed repeatedly (for example, at an interval of 0.2 seconds) by the CPU 71 while the power of the vehicle control apparatus is input, and in this process, it is judged whether the rotation amount (misalignment amount) of the wheel member 93a by the operation of the external force is more than the predetermined threshold.

The CPU 71 is associated with the judgment of the wheel misalignment amount, and first writes q = 1 in a value q (not illustrated) provided in the RAM 73 (S8301) and acquires a wheel misalignment amount of the wheel member 93a in the suspension device 14 suspending a q-th wheel (S8302). Herein, the wheel misalignment amount is a rotation amount from the initial position when the wheel member 93a is rotated (misaligned) by the operation of the external force while the state in which the rotational position (phase) of the wheel member 93a is adjusted to the first state or the second state is set as the initial position. Further, in the wheel misalignment amount judgment, a first wheel (q = 1) is defined as the right rear wheel 2RR and a second wheel (q = 2) is defined as the left rear wheel 2RL, for convenience of description.

Subsequently, it is judged whether the wheel misalignment amount of the wheel member 93a in the suspension device 14 suspending the q-th wheel is equal to or more than a wheel misalignment threshold (S8303). Herein, the 'wheel misalignment threshold' is a limit value of the wheel misalignment amount of the wheel member 93a capable of restricting the rotation of the wheel member 93a by the mechanical friction force when predetermined intensity of external force (reference external force) is input from the upper arm 42 with respect to the wheel member 93a in a state in which the suspension device 14 is not suspension-stroked (that is, the general traveling state in which external force other than the weight of the vehicle 1 does not work).

Therefore, when the wheel misalignment amount of the wheel member 93a does not reach the wheel misalignment threshold, although the reference external force works on the wheel 2, the rotation of the wheel member 93a is restricted by the mechanical friction force (although the rotational force by each of the motors 91RL and 91RR is cancelled, the wheel member 93a is not rotated). Further, the wheel misalignment threshold is acquired as a measurement value by a test (a test of acquiring a wheel misalignment amount of a rotation limit of the wheel member 93a when the reference external force works on the wheel 2) using the actual vehicle, and is previously stored in the ROM 72.

In the process of S8303, when it is judged that the wheel misalignment amount of the q-th wheel is equal to or more than the wheel misalignment threshold (S8303: Yes), the wheel misalignment amount of the wheel member 93a in the suspension device 14 suspending the q-th wheel is more than the limit value, and as a result, a q-th wheel misalignment flag (a flag corresponding to the q-th wheel of a first wheel misalignment flag 673h1 and a second wheel misalignment flag 673h2) is turned on (S8304) and the process of S8306 is executed.

Meanwhile, in the process of S8303, when it is judged that the wheel misalignment amount of the q-th wheel is not equal to or more than the wheel misalignment threshold (that is, does not reach the wheel misalignment threshold) (S7203: No), the wheel misalignment amount of the wheel member 93a in the suspension device 14 suspending the q-th wheel does not reach the limit value, and as a result, the q-th wheel misalignment flag (the flag corresponding to the q-th wheel of the first wheel misalignment flag 673h1 and the second wheel misalignment flag 673h2) is turned off (S8305) and the process of S8306 is executed.

In the process of S8306, it is judged whether the value q provided in the RAM 73 reaches 2 (S8306). As a result, when the value q does not reach 2 (that is, q = 1) (S8306: No), each of the processes (S8302 to S8305) for the second wheel (left rear wheel 2RL) is not executed, and as a result, q = q + 1 is written in the value q (S8307) and thereafter, the process of S8302 is executed, in order to execute each of the processes even with respect to the second wheel. Meanwhile, when the value q reaches 2 (that is, q = 2) (S8306: Yes), executing of each process (S8302 to S8305) for the first and second wheels (that is, the left and right rear wheels 2RL and 2RR) is completed, and as a result, the judgment of the suspension stroke amount is terminated.

Subsequently, referring to FIG. 37, the second compensation process will be described. FIG. 37 is a flowchart illustrating the second compensation process. This process is executed within the aforementioned compensation method determination process (see FIG. 31), and in this process, the servo lock states of the RL and RL motors 91RL and 91RR are switched according to the wheel misalignment amount of the wheel member 93a in each suspension device 14.

The CPU 71 is associated with the second compensation process, and first writes r = 1 in a value r (not illustrated) provided in the RAM 73 (S8361). Further, in the second compensation process, a first wheel (r = 1) is defined as the right rear wheel 2RR and a second wheel (r = 2) is defined as the left rear wheel 2RL, for convenience of description.

After the process of S8361, it is judged whether the camber angle is being set (S8362). That is, in order to apply the negative camber to the left and right rear wheels 2RL and 2RR (change the camber angle from the first camber angle (0°) to the second camber angle (-3°)) or contrary to this, cancel the applying of the negative camber to the left and right rear wheels 2RL and 2RR (change the camber angle from the second camber angle (-3°) to the first camber angle (0°)), each of the motors 91RL and 91RR of the camber angle adjusting device 45 is rotated to judge whether the wheel member 93a is rotated by the driving force (S8362).

As a result of the process of S8362, when it is judged that the camber angle is not being set (S8362: No), the setting operation of setting the camber angles of the left and right rear wheels 2RL and 2RR to the first camber angle or the second camber angle is terminated and the wheel member 93a has already stopped (that is, set to the first state or the second state).

Therefore, in this case (S8362: No), it is judged whether an r-th wheel misalignment flag (a flag corresponding to an r-th wheel of the first wheel misalignment flag 673h1 or the second wheel misalignment flag 673h2) is on (S8363), and when it is judged that the r-th wheel misalignment flag is on (S8363: Yes), the servo lock of the camber angle adjusting device 45 (the RL motor 91RL or the RR motor 91RR) corresponding to the r-th wheel is turned on (S8364), and the process of S8366 is executed. As a result, the unnecessary operation of the RL motor 91RL or the RR motor 91RR may be suppressed while the wheel member 93a is suppressed from being rotated (the rotational position from being misaligned) by the operation of the external force, and the consumption energy may be reduced.

That is, from the state in which the axis O1 is positioned on the straight line connecting the axis O2 and the axis O3, when the wheel member 93a is rotated (the rotational position is misaligned) by the operation of the external force, and the axis O1 is not positioned on the straight line connecting the axis O2 and the axis O3, the straight line connecting the axis O2 and the axis O3, and the tangent line on the axis O2 of the rotation trajectory TR of the axis O2 do not form the right angle, but when the wheel misalignment amount of the wheel member 93a is comparatively small, the variation in the angle formed by the straight line connecting the axis O2 and the axis O3, and the tangent line on the axis O2 of the rotation trajectory TR of the axis O2 is comparatively small, and as a result, even the force component to rotate the wheel member 93a in the force increased from the upper arm 42 to the wheel member 93a becomes comparatively smaller. As a result, the mechanical friction force is stronger than the force component to rotate the wheel member 93a and the rotation of the wheel member 93a may be kept in a restriction state (a state to be resistant to the external force). Therefore, even in this case, the RL motor 91RL or the RR motor 91RR is driven to restrict the rotation of the wheel member 93a, and as a result, the RL motor 91RL or the RR motor 91RR is unnecessarily operated.

Accordingly, in the embodiment, when it is judged that the value of the wheel misalignment amount of the wheel member 93a by the operation of the external force is equal to or more than the wheel misalignment threshold (that is, when the r-th wheel misalignment flag is on and when it is judged that the wheel misalignment amount of the wheel member 93a is large not to restrict the rotation of the wheel member 93a by the mechanical friction force when predetermined external force is input) (S8363: Yes), the servo lock is turned on (S8364) to restrict the rotation of the wheel member 93a, and as a result, the unnecessary operation of the RL motor 91RL or the RR motor 91RR may be suppressed and the consumption energy may be reduced.

Meanwhile, as a result of the process of S8362, when it is judged that the camber angle is being set (S8362: Yes), the servo lock of the camber angle adjusting device 45 (the RL motor 91RL and the RR motor 91RR) is turned off in order to prevent the setting operation of setting the camber angles of the left and right rear wheels 2RL and 2RR to the first camber angle or the second camber angle from being interfered (S8365) and thereafter, the process of S8366 is executed.

Further, in the process of S8363, when it is judged that the r-th wheel misalignment flag is not on, that is, off (S8363: No), it is considered that the wheel misalignment amount of the wheel member 93a is comparatively small and the rotation of the wheel member 93a may be kept in the restriction state (a state to be resistant to the external force) by the mechanical friction force, and as a result, the servo lock of the camber angle adjusting device 45 (the RL motor 91RL and the RR motor 91RR) is turned off in order to prevent the RL motor 91RL or the RR motor 91RR from being unnecessarily operated (S8365), and the process of S8366 is executed.

In the process of S8366, it is judged whether the value r provided in the RAM 73 reaches 2 (S8366). As a result, when the value r does not reach 2 (that is, r = 1) (S8366: No), each of the processes (S8362 to S8365) for the second wheel (left rear wheel 2RL) is not executed, and as a result, r = r + 1 is written in the value r (S8367) and thereafter, the process of S8362 is executed, in order to execute each of the processes even with respect to the second wheel. Meanwhile, when the value r reaches 2 (that is, r = 2) (S8366: Yes), executing of each process (S8362 to S8365) for the first and second wheels (that is, the left and right rear wheels 2RL and 2RR) is completed, and as a result, the second compensation process is terminated.

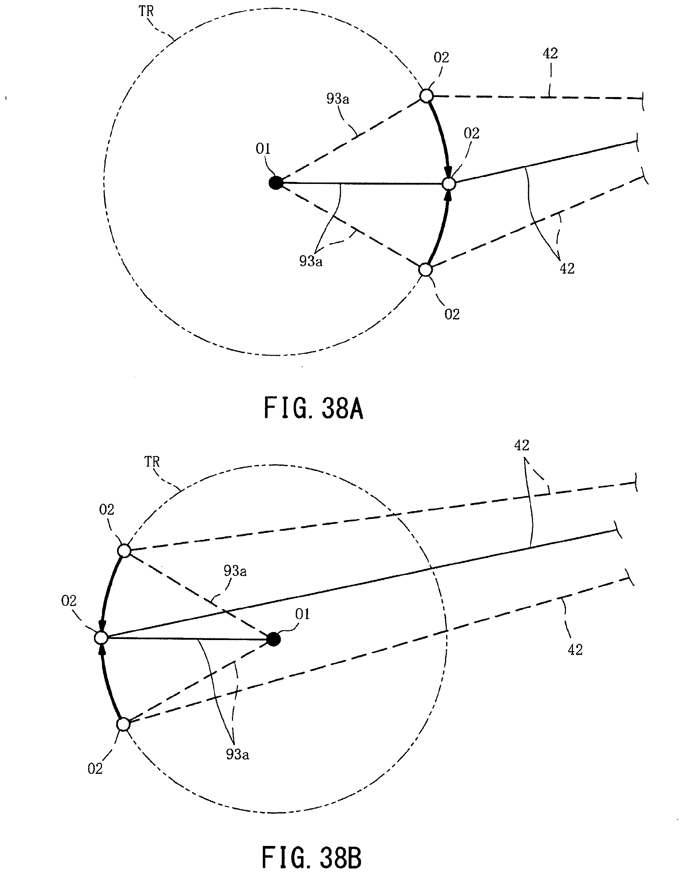

Subsequently, referring to FIGS. 38 to 40, a vehicle control apparatus in a ninth embodiment will be described. In the sixth embodiment, in the second compensation process, the case in which the servo lock of the RL and RR motors 91RL and 91RR is turned on to restrict the rotation of the wheel member 93a after the setting operation of the camber angle is completed has been described, but in the ninth embodiment, in the second compensation process, when the setting operation of the camber angle is completed and the rotation amount (misalignment amount) of the wheel member 93a by the operation of the external force is equal to or more than a threshold, the rotational position of the wheel member 93a is rotated to the initial position.

Further, the vehicle control apparatus in the ninth embodiment has the vehicle 1 described in the first embodiment as the control target and includes the same components as the vehicle control apparatus 600. Further, the same reference numerals refer to the same elements as each embodiment described above and a description thereof will be omitted.

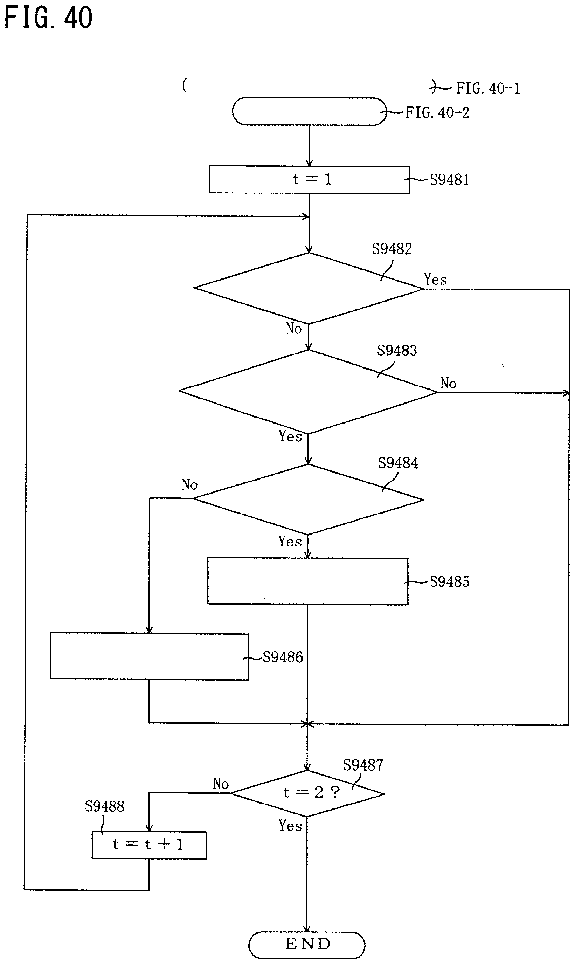

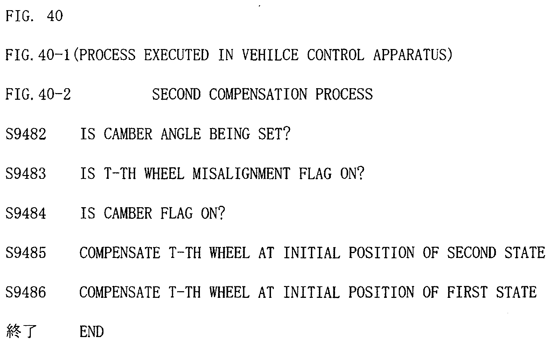

Herein, the vehicle control apparatus in the embodiment includes the driving control circuit illustrated in FIG. 6 similarly as the case of the first embodiment. That is, when the camber angle of the wheel 2 (left and right rear wheels 2RL and 2RR) is adjusted to the first camber angle or the second camber angle, and the camber angle adjusting device 45 (see FIG. 3) is set to the first state or the second state, the aforementioned short circuit is formed. Further, the formation of the short circuit is cancelled at the time of the compensation using the operation of the camber angle adjusting device 45 (see S9485 and S9486 of FIG. 40), and the short circuit is formed with the termination of the compensating operation. As a result, similarly as the case of the first embodiment, the brake may be put on the rotation of the wheel member 93a.

FIG. 38 is a mimetic diagram mimetically illustrating the suspension device 14 in the ninth embodiment, and FIGS. 38(a) and 38(b) mimetically illustrate the suspension device 14 in the first state and the suspension device 14 in the second state, respectively. Further, in FIGS. 38(a) and 38(b), a state (that is, a state before the wheel member 93a is rotated (the rotational position is misaligned) by the operation of the external force) corresponding to FIGS. 11(a) and 11(b) in which the suspension device 14 is contracted is expressed by the solid line and a state after the wheel member 93a is rotated (the rotational position is misaligned) by the operation of the external force from above state is expressed by the dotted line, respectively. That is, the state expressed by the dotted line in FIGS. 11(a) and 11(b) is expressed by the solid line in FIGS. 38(a) and 38(b).

As described above, when the displacement to move the carrier member 41 in the bound direction is input into the suspension device 14, the upper arm 42 is rotated around the axis O2 as the rotation center with the displacement of the carrier member 41 (see FIG. 11(a)). As a result, as expressed by the solid in FIG. 38(a), the axis O1, the axis O2, and the axis O3 are not parallel to each other on the straight line, and a straight line connecting the axis O1 and the axis O2 and a straight line connecting the axis O3 and the axis O2 form a predetermined angle.

Therefore, the straight line connecting the axis O3 and the axis O2 and the tangent line on the axis O2 of the rotation trajectory TR do not form a right angle. As a result, since force is applied from the upper arm 42 to the wheel member 93a, the force component that rotates the wheel member 93a is generated and the wheel member 93a rotates, and as a result, the camber angle of the wheel 2 is changed from the first camber angle.

That is, from the state expressed by the solid line in FIG. 38(a), when external force in a direction to press the upper arm 42 onto the wheel member 93a works on the wheel member 93a from the upper arm 42, a force component in a direction to move the axis O2 to the lower side of FIG. 38(a) is generated and the wheel member 93a is rotated clockwise in FIG. 38(a) by the force component. Meanwhile, when the external force in a direction to separate the upper arm 42 from the wheel member 93a works on the wheel member 93a from the upper arm 42, a force component in a direction to move the axis O2 to the upper side of FIG. 38(a) is generated and the wheel member 93a is rotated counterclockwise in FIG. 38(a) by the force component. As a result, as expressed by the dotted line in FIG. 38(a), the rotational position of the wheel member 93a is misaligned and the camber angle of the wheel 2 is changed from the first camber angle.

Therefore, in the embodiment, when the rotational position of the wheel member 93a is misaligned by the operation of the external force, in the second compensation process (see FIG. 40), compensation process of rotating the wheel member 93a in a reverse direction to the misalignment direction by the operation of the external force and returning the wheel member 93a to an initial position (that is, the position of the first state) is executed as expressed by an arrow in FIG. 38(a). As a result, the wheel member 93a may be placed at a position where the rotational restriction by the mechanical friction force is easily used and the consumption energy of the RL and RR motors 91RL and 91RR may be reduced. Further, since the rotation of the wheel member 93a at the initial position (the position of the first state) is performed in a direction in which the angle formed by the straight line connecting the axis O3 and the axis O2 and the tangent line on the axis O2 of the rotation trajectory TR of the axis O2 is close to the right angle particularly, in a state in which the suspension device 14 is not stretched (that is, the general traveling state in which external force other than the weight of the vehicle 1 does not work), driving force of the RL and RR motors 91RL and 91RR required for the rotation may be reduced and even in this regard, the consumption energy may be reduced.

Meanwhile, even in the second state, when the displacement to move the carrier member 41 in the bound direction is input into the suspension device 14, the upper arm 42 is rotated around the axis O2 as the rotation center (see FIG. 11(b)), and the straight line connecting the axis 01 and the axis O2 and the straight line connecting the axis O3 and the axis O2 form the predetermined angle as expressed by the solid in FIG. 38(b), similarly as in the first state. As a result, the straight line connecting the axis O3 and the axis O2 and the tangent line on the axis O2 of the rotation trajectory TR do not form the right angle, and when the force is applied from the upper arm 42 to the wheel member 93a, the wheel member 93a is rotated, and as a result, the camber angle of the wheel 2 is changed from the second camber angle.

That is, from the state expressed by the solid line in FIG. 38(b), when the external force in the direction to press the upper arm 42 onto the wheel member 93a works on the wheel member 93a from the upper arm 42, a force component in a direction to move the axis O2 to the lower side of FIG. 38(b) is generated and the wheel member 93a is rotated counterclockwise in FIG. 38(b) by the force component. Meanwhile, when the external force in a direction to separate the upper arm 42 from the wheel member 93a works on the wheel member 93a from the upper arm 42, a force component in a direction to move the axis O2 to the upper side of FIG. 38(b) is generated and the wheel member 93a is rotated clockwise in FIG. 38(b) by the force component. As a result, as illustrated by the dotted line in FIG. 38(b), the rotational position of the wheel member 93a is misaligned and the camber angle of the wheel 2 is changed from the first camber angle.

In the embodiment, even in this case, similarly as in the first state, in the second compensation process (see FIG. 40), compensation process of rotating the wheel member 93a in a reverse direction to the misalignment direction by the operation of the external force and returning the wheel member 93a to the initial position (that is, the position of the second state) is executed as expressed by the arrow in FIG. 38(b), and the consumption energy is reduced while restricting the rotation of the wheel member 93a.

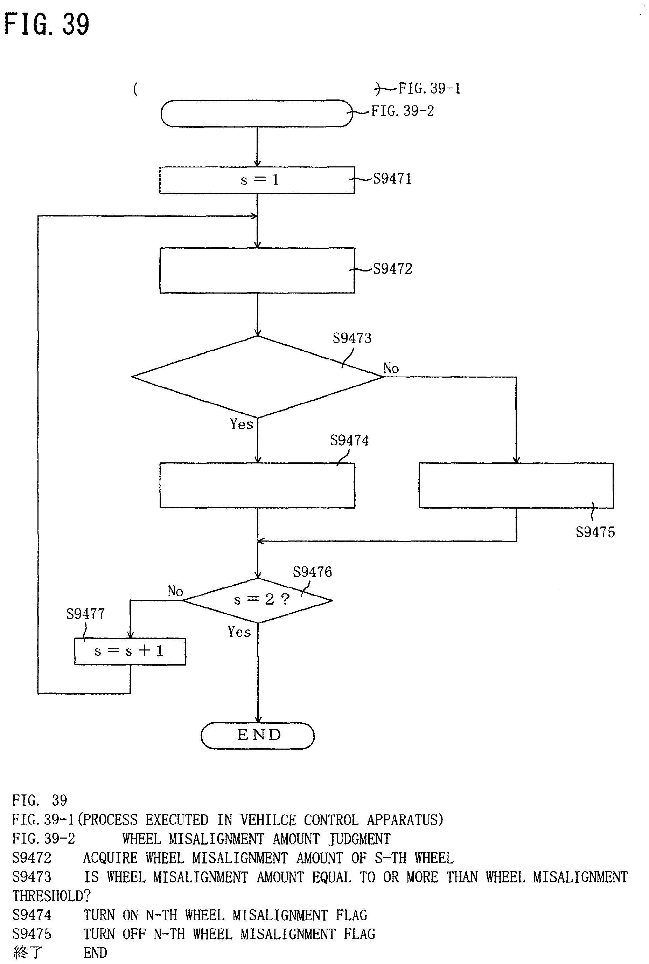

FIG. 39 is a flowchart illustrating judgment of the wheel misalignment amount. This process is executed repeatedly (for example, at an interval of 0.2 seconds) by the CPU 71 while the power of the vehicle control apparatus is input, and in this process, it is judged whether the rotation amount (misalignment amount) of the wheel member 93a by the operation of the external force is more than the predetermined threshold.

The CPU 71 is associated with the judgment of the wheel misalignment amount, and first writes s = 1 in a value s (not illustrated) provided in the RAM 73 (S9471) and acquires a wheel misalignment amount of the wheel member 93a in the suspension device 14 suspending an s-th wheel (S9472). Herein, the wheel misalignment amount is a rotation amount from the initial position when the wheel member 93a is rotated (misaligned) by the operation of the external force while the state in which the rotational position (phase) of the wheel member 93a is adjusted to the first state or the second state is set as the initial position. Further, in the wheel misalignment amount judgment, a first wheel (s = 1) is defined as the right rear wheel 2RR and a second wheel (s = 2) is defined as the left rear wheel 2RL, for convenience of description.

Subsequently, it is judged whether the wheel misalignment amount of the wheel member 93a in the suspension device 14 suspending the s-th wheel is equal to or more than the wheel misalignment threshold (S9473). Herein, the 'wheel misalignment threshold' is a limit value of the wheel misalignment amount of the wheel member 93a capable of restricting the rotation of the wheel member 93a by the mechanical friction force when predetermined intensity of external force (reference external force) is input from the upper arm 42 with respect to the wheel member 93a in a state in which the suspension device 14 is not suspension-stroked (that is, the general traveling state in which external force other than the weight of the vehicle 1 does not work).

Therefore, when the wheel misalignment amount of the wheel member 93a does not reach the wheel misalignment threshold, although the reference external force works on the wheel 2, the rotation of the wheel member 93a is restricted by the mechanical friction force (although the rotational force by each of the motors 91RL and 91RR is cancelled, the wheel member 93a is not rotated). Further, the wheel misalignment threshold is acquired as a measurement value by a test (a test of acquiring a wheel misalignment amount of a rotation limit of the wheel member 93a when the reference external force works on the wheel 2) using the actual vehicle, and is previously stored in the ROM 72.

In the process of S9473, when it is judged that the wheel misalignment amount of the s-th wheel is equal to or more than the wheel misalignment threshold (S9473: Yes), the wheel misalignment amount of the wheel member 93a in the suspension device 14 suspending the s-th wheel is more than the limit value, and as a result, an s-th wheel misalignment flag (a flag corresponding to the s-th wheel of the first wheel misalignment flag 673h1 and the second wheel misalignment flag 673h2) is turned on (S9474) and the process of S9476 is executed.

Meanwhile, in the process of S9473, when it is judged that the wheel misalignment amount of the s-th wheel is not equal to or more than the wheel misalignment threshold (that is, does not reach the wheel misalignment threshold) (S9473: No), the wheel misalignment amount of the wheel member 93a in the suspension device 14 suspending the s-th wheel does not reach the limit value, and as a result, the s-th wheel misalignment flag (the flag corresponding to the s-th wheel of the first wheel misalignment flag 673h1 and the second wheel misalignment flag 673h2) is turned off (S9475) and the process of S9476 is executed.

In the process of S9476, it is judged whether the value s provided in the RAM 73 reaches 2 (S9476). As a result, when the value s does not reach 2 (that is, s = 1) (S9476: No), each of the processes (S9472 to S9475) for the second wheel (left rear wheel 2RL) is not executed, and as a result, s = s + 1 is written in the value s (S9477) and thereafter, the process of S9472 is executed, in order to execute each of the processes even with respect to the second wheel. Meanwhile, when the value s reaches 2 (that is, s = 2) (S9476: Yes), executing of each process (S9472 to S9475) for the first and second wheels (that is, the left and right rear wheels 2RL and 2RR) is completed, and as a result, the judgment of the suspension stroke amount is terminated.

FIG. 40 is a flowchart illustrating the second compensation process. This process is executed in the aforementioned compensation method determination process (see FIG. 31), and in this process, the angle of the wheel shaft (the axis O1 of the wheel member 93) in each wheel 2 (left and right rear wheels 2RL and 2RR) is compensated according to the wheel misalignment amount of the wheel member 93a in each suspension device 14.

The CPU 71 is associated with the second compensation process, and first writes t = 1 in a value t (not illustrated) provided in the RAM 73 (S9481). Further, in the second compensation process, a first wheel (t = 1) is defined as the right rear wheel 2RR and a second wheel (t = 2) is defined as the left rear wheel 2RL, for convenience of description.

After the process of S9481, subsequently, it is judged whether the camber angle is being set (S9482). That is, in order to apply the negative camber to the left and right rear wheels 2RL and 2RR (change the camber angle from the first camber angle (0°) to the second camber angle (-3°)) or contrary to this, cancel the applying of the negative camber to the left and right rear wheels 2RL and 2RR (change the camber angle from the second camber angle (-3°) to the first camber angle (0°)), each of the motors 91RL and 91RR of the camber angle adjusting device 45 is rotated to judge whether the wheel member 93a is rotated by the driving force (S9482).

As a result of the process of S9482, when it is judged that the camber angle is not being set (S9482: No), a setting operation of setting the camber angles of the left and right rear wheels 2RL and 2RR to the first camber angle or the second camber angle ends and the wheel member 93a has already stopped (that is, set to the first state or the second state), and therefore subsequently, it is judged whether a t-th wheel misalignment flag (a flag corresponding to a t-th wheel of the first wheel misalignment flag 673h1 and the second wheel misalignment flag 673h2) is on (S9483).

As the result of the process of S9483, when it is judged that the t-th wheel misalignment flag is on (S9483: Yes), the wheel member 93a is rotated (the rotational position is misaligned) by the operation of the external force and the rotational position of the wheel member 93a needs to be compensated. Therefore, in this case (S9483: Yes), in order to determine whether to compensate the wheel member 93a to any state of the first state and the second state (see FIG. 28), it is judged whether the camber flag 73a is on (S9484).

As a result of the process of S9484, when it is judged that the camber flag 73a is on (S9484: Yes), before the wheel member 93a is rotated (the rotational position is misaligned) by the operation of the external force, the camber angle of the wheel 2 is adjusted to the second camber angle and the wheel member 93a is in the second state, and as a result, the wheel member 93a corresponding to the t-th wheel is compensated to the initial position (that is, the position of the second state) as expressed by the arrow in FIG. 28(b) (S9485) to execute the process of S9487.

Meanwhile, as the result of the process of S9484, when it is judged that the camber flag 73a is not on, that is, off (S9484: No), before the wheel member 93a is rotated (the rotational position is misaligned) by the operation of the external force, the camber angle of the wheel 2 is adjusted to the first camber angle and the wheel member 93a is in the first state, and as a result, the wheel member 93a corresponding to the t-th wheel is compensated to the initial position (that is, the position of the first state) as expressed by the arrow in FIG. 28(a) (S9486) to execute the process of S9487.

As a result, the wheel member 93a may be positioned (returned to) to the initial position (that is, the position of the first state or the second state) where the rotation is easily restricted by the mechanical friction force. That is, since the rotational position of the wheel member 93a is returned to the initial position to use the rotation restriction by the mechanical friction force again, the driving force of the RL and RR motors 91RL and 91RR may be cancelled, and as a result, the consumption energy may be reduced.

Further, in this way, since the rotation of the wheel member 93a at the initial position (the position of the first state or the second state) is performed in a direction in which the angle formed by the straight line connecting the axis O3 and the axis O2 and the tangent line on the axis O2 of the rotation trajectory TR of the axis O2 is close to the right angle particularly, in the state in which the suspension device 14 is not stretched (that is, the general traveling state in which external force other than the weight of the vehicle 1 does not work), the driving force of the RL and RR motors 91RL and 91RR required for the rotation may be reduced and even in this regard, the consumption energy may be reduced.

Further, as the compensation method in this case, the following method is also considered. That is, even by compensation which follows the displacement (rotation around the axis O2 as the rotation center) of the upper arm 42 accompanied by the vertical movement of the carrier member 41 and rotates the wheel member 93a such that the axis O1 is positioned on the straight line connecting the axis O2 and the axis O3, the rotation of the wheel member 93a may be restricted by the mechanical friction force. However, in this compensation method, since the wheel member 93a needs to be rotated with the displacement of the upper arm 42, high responsiveness is required to drive the RL and RR motors 91RL and 91RR and a driving time is lengthened, thereby increasing the consumption energy.

In this regard, in the embodiment, since the rotation of the wheel member 93a need not follow the displacement of the upper arm 42, the responsiveness to the driving of the RL and RR motors 91RL and 91RR is decreased and the driving time may be shortened, thereby reducing the consumption energy as much.

Herein, from the state in which the axis O1 is positioned on the straight line connecting the axis O2 and the axis O3, when the wheel member 93a is rotated (the rotational position is misaligned) by the operation of the external force, and the axis O1 is not positioned on the straight line connecting the axis O2 and the axis O3 (see FIG. 28), the straight line connecting the axis O2 and the axis O3, and the tangent line on the axis O2 of the rotation trajectory TR of the axis O2 do not form the right angle, but when the wheel misalignment amount of the wheel member 93a is comparatively small, a variation in the angle formed by the straight line connecting the axis O2 and the axis O3, and the tangent line on the axis O2 of the rotation trajectory TR of the axis O2 is comparatively small, and as a result, even the force component to rotate the wheel member 93a in force applied from the upper arm 42 to the wheel member 93a becomes comparative smaller. As a result, the mechanical friction force is stronger than the force component to rotate the wheel member 93a and the rotation of the wheel member 93a may be kept in a restriction state (a state to be resistant to the external force). Therefore, even in this case, the RL motor 91RL or the RR motor 91RR is driven and the compensation of returning the rotational position of the wheel member 93a to the initial position is performed, and as a result, the RL motor 91RL or the RR motor 91RR is unnecessarily operated.

Accordingly, in the embodiment, when it is judged that the value of the wheel misalignment amount of the wheel member 93a by the operation of the external force is equal to or more than the wheel misalignment threshold (S9484: Yes), the RL motor 91RL or the RR motor 91RR is driven and the compensation of returning the rotational position of the wheel member 93a to the initial position is performed (S9485 or S9486), and as a result, the unnecessary operation of the RL motor 91RL or the RR motor 91RR may be suppressed and the consumption energy may be reduced.

In the process of S9487, it is judged whether the value t provided in the RAM 73 reaches 2 (S9487). As a result, when the value t does not reach 2 (that is, T = 1) (S9487: No), each of the processes (S9482 to S9486) for the second wheel (left rear wheel 2RL) is not executed, and as a result, t = t + 1 is written in the value t (S9488) and thereafter, the process of S9482 is executed, in order to execute each of the processes even with respect to the second wheel. Meanwhile, when the value t reaches 2 (that is, t = 2) (S9487: Yes), executing of each process (S9482 to S9486) for the first and second wheels (that is, the left and right rear wheels 2RL and 2RR) is completed, and as a result, the second compensation process is terminated.

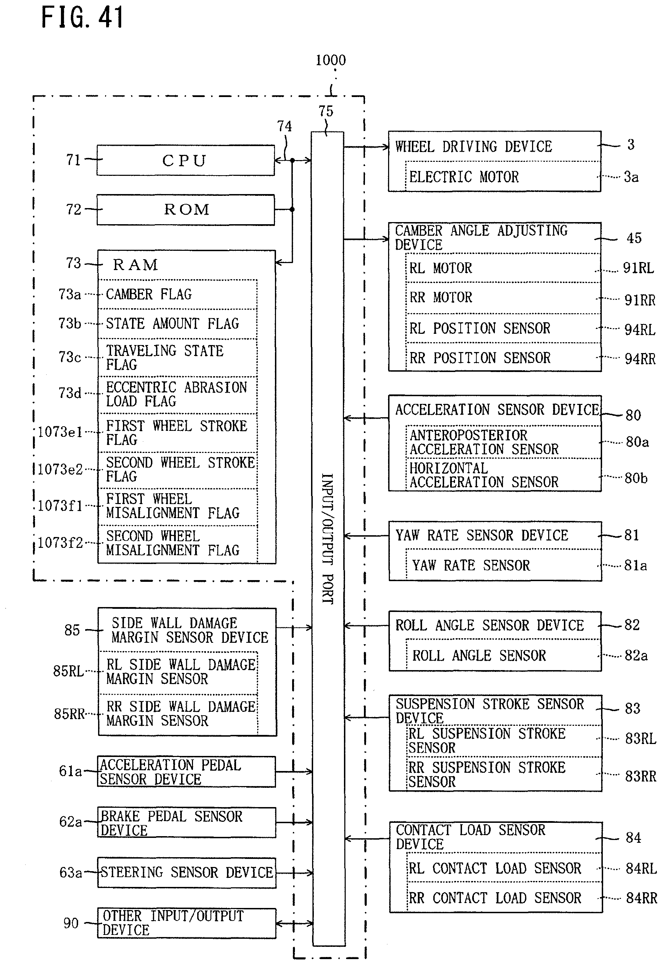

Subsequently, referring to FIGS. 41 to 43, a tenth embodiment will be described. Further, in the tenth embodiment, a case in which the vehicle 1 in the first embodiment is controlled by a vehicle control apparatus 1000 will be described as an example. Further, the same reference numerals refer to the same elements as the first embodiment and a description thereof will be omitted.

FIG. 41 is a block diagram illustrating an electrical configuration of the vehicle control apparatus 1000 in the tenth embodiment. A first wheel stroke flag 1073e1, a second wheel stroke flag 1073e2, a first wheel misalignment flag 1073fl, and a second wheel misalignment flag 1073f2 are provided in the RAM 73.

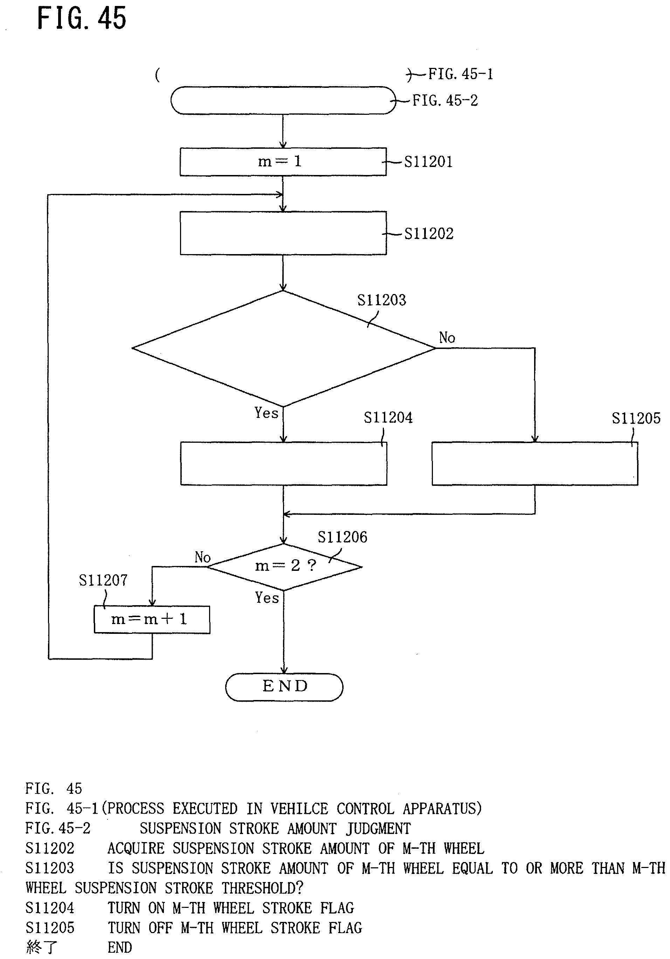

The first wheel stroke flag 1073e1 is a flag indicating whether a stretching amount (hereinafter, referred to as a 'suspension stroke amount') of the suspension device 14 suspending the first wheel (the right rear wheel 2RR in the embodiment) is equal to or more than a predetermined threshold (that is, a 'suspension stroke threshold (not illustrated)' stored in the ROM 72), and is switched to on or off at the time of executing judgment of the suspension stroke amount to be below (see FIG. 45).

The second wheel stroke flag 1073e2 is a flag corresponding to the first wheel stroke flag 1073e1 and since the second wheel stroke flag 1073e2 is the same as the first wheel stroke flag 1073e1 in terms of the used threshold except that the suspension device 14 suspending the left rear wheel 2RL is targeted, a description thereof will be omitted.

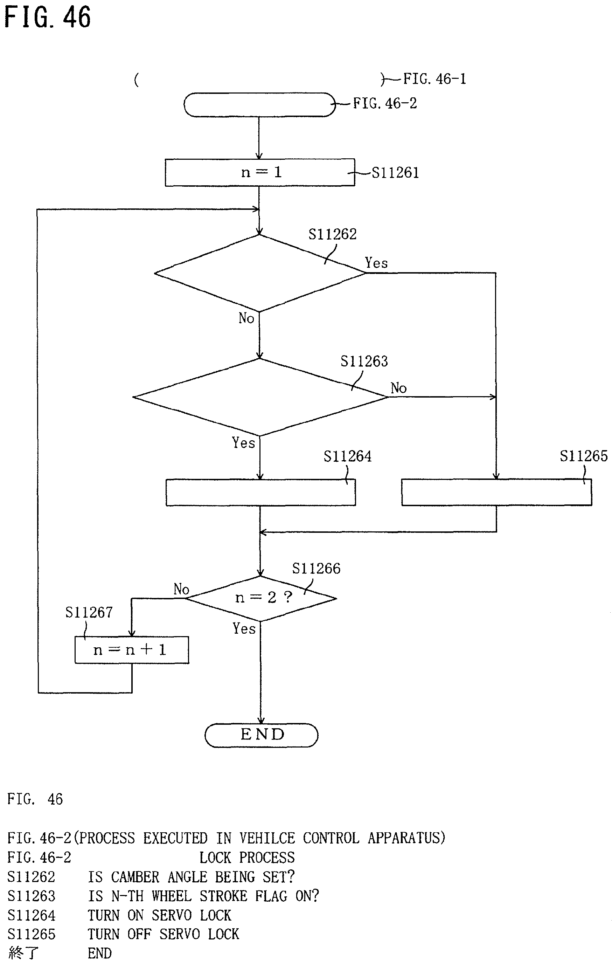

Further, both the suspension stroke flags 1073e1 and 1073e2 are switched to the on state when the suspension stroke amount of the corresponding suspension device 14 is equal to or more than the suspension stroke threshold and switched to the off state when the suspension stroke amount does not reach the suspension stroke threshold. The CPU 71 electrically conducts the camber angle adjusting device 45 (the RL motor 91RL or the RR motor 91RR) corresponding to the wheel 2 in which each of the stroke flags 1073e1 and 1073e2 is on, which is subjected to the servo lock state, in lock process illustrated in FIG. 46.

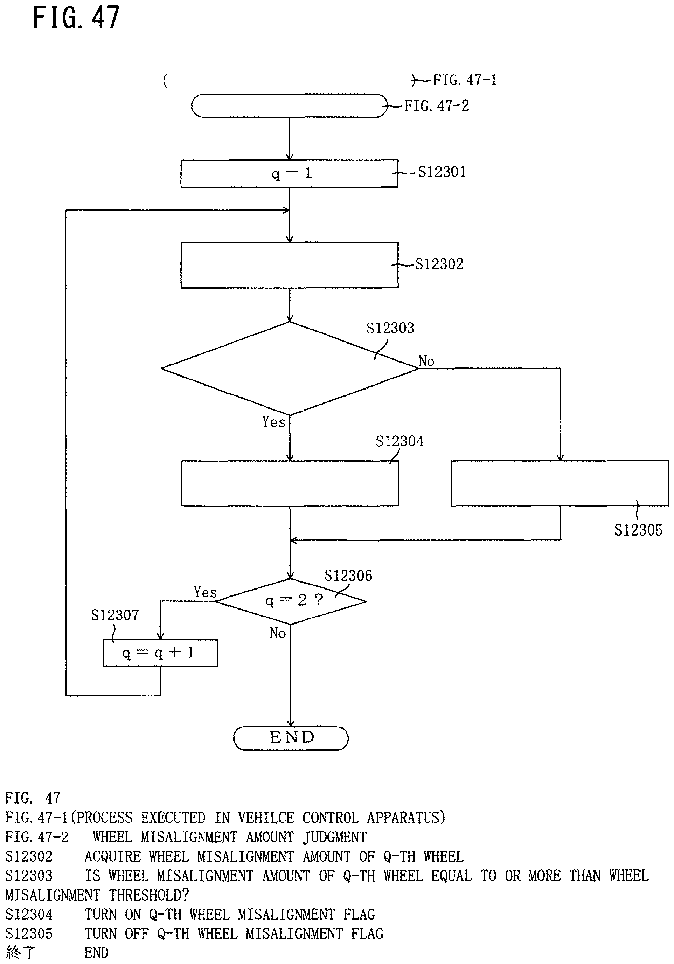

The first wheel misalignment flag 1073f1 is a flag indicating whether when a rotational position (phase) of the wheel member 93a at the first wheel (in the embodiment, the right rear wheel 2RR) side is rotated (misaligned) by the operation of the external force from the state adjusted to the first state or the second state, the rotation amount (misalignment amount) is equal to or more than a predetermined threshold (that is, the 'wheel misalignment threshold (not illustrated)' stored in the ROM 72), and is switched to on or off at the time of executing judgment of the wheel misalignment amount to be described below (see FIG. 47).

The second wheel misalignment flag 1073f2 is a flag corresponding to the first wheel misalignment flag 1073f1 and since the second wheel misalignment flag 1073f2 is the same as the first wheel misalignment flag 1073fl in terms of the state of the wheel member 93a or the used threshold as the reference except that the left rear wheel 2RL is targeted, a description thereof will be omitted.

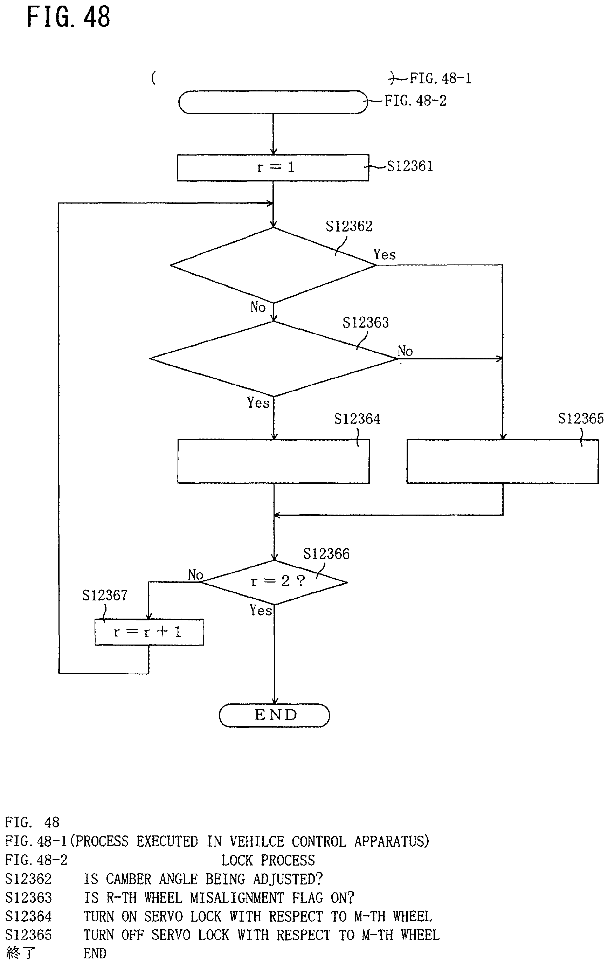

Further, both the wheel misalignment flags 1073f1 and 1073f2 are switched to the on state when the rotation amount (misalignment amount) of the corresponding wheel member 93a is equal to or more than the wheel misalignment threshold and switched to the off state when the rotation amount (misalignment amount) does not reach the wheel misalignment threshold. The CPU 71 electrically conducts the camber angle adjusting device 45 (the RL motor 91RL or the RR motor 91RR) corresponding to the wheel 2 in which each of the wheel misalignment flags 1073f1 and 1073f2 is on, which is subjected to the servo lock state, in lock process illustrated in FIG. 48.

Further, the camber angle adjusting device 45 in the tenth embodiment does not include the short circuit of the driving control circuit in the camber angle adjusting device 45 of the first embodiment.

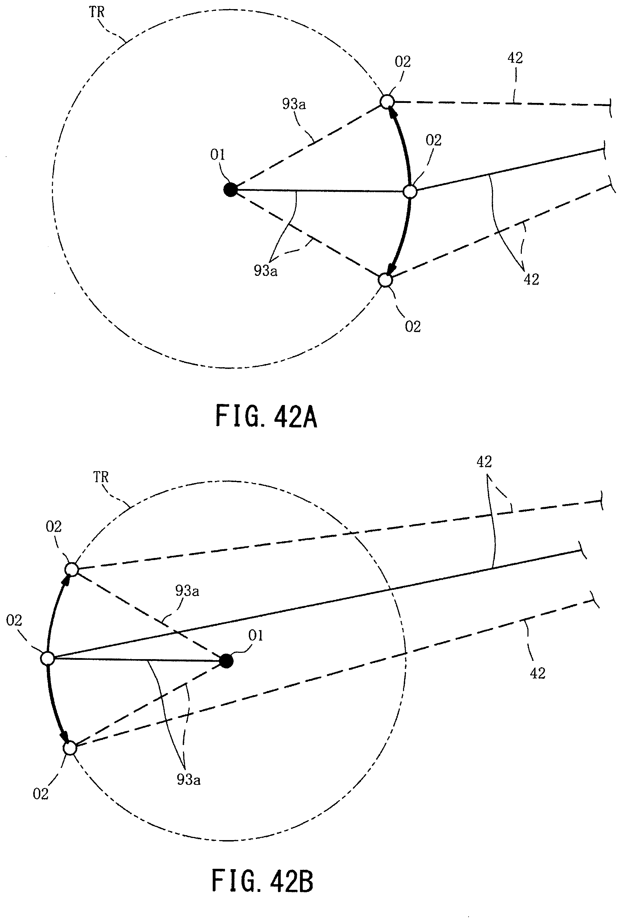

Subsequently, referring to FIG. 42, a state change of the camber angle adjusting device 45 with respect to the vertical movement of the carrier member 41 (that is, the stretching of the suspension device 14) will be described. Further, in FIG. 42, the case in which the carrier member 41 is displaced in the bound direction, and the suspension device 14 is contracted is described, but even in the case in which the carrier member 41 is displaced in the rebound direction, and the suspension device 14 is stretched, the description thereof will be omitted similarly as the case in which the suspension device 14 is contracted in terms of the way of thinking.

FIGS. 42(a) and 42(b) are partial enlarged diagrams of the suspension device 14 in the first state and the second state, respectively and correspond to FIGS. 11(a) and 11(b), respectively. However, in FIGS. 42(a) and 42(b), a state (that is, a state before the wheel member 93a is rotated (the rotational position is misaligned) by the operation of the external force) corresponding to FIGS. 11(a) and 11(b) in which the suspension device 14 is contracted is expressed by the solid line and a state after the wheel member 93a is rotated (the rotational position is misaligned) by the operation of the external force from the state is expressed by the dotted line, respectively. That is, the state expressed by the dotted line in FIGS. 11(a) and 11(b) is expressed by the solid line in FIGS. 42(a) and 42(b).

From the state expressed by the solid line in FIG. 42(a), when external force in a direction to press the upper arm 42 onto the wheel member 93a works on the wheel member 93a from the upper arm 42, a force component in a direction to move the axis O2 to the lower side of FIG. 42(a) is generated and the wheel member 93a is rotated clockwise in FIG. 42(a) by the force component. Meanwhile, when the external force in a direction to separate the upper arm 42 from the wheel member 93a works on the wheel member 93a from the upper arm 42, a force component in a direction to move the axis O2 to the upper side of FIG. 42(a) is generated and the wheel member 93a is rotated counterclockwise in FIG. 42(a) by the force component. As a result, as illustrated by the dotted line in FIG. 42(a), the rotational position of the wheel member 93a is misaligned and the camber angle of the wheel 2 is changed from the first camber angle.

That is, in the embodiment, when the setting operation of setting the wheel member 93a to the first state is terminated, the camber angle adjusting device 45 (RL motor 91RL and RR motor 91RR) is set in the servo lock state to restrict the rotation of the wheel member 93a. As a result, the wheel member 93a is suppressed from being rotated (the rotational position from being misalignment) by the operation of the external force and the camber angle of the wheel 2 is suppressed from being changed from the first camber angle. Further, in this way, by setting each of the motors 91RL and 91RR in the servo lock state while the wheel member 93a is in the first state, the mechanical friction force may be easily used for restricting the rotation of the wheel member 93a, thereby reducing the consumption energy of each of the motors 91RL and 91RR as much.

Meanwhile, in the second state (the state in which the camber angles of the left and right rear wheels 2RL and 2RR are adjusted to the second camber angle (= -3°), see FIG. 4(b)), since the axis O1, the axis O2, and the axis O3 are positioned on the straight line in parallel, as illustrated in FIG. 11(b), the rotation of the wheel member 93a may be restricted and although the driving force of the RL and RR motors 91RL and 91RR is cancelled, the camber angle of the wheel 2 may be mechanically kept to the second camber angle.

Even in this case, when the displacement to move the carrier member 41 in the bound direction (to the upper side of FIG. 11(b)) is input into the suspension device 14, the upper arm 42 is rotated around the axis O2 as the rotation center, and the straight line connecting the axis O1 and the axis O2 and the straight line connecting the axis O3 and the axis O2 form the predetermined angle as expressed by the solid line in FIG. 42(b), similarly as in the first state. As a result, the straight line connecting the axis O3 and the axis O2 and the tangent line on the axis O2 of the rotation trajectory TR do not form the right angle, and when the force is applied from the upper arm 42 to the wheel member 93a, a force component to a direction to move the axis O2 to the lower side or the upper side of FIG. 42(b) is generated and the wheel member 93a is rotated counterclockwise or clockwise in FIG. 42(b) by the force component. As a result, as expressed by the dotted line in FIG. 42(b), the rotational position of the wheel member 93a is misaligned and the camber angle of the wheel 2 is changed from the first camber angle.

Therefore, similarly as in the case of the first state, in the embodiment, when the setting operation of setting the wheel member 93a to the second state is terminated, the camber angle adjusting device 45 (RL motor 91RL and RR motor 91RR) is set in the servo lock state to restrict the rotation of the wheel member 93a, thereby suppressing the camber angle of the wheel 2 from being changed from the second camber angle. Further, even in this case, by setting each of the motors 91RL and 91RR in the servo lock state while the wheel member 93a is in the second state, the mechanical friction force may be easily used for restricting the rotation of the wheel member 93a, thereby reducing the consumption energy of each of the motors 91RL and 91RR.

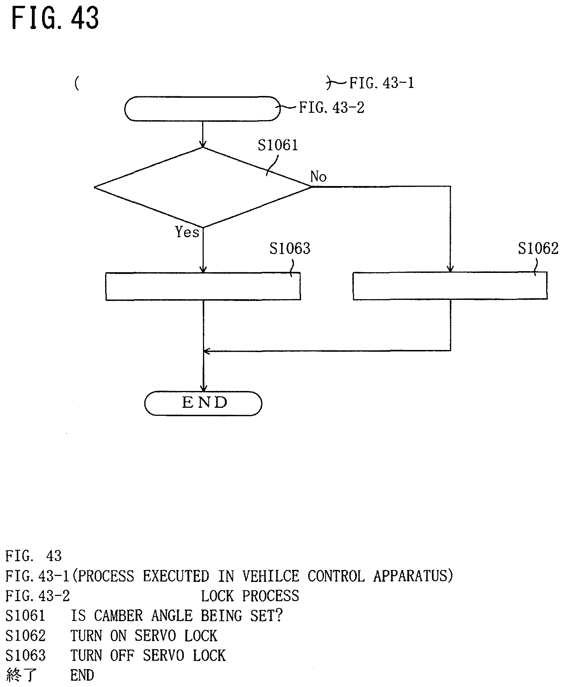

Subsequently, referring to FIG. 43, the lock process will be described. FIG. 43 is a flowchart illustrating the lock process. This process is executed repeatedly (for example, at an interval of 0.2 seconds) by the CPU 71 while power of the vehicle control apparatus 1000 is input and in this process, the rotation of the wheel member 93a is restricted and the camber angle of the wheel 2 is suppressed from being changed.

The CPU 71 is associated with the lock process, and first judges whether the camber angle is being set (S1061). That is, in order to apply the negative camber to the left and right rear wheels 2RL and 2RR (change the camber angle from the first camber angle (0°) to the second camber angle (-3°)) or contrary to this, cancel the applying of the negative camber to the left and right rear wheels 2RL and 2RR (change the camber angle from the second camber angle (-3°) to the first camber angle (0°)), each of the motors 91RL and 91RR of the camber angle adjusting device 45 is rotated to judge whether the wheel member 93a is rotated by the driving force (S1061).

As a result of the process of S1061, when it is judged that the camber angle is not being set (S1061: No), the setting operation of setting the camber angles of the left and right rear wheels 2RL and 2RR to the first camber angle or the second camber angle is terminated and the wheel member 93a has already stopped (that is, set to the first state or the second state), and as a result, a servo lock of the camber angle adjusting device 45 (the RL motor 91RL and the RR motor 91RR) is turned on (S1062) in order to suppress the wheel member 93a from being rotated (the rotational position from being misaligned) by the operation of the external force and thereafter, the lock process is terminated.

As a result, the rotation of the wheel member 93a may be restricted while the camber angle adjusting device 45 (RL motor 91RL and RR motor 91RR) is subjected to the servo lock. Accordingly, the wheel member 93a is suppressed from being rotated from the first state or the second state (the rotational position from being misaligned) with respect to the external force input into the wheel member 93a from the wheel 2 (left and right rear wheels 2RL and 2RR) through the upper arm 42, and the camber angle of the wheel 2 may be suppressed from being changed from the first camber angle or the second camber angle.

In this case, the wheel member 93a may make the straight line connecting the axis O3 and the axis O2 and the tangent line on the axis O2 of the rotation trajectory TR (see FIG. 3(b)) of the axis O2 be close to the right angle, in the general travelling state, in the first state or the second state. Accordingly, even when the force is applied from the upper arm 42 to the wheel member 93a, the force component to rotate the wheel member 93a may be suppressed from being generated, and as a result, the rotation of the wheel member 93a may be restricted even by the mechanical friction force. As such, since the rotation of the wheel member 93a may be restricted even by the mechanical friction force in addition to the rotation restriction by the servo lock, the consumption energy of each of the motors 91RL and 91RR consumed for the servo lock may be suppressed as much.

Meanwhile, in the process of S1061, when it is judged that the camber angle is being set (S1061: Yes), the servo lock of the camber angle adjusting device 45 (the RL motor 91RL and the RR motor 91RR) is turned off in order to prevent the setting operation of setting the camber angles of the left and right rear wheels 2RL and 2RR to the first camber angle or the second camber angle from being interfered (S1063) and thereafter, the lock process is terminated.

As described above, in the first embodiment, since the restriction of the rotation of the wheel member 93a by setting the camber angle adjusting device 45 (the RL motor 91RL and the RR motor 91RR) to the servo lock state is performed constantly when it is judged that the setting operation of the camber angle is completed, the wheel member 93a may be prevented from being rotated by the operation of the external force and the camber angle of the wheel 2 may be significantly suppressed from being changed.

Further, since the rotation of the wheel member 93a is configured to be restricted by setting the camber angle adjusting device 45 (the RL motor 91RL and the RR motor 91RR) to the servo lock state, the camber angle adjusting device 45 may serve as both an actuator that rotates the wheel member 93a in order to adjust the camber angle and an actuator that restricts the rotation of the wheel member 93a in order to suppress the change in the camber angle. That is, since the rotation of the wheel member 93a may be restricted and the change in the camber angle may be suppressed by using the existing actuator for adjusting the camber angle, other components (for example, a mechanical brake device, and the like) for restricting the rotation of the wheel member 93a need not be additionally installed, and a product cost may be reduced and a decrease in weight may be achieved. Further, since the rotation of the wheel member 93a is configured to be restricted by using the servo lock, high responsiveness may be acquired. Accordingly, since it is possible to shorten a response time until the rotation of the wheel member 93 is restricted after receiving a command, the change in camber angle of the wheel 2 may be suppressed more significantly.

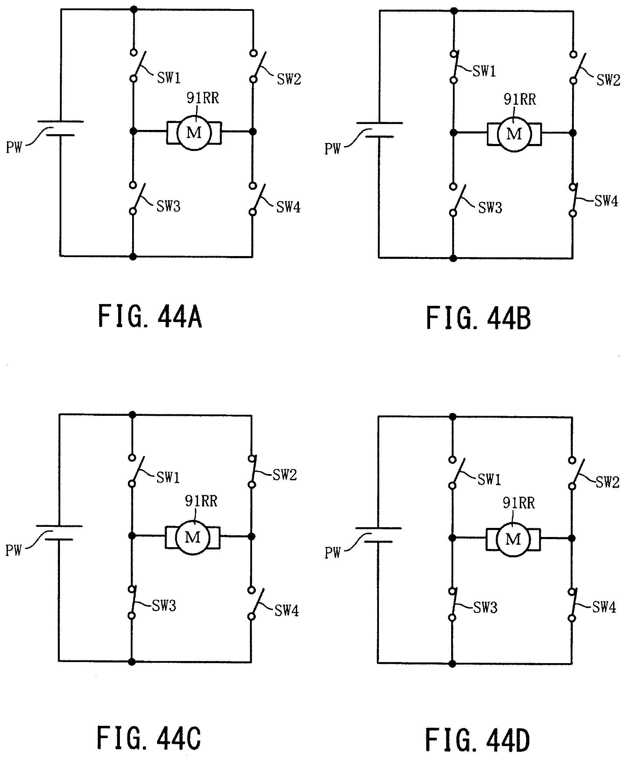

Subsequently, referring to FIGS. 44 to 46, a vehicle control apparatus in an eleventh embodiment will be described. In the first embodiment, the case has been described, in which the servo lock of the RL and RR motors 91RL and 91RR is turned on constantly after the setting operation of the camber angle is completed, but in the eleventh embodiment, when the setting operation of the camber angle is completed and the suspension stroke amount is equal to or more than the threshold, the servo lock of the RL and RR motors 91RL and 91RR is turned on.

Further, the vehicle control apparatus in the eleventh embodiment has the vehicle 1 described in the first embodiment as the control target and includes the same components as the vehicle control apparatus 1000 except for a driving control circuit illustrated in FIG. 44. Further, the same reference numerals refer to the same elements as each embodiment described above and a description thereof will be omitted.

FIG. 44(a) is a mimetic diagram of the driving control circuit in the eleventh embodiment, FIG. 44(b) is a mimetic diagram of the driving control circuit illustrating a state in which a positive-rotation circuit is formed, FIG. 44(c) is a mimetic diagram of the driving control circuit illustrating a state in which a negative-rotation circuit is formed, and FIG. 44(d) is a mimetic diagram of the driving control circuit illustrating a state in which the short circuit is formed. Further, since the driving control circuits controlling driving of the RL motor 91RL and the RR motor RR have the same configuration, only the driving control circuit controlling driving of the RR motor 91RR will be hereinafter described and the driving control circuit controlling driving of the RL motor 91RL will not be described. In addition, in FIG. 44, a resistor is not illustrated.

As illustrated in FIG. 44(a), the driving control circuit in the eleventh embodiment includes a power supply PW applying predetermined voltage to the RR motor 91RR and four switches SW1 to SW4, and forms the short circuit shorting both terminals of the RR motor 91RR. Further, since the short circuit is the same as that of the first embodiment, a description thereof will be omitted.

Subsequently, referring to FIG. 45, judgment of the suspension stroke amount will be described. FIG. 45 is a flowchart illustrating the judgment of the suspension stroke amount. This process is executed repeatedly (for example, at an interval of 0.2 seconds) by the CPU 71 while the power of the vehicle control apparatus is input and in this process, it is judged whether the stretching amount (suspension stroke) of the suspension device 14 suspending the left and right rear wheels 2RL and 2RR is more than a predetermined threshold.

The CPU 71 is associated with the judgment of the suspension stroke amount, and first writes m = 1 in a value m (not illustrated) provided in the RAM 73 (S11201) and acquires a suspension stroke amount of an m-th wheel (S11202). Further, in the suspension stroke amount judgment, a first wheel (m = 1) is defined as the right rear wheel 2RR and a second wheel (m = 2) is defined as the left rear wheel 2RL, for convenience of description.

Subsequently, it is judged whether the suspension stroke amount of the suspension device 14 suspending the m-th wheel is equal to or more than a suspension stroke threshold (S11203). Herein, the 'suspension stroke threshold' is a limit value of the stretching amount of the suspension device 14 capable of restricting the rotation of the wheel member 93a by the mechanical friction force with respect to the external force input from the upper arm 42 when the suspension device 14 is stretched (see FIGS. 11 and 42).

Therefore, when the suspension stroke amount of the suspension device 14 does not reach the suspension stroke threshold, although assumed maximum external force works on the wheel 2, the rotation of the wheel member 93a is restricted by the mechanical friction force (although the rotational force by each of the motors 91RL and 91RR is cancelled, the wheel member 93a is not rotated). Further, the suspension stroke threshold is acquired as a measurement value by a test (a test of acquiring a suspension stroke of a rotation limit of the wheel member 93a when the assumed maximum external force works on the wheel 2) using the actual vehicle, and is previously stored in the ROM 72.

In the process of S11203, when it is judged that the suspension stroke amount of the m-th wheel is equal to or more than the suspension stroke threshold (S11203: Yes), the suspension stroke amount of the suspension device 14 suspending the m-th wheel is more than a limit value, and as a result, an m-th wheel stroke flag (a flag corresponding to the m-th wheel of the first wheel stroke flag 1073e1 and the second wheel stroke flag 1073e2) is turned on (S11204), and the process of S11206 is executed.

Meanwhile, in the process of S11203, when it is judged that the suspension stroke amount of the m-th wheel is not equal to or more than the suspension stroke threshold (that is, does not reach the suspension stroke threshold) (S11203: No), the suspension stroke amount of the suspension device 14 suspending the m-th wheel does not reach the limit value, and as a result, the m-th wheel stroke flag (the flag corresponding to the m-th wheel of the first wheel stroke flag 1073e1 and the second wheel stroke flag 1073e2) is turned off (S11205), and the process of S11206 is executed.

In the process of S11206, it is judged whether the value m provided in the RAM 73 reaches 2 (S11206). As a result, when the value m does not reach 2 (that is, m = 1) (S11206: No), each of the processes (S11202 to S11205) for the second wheel (left rear wheel 2RL) is not executed, and as a result, m = m + 1 is written in the value m (S11207) and thereafter, the process of S11202 is executed, in order to execute each of the processes even with respect to the second wheel. Meanwhile, when the value m reaches 2 (that is, m = 2) (S11206: Yes), executing of each process (S11202 to S11205) for the first and second wheels (that is, the left and right rear wheels 2RL and 2RR) is completed, and as a result, the judgment of the suspension stroke amount is terminated.

Subsequently, referring to FIG. 46, the lock process will be described. FIG. 46 is a flowchart illustrating the lock process. This process is executed repeatedly (for example, at an interval of 0.2 seconds) by the CPU 71 while the power of the vehicle control apparatus is input, and in this process, the servo lock states of the RL and RR motors 91RL and 91RR are switched according to the suspension stroke amount of each suspension device 14.

The CPU 71 is associated with the lock process, and first writes n = 1 in a value n (not illustrated) provided in the RAM 73 (S11261). Further, in the lock process, a first wheel (n = 1) is defined as the right rear wheel 2RR and a second wheel (n = 2) is defined as the left rear wheel 2RL, for convenience of description.

After the process of S11261, subsequently, it is judged whether the camber angle is being set (S11262). That is, in order to apply the negative camber to the left and right rear wheels 2RL and 2RR (change the camber angle from the first camber angle (0°) to the second camber angle (-3°)) or contrary to this, cancel the applying of the negative camber to the left and right rear wheels 2RL and 2RR (change the camber angle from the second camber angle (-3°) to the first camber angle (0°)), each of the motors 91RL and 91RR of the camber angle adjusting device 45 is rotated to judge whether the wheel member 93a is rotated by the driving force (S11262).

As a result of the process of S11262, when it is judged that the camber angle is not being set (S11262: No), the setting operation of setting the camber angles of the left and right rear wheels 2RL and 2RR to the first camber angle or the second camber angle is terminated and the wheel member 93a has already stopped (that is, set to the first state or the second state).

Therefore, in this case (S11262: No), it is judged whether an n-th wheel stroke flag (a flag corresponding to an n-th wheel of the first wheel stroke flag 1073e1 or the second wheel stroke flag 1073e2) is on (S11263), and when it is judged that the n-th wheel stroke flag is on (S11263: Yes), the servo lock of the camber angle adjusting device 45 (the RL motor 91RL or the RR motor 91RR) corresponding to the n-th wheel is turned on (S11264), and the process of S11266 is executed. As a result, the unnecessary operation of the RL motor 91RL or the RR motor 91RR may be suppressed while the wheel member 93a is suppressed from being rotated (the rotational position from being misaligned) by the operation of the external force, and the consumption energy may be reduced.

That is, from the state in which the axis O1 is positioned on the straight line connecting the axis O2 and the axis O3, when the axis O1 is not positioned on the straight line connecting the axis O2 and the axis O3 by the suspension stroke of the suspension device 14 with the vertical movement of the carrier member 41, the straight line connecting the axis O2 and the axis O3, and the tangent line on the axis O2 of the rotation trajectory TR of the axis O2 do not form the right angle (see FIGS. 11 and 42), but when the suspension stroke amount of the suspension device 14 with the vertical movement of the carrier member 41 is comparative small, the variation in the angle formed by the straight line connecting the axis O2 and the axis O3, and the tangent line on the axis O2 of the rotation trajectory TR of the axis O2 is comparatively small, and as a result, even the force component to rotate the wheel member 93a in the force increased from the upper arm 42 to the wheel member 93a becomes comparatively smaller. As a result, the mechanical friction force is stronger than the force component to rotate the wheel member 93a and the rotation of the wheel member 93a may be kept in a restriction state (a state to be resistant to the external force). Therefore, even in this case, the RL motor 91RL or the RR motor 91RR is driven to restrict the rotation of the wheel member 93a, and as a result, the RL motor 91RL or the RR motor 91RR is unnecessarily operated.

Accordingly, in the embodiment, when it is judged that the suspension stroke amount of the suspension device 14 with the vertical movement of the carrier member 41 is equal to or more than the suspension stroke threshold (that is, as the case in which the n-th wheel stroke flag is turned on, when it is judged that the displacement amount (suspension stroke amount) of the carrier member 41 is large not to restrict the rotation of the wheel member 93a only by the mechanical friction force when predetermined external force is input) (S11263: Yes), the servo lock is turned on (S11264) and the rotation of the wheel member 93a is restricted, and as a result, the unnecessary operation of the RL motor 91RL or the RR motor 91RR may be suppressed and the consumption energy may be reduced.

Further, in this way, when it is judged that the suspension stroke amount of the suspension device 14 with the vertical movement of the carrier member 41 is equal to or more than the suspension stroke threshold (S11263: Yes), the servo lock is turned on (S11264) and the rotation of the wheel member 93a is restricted to prevent the wheel member 93a from being rotated (the rotational position from being misaligned) by the operation of the external force and more significantly suppress the camber angle of the wheel 2 from being changed.

Meanwhile, as a result of the process of S11262, when it is judged that the camber angle is being set (S11262: Yes), the servo lock of the camber angle adjusting device 45 (the RL motor 91RL and the RR motor 91RR) is turned off in order to prevent the setting operation of setting the camber angles of the left and right rear wheels 2RL and 2RR to the first camber angle or the second camber angle from being interfered (S11265) and thereafter, the process of S11266 is executed.

Further, in the process of S11263, when it is judged that the n-th wheel stroke flag is not on, that is, off (S11263: No), it is considered that the suspension stroke amount of the suspension device 14 with the vertical movement of the carrier member 41 is comparatively small and the rotation of the wheel member 93a may be kept in the restriction state (a state to be resistant to the external force) by the mechanical friction force, and as a result, the servo lock of the camber angle adjusting device 45 (the RL motor 91RL and the RR motor 91RR) is turned off in order to prevent the RL motor 91RL or the RR motor 91RR from being unnecessarily operated (S11265), and the process of S11266 is executed.

In the process of S11266, it is judged whether the value n provided in the RAM 73 reaches 2 (S11266). As a result, when the value n does not reach 2 (that is, n = 1) (S11266: No), each of the processes (S11262 to S11265) for the second wheel (left rear wheel 2RL) is not executed, and as a result, n = n + 1 is written in the value n (S11267) and thereafter, the process of S11262 is executed, in order to execute each of the processes even with respect to the second wheel. Meanwhile, when the value n reaches 2 (that is, n = 2) (S11266: Yes), executing of each process (S11262 to S11265) for the first and second wheels (that is, the left and right rear wheels 2RL and 2RR) is completed, and as a result, the lock process is terminated.

Subsequently, referring to FIGS. 47 to 48, a vehicle control apparatus in a twelfth embodiment will be described. In the tenth embodiment, the case has been described, in which the servo lock of the RL and RR motors 91RL and 91RR is turned on constantly after the setting operation of the camber angle is completed, but in the twelfth embodiment, when the setting operation of the camber angle is completed and the rotation amount (misalignment amount) of the wheel member 93a by the operation of the external force is equal to or more than the threshold, the servo lock of the RL and RR motors 91RL and 91RR is turned on.

Further, the vehicle control apparatus in the twelfth embodiment has the vehicle 1 described in the first embodiment as the control target and includes the same components as the vehicle control apparatus 1000. Further, the same reference numerals refer to the same elements as each embodiment described above and a description thereof will be omitted.

Herein, the vehicle control apparatus in the embodiment includes the driving control circuit illustrated in FIG. 44 similarly as the case of the eleventh embodiment. That is, when the camber angle of the wheel 2 (left and right rear wheels 2RL and 2RR) is adjusted to the first camber angle or the second camber angle, and the camber angle adjusting device 45 (see FIG. 3) is set to the first state or the second state, the aforementioned short circuit is formed. Further, when the servo lock is turned on (see S12364 of FIG. 48), the formation of the short circuit is cancelled and the short circuit is formed with turn-off of the servo lock (see S12365 of FIG. 48). As a result, similarly as the case of the eleventh embodiment, the brake may be put on the rotation of the wheel member 93a.

FIG. 47 is a flowchart illustrating judgment of the wheel misalignment amount in the twelfth embodiment. This process is executed repeatedly (for example, at an interval of 0.2 seconds) by the CPU 71 while the power of the vehicle control apparatus is input, and in this process, it is judged whether the rotation amount (misalignment amount) of the wheel member 93a by the operation of the external force is more than the predetermined threshold.

The CPU 71 is associated with the judgment of the wheel misalignment amount, and first writes q = 1 in a value q (not illustrated) provided in the RAM 73 (S12301) and acquires a wheel misalignment amount of the wheel member 93a in the suspension device 14 suspending a q-th wheel (S12302). Herein, the wheel misalignment amount is a rotation amount from the initial position when the wheel member 93a is rotated (misaligned) by the operation of the external force while the state in which the rotational position (phase) of the wheel member 93a is adjusted to the first state or the second state is set as the initial position. Further, in the wheel misalignment amount judgment, a first wheel (q = 1) is defined as the right rear wheel 2RR and a second wheel (q = 2) is defined as the left rear wheel 2RL, for convenience of description.

Subsequently, it is judged whether the wheel misalignment amount of the wheel member 93a in the suspension device 14 suspending the q-th wheel is equal to or more than a wheel misalignment threshold (S12303). Herein, the 'wheel misalignment threshold' is a limit value of the wheel misalignment amount of the wheel member 93a capable of restricting the rotation of the wheel member 93a by the mechanical friction force when predetermined intensity of external force (reference external force) is input from the upper arm 42 with respect to the wheel member 93a in a state in which the suspension device 14 is not suspension-stroked (that is, the general traveling state in which external force other than the weight of the vehicle 1 does not work).

Therefore, when the wheel misalignment amount of the wheel member 93a does not reach the wheel misalignment threshold, although the reference external force works on the wheel 2, the rotation of the wheel member 93a is restricted by the mechanical friction force (although the rotational force by each of the motors 91RL and 91RR is cancelled, the wheel member 93a is not rotated). Further, the wheel misalignment threshold is acquired as a measurement value by a test (a test of acquiring a wheel misalignment amount of a rotation limit of the wheel member 93a when the reference external force works on the wheel 2) using the actual vehicle, and is previously stored in the ROM 72.

In the process of S12303, when it is judged that the wheel misalignment amount of the q-th wheel is equal to or more than the wheel misalignment threshold (S12303: Yes), the wheel misalignment amount of the wheel member 93a in the suspension device 14 suspending the q-th wheel is more than the limit value, and as a result, a q-th wheel misalignment flag (a flag corresponding to the q-th wheel of the first wheel misalignment flag 1073f1 and the second wheel misalignment flag 1073f2) is turned on (S12304) and the process of S12306 is executed.

Meanwhile, in the process of S12303, when it is judged that the wheel misalignment amount of the q-th wheel is not equal to or more than the wheel misalignment threshold (that is, does not reach the wheel misalignment threshold) (S11203: No), the wheel misalignment amount of the wheel member 93a in the suspension device 14 suspending the q-th wheel does not reach the limit value, and as a result, the q-th wheel misalignment flag (the flag corresponding to the q-th wheel of the first wheel misalignment flag 1073f1 and the second wheel misalignment flag 1073f2) is turned off (S12305) and the process of S12306 is executed.

In the process of S12306, it is judged whether the value q provided in the RAM 73 reaches 2 (S12306). As a result, when the value q does not reach 2 (that is, q = 1) (S12306: No), each of the processes (S12302 to S12305) for the second wheel (left rear wheel 2RL) is not executed, and as a result, q = q + 1 is written in the value q (S12307) and thereafter, the process of S12302 is executed, in order to execute each of the processes even with respect to the second wheel. Meanwhile, when the value q reaches 2 (that is, q = 2) (S12306: Yes), executing of each process (S12302 to S12305) for the first and second wheels (that is, the left and right rear wheels 2RL and 2RR) is completed, and as a result, the judgment of the suspension stroke amount is terminated.

Subsequently, referring to FIG. 48, the lock process will be described. FIG. 48 is a flowchart illustrating the lock process. This process is executed repeatedly (for example, at an interval of 0.2 seconds) by the CPU 71 while the power of the vehicle control apparatus is input, and in this process, the servo lock states of the RL and RR motors 91RL and 91RR are switched according to the wheel alignment amount the wheel member 93a in each suspension device 14.

The CPU 71 is associated with the lock process, and first writes r = 1 in a value r (not illustrated) provided in the RAM 73 (S12361). Further, in the lock process, a first wheel (r = 1) is defined as the right rear wheel 2RR and a second wheel (r = 2) is defined as the left rear wheel 2RL, for convenience of description.

After the process of S12361, subsequently, it is judged whether the camber angle is being set (S12362). That is, in order to apply the negative camber to the left and right rear wheels 2RL and 2RR (change the camber angle from the first camber angle (0°) to the second camber angle (-3°)) or contrary to this, cancel the applying of the negative camber to the left and right rear wheels 2RL and 2RR (change the camber angle from the second camber angle (-3°) to the first camber angle (0°)), each of the motors 91RL and 91RR of the camber angle adjusting device 45 is rotated to judge whether the wheel member 93a is rotated by the driving force (S12362).

As a result of the process of S12362, when it is judged that the camber angle is not being set (S12362: No), the setting operation of setting the camber angles of the left and right rear wheels 2RL and 2RR to the first camber angle or the second camber angle is terminated and the wheel member 93a has already stopped (that is, set to the first state or the second state).

Therefore, in this case (S12362: No), it is judged whether an r-th wheel misalignment flag (a flag corresponding to an r-th wheel of the first wheel misalignment flag 1073f1 and the second wheel misalignment flag 1073f2) is on (S12363), and when it is judged that the r-th wheel misalignment flag is on (S12363: Yes), the servo lock of the camber angle adjusting device 45 (the RL motor 91RL or the RR motor 91RR) corresponding to the r-th wheel is turned on (S12364), and the process of S12366 is executed. As a result, the unnecessary operation of the RL motor 91RL or the RR motor 91RR may be suppressed while the wheel member 93a is suppressed from being rotated (the rotational position from being misaligned), and the consumption energy may be reduced.

That is, from the state in which the axis O1 is positioned on the straight line connecting the axis O2 and the axis O3, when the wheel member 93a is rotated (the rotational position is misaligned) by the operation of the external force, and the axis O1 is not positioned on the straight line connecting the axis O2 and the axis O3, the straight line connecting the axis O2 and the axis O3, and the tangent line on the axis O2 of the rotation trajectory TR of the axis O2 do not form the right angle, but when the wheel misalignment amount of the wheel member 93a is comparatively small, the variation in the angle formed by the straight line connecting the axis O2 and the axis O3, and the tangent line on the axis O2 of the rotation trajectory TR of the axis O2 is comparatively small, and as a result, even the force component to rotate the wheel member 93a in the force increased from the upper arm 42 to the wheel member 93a becomes comparatively smaller. As a result, the mechanical friction force is stronger than the force component to rotate the wheel member 93a and the rotation of the wheel member 93a may be kept in the restriction state (a state to be resistant to the external force). Therefore, even in this case, the RL motor 91RL or the RR motor 91RR is driven to restrict the rotation of the wheel member 93a, and as a result, the RL motor 91RL or the RR motor 91RR is unnecessarily operated.

Accordingly, in the embodiment, when it is judged that the value of the wheel misalignment amount of the wheel member 93a by the operation of the external force is equal to or more than the wheel misalignment threshold (that is, as the case in which the r-th wheel misalignment flag is on, when it is judged that the wheel misalignment amount of the wheel member 93a is large not to restrict the rotation of the wheel member 93a only by the mechanical friction force when predetermined external force is input) (S12363: Yes), the servo lock is turned on (S12364) to restrict the rotation of the wheel member 93a, and as a result, the unnecessary operation of the RL motor 91RL or the RR motor 91RR may be suppressed and the consumption energy may be reduced.

Meanwhile, as a result of the process of S12362, when it is judged that the camber angle is being set (S12362: Yes), the servo lock of the camber angle adjusting device 45 (the RL motor 91RL and the RR motor 91RR) is turned off in order to prevent the setting operation of setting the camber angles of the left and right rear wheels 2RL and 2RR to the first camber angle or the second camber angle from being interfered (S12365) and thereafter, the process of S12366 is executed.

Further, in the process of S12363, when it is judged that the r-th wheel misalignment flag is not on, that is, off (S12363: No), it is considered that the wheel misalignment amount of the wheel member 93a is comparatively small and the rotation of the wheel member 93a may be kept in the restriction state (a state to be resistant to the external force) by the mechanical friction force, and as a result, the servo lock of the camber angle adjusting device 45 (the RL motor 91RL and the RR motor 91RR) is turned off in order to prevent the RL motor 91RL or the RR motor 91RR from being unnecessarily operated (S12365), and the process of S12366 is executed.

In the process of S12366, it is judged whether the value r provided in the RAM 73 reaches 2 (S12366). As a result, when the value r does not reach 2 (that is, r = 1) (S12366: No), each of the processes (S12362 to S12365) for the second wheel (left rear wheel 2RL) is not executed, and as a result, r = r + 1 is written in the value r (S12367) and thereafter, the process of S12362 is executed, in order to execute each of the processes even with respect to the second wheel. Meanwhile, when the value r reaches 2 (that is, r = 2) (S12366: Yes), executing of each process (S12362 to S12365) for the first and second wheels (that is, the left and right rear wheels 2RL and 2RR) is completed, and as a result, the lock process is terminated.

Further, in the flowchart (camber controlling) illustrated in FIG. 10, the processes of S43, S47, S50, and S53 correspond to a camber angle setting section of claim 1, in the flowchart (wheel misalignment amount judgment) illustrated in FIG. 17, the process of S273 corresponds to a rotation judging section of claim 1, the process of S272 corresponds to a rotation amount acquiring section of claim 1, and the process of S273 corresponds to a rotation threshold judging section, in the flowchart (compensation process) illustrated in FIG. 18, the processes of S285 and S286 correspond to a compensation section of claim 1, in the flowchart (stand-by process) illustrated in FIG. 20, the process of S303 corresponds to a first compensation restarting section of claim 5 or 6, and in the flowchart (stand-by process) illustrated in FIG. 24, the process of S403 corresponds to a second compensation restarting section of claim 7.

As set forth above, the present invention has been described based on the embodiments, but the present invention is not limited to the embodiments and it can be appreciated that various modification and changes can be made without departing from the claimed invention.

The numerical values in the respective embodiments are examples and other numerical values may be, of course, adopted. For example, the values of the firs camber angle and the second camber angle described in the respective embodiments may be arbitrarily set. Further, similarly, the value of the camber angle, exemplified as 0.5°as one example in the fourth and fifth embodiments, at which the all-time operating sensor device 388 is turned on, may also be arbitrarily set.

In the respective embodiments, the case in which the camber angles of the left and right rear wheels 2RL and 2RR are adjusted by the camber angle adjusting device 45 has been described, but is not particularly limited thereto and instead thereof or in addition thereto, the camber angles of the left and right front wheels 2FL and 2FR may be, of course, adjusted by the camber angle adjusting device 45.

In the respective embodiments, even in any one of the first state and the second state, the case in which the axis O1 is positioned on the straight line connecting the axis O2 and the axis O3 has been described, but the present invention is not particularly limited thereto and in only any one of the first state and the second state, the axis O1 is positioned on the straight line connecting the axis O2 and the axis O3 and in the other one of the first state and the second state, the axis O1 may be, of course, controlled not to be positioned on the straight line connecting the axis O2 and the axis O3.

In the respective embodiments, the case in which the camber angle adjusting device 45 is interposed between the upper arm 42 and the vehicle body BF has been described, but the present invention is not particularly limited thereto and the camber angle adjusting device 45 may be interposed between the lower arm 43 and the vehicle body BF.

In the respective embodiments, the case in which the camber angles of the left and right rear wheels 2RL and 2RR are adjusted by the camber angle adjusting devices 45, 445, and 545 has been described, but the present invention is not particularly limited thereto and instead thereof or in addition thereto, the camber angles of the left and right front wheels 2FL and 2FR may be, of course, adjusted by the camber angle adjusting device 45.

In the second to fifth embodiments, during a period until the compensation is performed by the compensation process after the camber angle of the wheel 2 is set to the first camber angle or the second camber angle, the case in which the driving force from the RL and RR motors 91RL and 91RR to the wheel members 93a and 593a is released has been described, but the present invention is not limited thereto and even during this period, the driving force from the RL and RR motors 91RL and 91RR to the wheel member 93a may be continuously or intermittently applied. For example, during this period, the RL and RR motors 91RL and 91RR may be subjected to the servo lock state.

In the third embodiment, the case in which when the ID code from the electronic key is authenticated (FIG. 20, S302: Yes), the case in which the power of the camber angle adjusting device 45 is turned on (S303) to make the camber angle of the wheel 2 be adjustable has been described, but the present invention is not limited thereto and the ID code from the electronic key is authenticated and further, when opening of each door is detected, the power of the camber angle adjusting device 45 may be turned on. Further, the opening of each door is detected by the opening/closing door sensor device 387 (see FIG. 19).

That is, in the flowchart (stand-by process) of FIG. 20, the process of S302 is branched to Yes and thereafter, process of judging whether the opening of each door is detected is added and when the added process is branched to Yes (when the opening is detected), the process of S303 is executed, while when the added process is branched to No (when the opening is not detected), the process after S303 is skipped and the stand-by process may be accepted.

As a result, it is possible to improve a system for judging whether the process (S303) of turning on the power of the camber angle adjusting device 45 needs to be executed may be increased and suppress the process from being unnecessarily executed. That is, when the ID code from the electronic key is authenticated, the owner of the electronic key is present outside or inside the vehicle 1, but the electronic key owner's or other persons' getting-in/out of the vehicle 1 or loading/unloading of the luggage on/from the trunk or the room of the vehicle 1 may not be particularly performed. Meanwhile, there may be a high possibility that the person's getting-in/out of the vehicle, the loading/unloading of the luggage, or closing of the door will be performed with the opening of each door when the opening of each door is detected. Accordingly, the detection of the opening of each door is further added as a condition to improve the system for judging whether the process (S303) of turning on the power of the camber angle adjusting device 45 needs to be executed and suppress the unnecessary execution of this process.

In the third embodiment, the case in which the electronic key is used to lock and unlock the door has been described, but the present invention is not limited thereto and other devices may be, of course, used.

The other devices include a first operator (for example, a button) for commanding the lock and a second operator (for example, the button) for commanding the unlock, and a remote controller device is exemplified, which transmits a lock signal to command the lock when the first operator is operated, while transmits an unlock signal to command the unlock when the second operator is operated. Further, an ID code signal indicating a unique ID code to the remote controller device is included in the lock signal and the unlock signal.

When the lock signal is received by the reception unit 386b of the door lock device 386, the ID code is extracted and the lock signal is combined with the ID code of the door lock device 386. As a result of the combination, when the ID code is matched, the remote controller device is authenticated and each door is locked. Similarly, when the lock signal is received by the reception unit 386b of the door lock device 386 and the remote controller device is authenticated by the matching of the ID code, each door is unlocked.

In this case, in the process of S302 of the flowchart (stand-by process) of FIG. 20, it is judged 'whether the unlock signal is received from the remote controller and the ID code is authenticated (that is, whether the remote controller device is authenticated)' and as a result of the judgment, when the process of S302 is branched to Yes (the remote controller device is authenticated), the process of S303 is executed, while when the process of S302 is branched to No (the remote controller device is not authenticated), the process after S303 is skipped and the stand-by process is accepted.

Alternatively, in the process of S302, as a result of receiving the unlock signal from the remote controller device and authenticating the ID code (that is, authenticating the remote controller device), it is judged 'whether the door (at least one door or all doors) in the door lock device 386 is unlocked' and as a result of the judgment, when the process of S302 is branched to Yes (the door is unlocked), the process of S303 is executed, while when the process of S302 is branched to No (the door is not unlocked), the process after S303 is skipped and the stand-by process is accepted.

Even in the aforementioned configuration, the same effect as in the case of the third embodiment may be achieved. Further, in these cases, the 'remote controller device' corresponds to a 'terminal device' described in claim 5 or 6. Further, like the respective cases, communication between the door lock device 386 and the remote controller device may be unidirectional. That is, 'communication with the terminal device' in claim 5 or 6 is not limited to bidirectional communication.

In the fourth and fifth embodiments, the case has been described, in which the all-time operating sensor device 388 detects that the wheel members 93a and 593a are misaligned from the first rotational position (S402: Yes) and when the camber angle of the wheel 2 is actually changed, the powers of the camber angle adjusting devices 445 and 545 are turned on (S403), but the present invention is not particularly limited thereto and the opening/closing sensor device 387 (see FIG. 20) may be used instead of the all-time operating sensor device 388.

In detail, instead of the process of S402 in the flowchart (stand-by process) of FIG. 24, process of judging whether opening of any one of the side door, the trunk door, and the bonnet door is detected by the opening/closing sensor device 387 is newly provided and when this process is branched to Yes (when the opening is detected), the process of S403 is executed, while when this process is branched to No (when the opening is not detected), the process after S403 is skipped and the stand-by process may be accepted. Since the powers of the camber angle adjusting devices 445 and 545 may be turned on in advance before the camber angle of the wheel 2 is actually changed by the operation of the external force, responsiveness may be increased. Further, the detection of the opening of each door may improve the system for judging whether the process (S403) of turning on the powers of the camber angle adjusting devices 445 and 545 needs to be executed and suppress the unnecessary execution of this process because there is a high possibility that the person's getting-in/out of the vehicle, the loading/unloading of the luggage, or the closing of the door will be performed.

In the fourth and fifth embodiments, the case has been described, in which, when the misalignment of the wheel members 93a and 593a is detected (S402: Yes), the compensation is performed such that the wheel members 93a and 593a are positioned at the initial position of the first state (S405), but the present invention is not particularly limited thereto and the wheel members 93a and 593a may be rotated at only a predetermined amount.

That is, when the misalignment of the wheel members 93a and 593a is detected, the rotation amount (rotation angle) required to position the wheel members 93a and 593a to the initial position of the first state depends on a state (for example, an absolute value or a method of the change) of the operated external force, and as a result, the wheel members 93a and 593a are rotated toward the initial position of the first state at the predetermined rotation amount constantly without depending on the required rotation amount. As a result, since calculation of the required rotation amount becomes unnecessary, the responsiveness may be improved.

In the third to fifth embodiments, the case has been described, in which, when the start button is turned off (that is, the key position is operated to the off state) and the wheel driving device 3 is stopped, the camber angle of the wheel 2 is adjusted to the first state and thereafter, the powers of the camber angle adjusting devices 45, 445, and 545 are turned off, but the present invention is not particularly limited thereto and after the camber angle of the wheel 2 is adjusted to the second state, the powers of the camber angle adjusting devices 45, 445, and 545 may be turned off. Further, in this case, the compensation is performed by rotating the wheel members 93a, 393a and 593a to the initial position of the second state.

Some or all of any one of the respective embodiments may be combined with some or all of other embodiments. Further, some components of the respective embodiments may be omitted. For example, in the third embodiment, the all-time operating sensor device 388 may be omitted from the vehicle control apparatus 300. In the fourth and fifth embodiments, the door lock device 386 may be omitted from the vehicle control apparatus 300.

In the sixth to ninth embodiments, the case has been described, in which, after the camber angle of the wheel 2 is set to the first camber angle or the second camber angle, during the period until the compensation is performed by the first compensation process or the second compensation process except for the second compensation process illustrated in FIG. 33, the driving force from the RL and RR motors 91RL and 91RR to the wheel member 93a is released, but the present invention is not limited thereto and even during this period, the driving force from the RL and RR motors 91RL and 91RR to the wheel member 93a may be continuously or intermittently applied.

In the sixth to ninth embodiments, in the process of each of S6101 to S6103 of the compensation method determination process, it is judged whether the movement state of the vehicle 1 is looser than the predetermined movement state based on the operation amount of the operating member (the acceleration pedal 61, the brake pedal 62, or the steering 63), but the present invention is not particularly limited thereto and the judgment may be, of course, performed based on other state amounts. The other state amounts may include, for example, the operation velocity or operation acceleration of the operating member.

In the second compensation process of the seventh embodiment, when the suspension stroke amount in the suspension device 14 suspending the rear wheels 2RL and 2RR is equal to or more than the stroke threshold, the servo lock of the corresponding RL and RR motors 91RL and 91RR is turned on, but the present invention is not particularly limited thereto and when the suspension stroke amount in the suspension device 4 suspending the front wheels 2FL and 2FR is equal to or more than the predetermined threshold, the servo lock of the corresponding RL and RR motors 91RL and 91RR (for example, when the suspension stroke amount in the right front wheel 2FR is equal to or more than the predetermined threshold, the RR motor 91RR in the right rear wheel 2RR) may be turned on. For example, when the front wheel is suspension-stroked with passing through the uneven lane, a possibility that the rear wheel will subsequently pass through the uneven lane is high, and as a result, since the rotation of the wheel member 93a may be, in advance, restricted by servo-locking the rear wheel side according to the suspension stroke amount of the front wheel, the misalignment of the rotational position of the wheel member 93a may be suppressed more significantly.

### Reference Signs List

100 Vehicle control apparatus
1 Vehicle
2 wheel
2RL Left rear wheel (part of wheel)
2RR Right rear wheel (part of wheel)
41 Carrier member
42 Upper arm (first suspension arm)
43 Lower arm (second suspension arm)
91RL RL Motor (rotation section, electric motor)
91RR RR Motor (rotation section, electric motor)
93a Wheel member
O1 Axis (wheel shaft)
O2 Axis (eccentric connection shaft)
O3 The other connection shaft
BF Vehicle body
TR Rotation trajectory of axis O2
386 Door lock device (communication authenticating device, lock device)
386a Transmission unit (part of communication authenticating device)
386b Reception unit (part of communication authenticating device)
386c Lock unit (part of lock device)
388 All-time operating sensor device (camber angle change detecting sensor)
411 Arm-side terminal (part of camber angle change detecting sensor)
412, 413 Wheel-side terminal (part of camber angle change detecting sensor)
511 Main body part (part of camber angle change detecting sensor)
512 Contacted part (part of camber angle change detecting sensor)

## Claims

1. A vehicle control apparatus (100) for operating a rotation section (91RR) and rotating a wheel member (93a) to adjust a camber angle of a wheel (2) with respect to a vehicle, including:
a rotation section that generates rotational force,
a wheel member (93a) rotatable around a wheel shaft (O1) as a rotation center by the rotational force applied from the rotation section and installed in a vehicle body (BF),
a first suspension arm (42) one end of which is rotatably connected to the wheel member (93a) around an eccentric connection shaft (O2) positioned eccentrically to the wheel shaft (O1) of the wheel member (93a) as a rotation center,
a carrier member (41) rotatably connected with the other end of the first suspension arm (42) around the other connection shaft (O3) as a rotation center and holding a wheel (2), and
a second suspension arm (43) connecting the carrier member (41) to the vehicle body (BF) to be movable vertically together with the first suspension arm (42), the vehicle control apparatus comprising:
a camber angle setting section that is adapted to rotate the wheel member (93a) to a first rotational position where the wheel shaft (O1) is positioned on a straight line connecting the eccentric connection shaft (O2) and the other connection shaft (O3) by operating the rotation section thus setting the camber angle of the wheel (2) to a predetermined camber angle, wherein the first rotational position corresponds to an initial position of a first state or a second state, wherein, in the first state, the other connection shaft (O3), the eccentric connection shaft (O2) and the wheel shaft (O1) are in sequence positioned on said straight line in parallel, and in the second state, the other connection shaft (O3), the wheel shaft (O1) and the eccentric connection shaft (O2) are in sequence positioned on said straight line in parallel; **characterized by**
a rotation judging section that is adapted to judge whether the rotational position of the wheel member (93a) is rotated from the first rotational position by an operation of external force from the state in which the rotational position of the wheel member (93a) is rotated to the first rotational position so that the camber angle of the wheel (2) is set to the predetermined camber angle by the camber angle setting section;
a rotation amount acquiring section that is adapted to acquire a rotation amount of the wheel member (93a) from the first rotational position when it is judged by the rotation judging section that the wheel member (93a) is rotated from the first rotational position by the operation of the external force; and
a compensation section that is adapted to operate the rotation section and to rotate the wheel member (93a) so as to make the rotational position of the wheel member (93a) be at least close to the first rotational position when it is judged by the rotation judging section that the rotational position of the wheel member (93a) is rotated from the first rotational position by the operation of the external force, wherein the wheel member (93a) is rotated in the reverse direction to the rotation direction by the external force so that the wheel member (93a) approaches to the position of the first state if the rotation amount of the wheel member (93a) is acquired from the first state, and also so that the wheel member (93a) approaches to the position of the second state if the rotation amount of the wheel member (93a) is acquired from the second state.

2. The vehicle control apparatus (100) according to claim 1, further comprising:
a rotation threshold judging section that is adapted to judge whether a value of the rotation amount of the wheel member (93a) from the first rotational position acquired by the rotation amount acquiring section is equal to or more than a threshold,
wherein the rotation section is operated by the compensation section when it is judged by the rotation threshold judging section that the value of the rotation amount of the wheel member (93a) from the first rotational position is equal to or more than the threshold.

3. The vehicle control apparatus (100) according to claim 1 or 2,
wherein the rotation section includes an electric motor (91RR) and a short circuit shorting both terminals of the electric motor (91RR), and the vehicle control apparatus (100) is adapted such that the both terminals of the electric motor (91RR) are shorted by the short circuit when the wheel member (93a) is at least rotated to the first rotational position.

4. The vehicle control apparatus (100) according to any one of claims 1 to 3,
wherein the compensation section is adapted to operate the rotation section and to rotate the wheel member (93a) such that the rotational position of the wheel member (93a) is positioned at the first rotational position.

5. The vehicle control apparatus (100) according to any of claims 1 to 4,
wherein the vehicle includes a communication authenticating device that is adapted to communicate with a terminal device, such as an electronic key, and to authenticate the terminal device, and a lock device that is adapted to unlock a door when the terminal device is authenticated by the communication authenticating device, and
the vehicle control apparatus (100) is adapted to set the operation by the compensation section to a stop state under a predetermined condition,
the vehicle control apparatus (100) comprising a first compensation restarting section that is adapted to bring the operation by the compensation section into an executable state when the communication authenticating device authenticates the terminal device under the predetermined condition.

6. The vehicle control apparatus (100) according to any one of claims 1 to 4,
wherein the vehicle includes a communication authenticating device that is adapted to communicate with a terminal device, such as an electronic key, and to authenticate the terminal device, and a lock device that is adapted to unlock a door when the terminal device is authenticated by the communication authenticating device, and
the vehicle control apparatus (100) is adapted to set the operation by the compensation section to a stop state under a predetermined condition,
the vehicle control apparatus (100) comprising a first compensation restarting section that is adapted to bring the operation by the compensation section into an executable state when the lock device unlocks the door under the predetermined condition.

7. The vehicle control apparatus (100) according to any one of claims 1 to 4,
wherein the vehicle includes a camber change detecting sensor (94RR) detecting whether the camber angle of the wheel (2) is changed, and
the vehicle control apparatus (100) is adapted to set the operation by the compensation section to a stop state under a predetermined condition,
the vehicle control apparatus (100) comprising a second compensation restarting section that is adapted to bring the operation by the compensation section into an executable state when the camber change detecting sensor (94RR) detects that the camber angle of the wheel (2) is changed by a predetermined angle or more under the predetermined condition.

## Patentansprüche

1. Fahrzeugsteuerungsvorrichtung (100) zum Betreiben eines Rotationsabschnitts (91RR) und Rotieren eines Scheibenbauteils (93a), um einen Radsturzwinkel eines Rads (2) bezüglich eines Fahrzeugs einzustellen, das Folgendes enthält:
einen Rotationsabschnitt, der eine Rotationskraft erzeugt,
ein Scheibenbauteil (93a), das um eine Scheibenwelle (O1) als eine Rotationsmitte durch die von dem Rotationsabschnitt aufgebrachte Rotationskraft drehbar ist und in einer Fahrzeugkarosserie (BF) eingebaut ist,
einen ersten Tragarm (42), dessen eines Ende mit dem Scheibenbauteil (93a) drehbar um eine Exzenterverbindungswelle (O2) verbunden ist, die exzentrisch zu der Scheibenwelle (O1) des Scheibenbauteils (93a) als eine Rotationsmitte positioniert ist,
ein Trägerbauteil (41), das mit dem anderen Ende des ersten Tragarms (42) drehbar um die andere Verbindungswelle (O3) als eine Rotationsmitte drehbar verbunden ist und ein Rad (2) hält, und
einen zweiten Tragarm (43), der das Trägerbauteil (41) mit der Fahrzeugkarosserie (BF) verbindet, um zusammen mit dem ersten Tragarm (42) vertikal bewegbar zu sein, wobei die Fahrzeugsteuerungsvorrichtung Folgendes aufweist:
einen Radsturzwinkelfestlegungsabschnitt, der angepasst ist, um das Scheibenbauteil (93a) zu einer ersten Rotationsposition, wo die Scheibenwelle (O1) an einer geraden Linie positioniert ist, die die Exzenterverbindungswelle (O2) und die andere Verbindungswelle (O3) verbindet, durch Betreiben des Rotationsabschnitts zu rotieren, wobei somit der Radsturzwinkel des Rads (2) auf einen vorbestimmten Radsturzwinkel festgelegt wird, wobei die erste Rotationsposition einer Anfangsposition eines ersten Zustands oder eines zweiten Zustands entspricht, wobei in dem ersten Zustand die andere Verbindungswelle (O3), die Exzenterverbindungswelle (O2) und die Scheibenwelle (O1) der Reihe nach an der geraden Linie parallel positioniert sind und in dem zweiten Zustand die andere Verbindungswelle (O3), die Scheibenwelle (O1) und die Exzenterverbindungswelle (O2) der Reihe nach an der geraden Linie parallel positioniert sind; **gekennzeichnet durch**
einen Rotationsentscheidungsabschnitt, der angepasst ist, um zu entscheiden, ob die Rotationsposition des Scheibenbauteils (93a) von der ersten Rotationsposition durch einen Betrieb einer externen Kraft von dem Zustand rotiert wird, in dem die Rotationsposition des Scheibenbauteils (93a) zu der ersten Rotationsposition rotiert ist, sodass der Radsturzwinkel des Rads (2) auf den vorbestimmten Radsturzwinkel durch den Radsturzwinkelfestlegungsabschnitt festgelegt ist;
einen Rotationsbetragserlangungsabschnitt, der angepasst ist, um einen Rotationsbetrag des Scheibenbauteils (93a) von der ersten Rotationsposition zu erlangen, wenn durch den Rotationsentscheidungsabschnitt entschieden wird, dass das Scheibenbauteil (93a) von der ersten Rotationsposition durch den Betrieb der externen Kraft rotiert wird; und
einen Ausgleichsabschnitt, der angepasst ist, um den Rotationsabschnitt zu betreiben und das Scheibenbauteil (93a) zu rotieren, um zu bewirken, dass die Rotationsposition des Scheibenbauteils (93a) mindestens nahe bei der ersten Rotationsposition ist, wenn es durch den Rotationentscheidungsabschnitt entschieden wird, dass die Rotationsposition des Scheibenbauteils (93a) von der ersten Rotationsposition durch den Betrieb der externen Kraft rotiert ist, wobei das Scheibenbauteil (93a) in die entgegengesetzte Richtung zu der Rotationsrichtung durch die äußere Kraft rotiert wird, sodass sich das Scheibenbauteil (93a) der Position des ersten Zustands annähert, falls der Rotationsbetrag des Scheibenbauteils (93a) von dem ersten Zustand erlangt wird, und auch sodass sich das Scheibenbauteil (93a) der Position des zweiten Zustands annähert, falls der Rotationsbetrag des Scheibenbauteils (93a) von dem zweiten Zustand erlangt wird.

2. Fahrzeugsteuerungsvorrichtung (100) gemäß Anspruch 1, des Weiteren mit:
einem Rotationsschwellwertentscheidungsabschnitt, der angepasst ist, um zu entscheiden, ob ein Wert des Rotationsbetrags des Scheibenbauteils (93a) von der ersten Rotationsposition, der durch den Rotationsbetragserlangungsabschnitt erlangt wird, gleich dem oder mehr als der Schwellwert ist,
wobei der Rotationsabschnitt durch den Ausgleichsabschnitt betrieben wird, wenn es durch den Rotationsschwellwertentscheidungsabschnitt entschieden wird, dass der Wert des Rotationsbetrags des Scheibenbauteils (93a) von der ersten Rotationsposition gleich dem oder mehr als der Schwellwert ist.

3. Fahrzeugsteuerungsvorrichtung (100) gemäß Anspruch 1 oder 2,
wobei der Rotationsabschnitt einen Elektromotor (91RR) und eine Kurzschlussschaltung enthält, die beide Anschlüsse des Elektromotors (91RR) kurzschließt, und die Fahrzeugsteuerungsvorrichtung (100) derart angepasst ist, dass die beiden Anschlüsse des Elektromotors (91RR) durch die Kurzschlussschaltung kurzgeschlossen werden, wenn das Scheibenbauteil (93a) mindestens an die erste Rotationsposition rotiert ist.

4. Fahrzeugsteuerungsvorrichtung (100) gemäß einem der Ansprüche 1 bis 3,
wobei der Ausgleichsabschnitt angepasst ist, um den Rotationsabschnitt zu betreiben und um das Scheibenbauteil (93a) derart zu rotieren, dass die Rotationsposition des Scheibenbauteils (93a) an der ersten Rotationsposition positioniert ist.

5. Fahrzeugsteuerungsvorrichtung (100) gemäß einem der Ansprüche 1 bis 4,
wobei das Fahrzeug eine Kommunikationsauthentifizierungseinrichtung, die angepasst ist, um mit einer Datenendeinrichtung zu kommunizieren, wie zum Beispiel einem elektronischen Schlüssel, und um die Datenendeinrichtung zu authentifizieren, und eine Verriegelungseinrichtung enthält, die angepasst ist, um eine Tür zu entsperren, wenn die Datenendeinrichtung durch die Kommunikationsauthentifizierungseinrichtung authentifiziert wird, und
die Fahrzeugsteuerungsvorrichtung (100) angepasst ist, um den Betrieb durch den Ausgleichsabschnitt auf einen angehaltenen Zustand unter einer vorbestimmten Bedingung festzulegen,
wobei die Fahrzeugsteuerungsvorrichtung (100) einen ersten Ausgleichswiederinbetriebnahmeabschnitt aufweist, der angepasst ist, um den Betrieb durch den Ausgleichsabschnitt in einen ausführbaren Zustand zu bringen, wenn die Kommunikationsauthentifizierungseinrichtung die Datenendeinrichtung unter der vorbestimmten Bedingung authentifiziert.

6. Fahrzeugsteuerungsvorrichtung (100) gemäß einem der Ansprüche 1 bis 4,
wobei das Fahrzeug eine Kommunikationsauthentifizierungseinrichtung, die angepasst ist, um mit einer Datenendeinrichtung zu kommunizieren, wie zum Beispiel einem elektronischen Schlüssel, und um die Datenendeinrichtung zu authentifizieren, und eine Verriegelungseinrichtung enthält, die angepasst ist, um eine Tür zu entriegeln, wenn die Datenendeinrichtung durch die Kommunikationsauthentifizierungseinrichtung authentifiziert wird, und
die Fahrzeugsteuerungsvorrichtung (100) angepasst ist, um den Betrieb durch den Ausgleichsabschnitt auf einen angehaltenen Zustand unter einer vorbestimmten Bedingung festzulegen,
wobei die Fahrzeugsteuerungsvorrichtung (100) einen ersten Ausgleichswiederinbetriebnahmeabschnitt aufweist, der angepasst ist, um den Betrieb durch den Ausgleichsabschnitt in einen ausführbaren Zustand zu bringen, wenn die Verriegelungseinrichtung die Tür unter der vorbestimmten Bedingung entriegelt.

7. Fahrzeugsteuerungsvorrichtung (100) gemäß einem der Ansprüche 1 bis 4,
wobei das Fahrzeug einen Radsturzänderungserfassungssensor (94RR) enthält, der erfasst, ob der Radsturzwinkel des Rads (2) verändert ist, und
die Fahrzeugsteuerungsvorrichtung (100) angepasst ist, um den Betrieb durch den Ausgleichsabschnitt auf einen angehaltenen Zustand unter einer vorbestimmten Bedingung festzulegen,
wobei die Fahrzeugsteuerungsvorrichtung (100) einen zweiten Ausgleichswiederinbetriebnahmeabschnitt aufweist, der angepasst ist, um den Betrieb durch den Ausgleichsabschnitt in einen ausführbaren Zustand zu bringen, wenn der Radsturzänderungserfassungssensor (94RR) erfasst, dass der Radsturzwinkel des Rads (2) um einen vorbestimmten Winkel oder mehr unter der vorbestimmten Bedingung verändert ist.

## Revendications

1. Appareil de commande de véhicule (100) pour actionner une section de rotation (91RR) et faire tourner un élément de roue (93a) afin d'ajuster un angle de carrossage d'une roue (2) par rapport à un véhicule, comprenant :
une section de rotation qui génère la force de rotation,
un élément de roue (93a) pouvant tourner autour d'un arbre de roue (O1) en tant que centre de rotation par la force de rotation appliquée à partir de la section de rotation et installé dans une carrosserie de véhicule (BF),
un premier bras de suspension (42) dont une extrémité est raccordée, en rotation, à l'élément de roue (93a) autour d'un arbre de raccordement excentrique (O2) positionné de manière excentrique sur l'arbre de roue (O1) de l'élément de roue (93a) en tant que centre de rotation,
un élément porteur (41) raccordé, en rotation, avec l'autre extrémité du premier bras de suspension (42) autour de l'autre arbre de raccordement (O3) en tant que centre de rotation et maintenant une roue (2), et
un second bras de suspension (43) raccordant l'élément porteur (41) à la carrosserie de véhicule (BF) pour être verticalement mobile conjointement avec le premier bras de suspension (42), l'appareil de commande de véhicule comprenant :
une section de réglage d'angle de carrossage qui est adaptée pour faire tourner l'élément de roue (93a) dans une première position de rotation dans laquelle l'arbre de roue (O1) est positionné sur une ligne droite raccordant l'arbre de raccordement excentrique (O2) et l'autre arbre de raccordement (O3) en actionnant la section de rotation réglant ainsi l'angle de carrossage de la roue (2) sur un angle de carrossage prédéterminé, dans lequel la première position de rotation correspond à une position initiale d'un premier état ou d'un second état, dans lequel, dans le premier état, l'autre arbre de raccordement (O3), l'arbre de raccordement excentrique (O2) et l'arbre de roue (O1) sont positionnés en séquence sur ladite ligne droite en parallèle, et dans le second état, l'autre arbre de raccordement (O3), l'arbre de roue (O1) et l'arbre de raccordement excentrique (O2) sont positionnés en séquence sur ladite ligne droite en parallèle ; **caractérisé par** :
une section d'estimation de rotation qui est adaptée pour estimer si la position de rotation de l'élément de roue (93a) est entraînée en rotation depuis la première position de rotation par une opération de charge externe depuis l'état dans lequel la position de rotation de l'élément de roue (93a) est entraînée en rotation dans la première position de rotation de sorte que l'angle de carrossage de la roue (2) est réglé sur l'angle de carrossage prédéterminé par la section de réglage d'angle de carrossage ;
une section d'acquisition de quantité de rotation qui est adaptée pour acquérir une quantité de rotation de l'élément de roue (93a) depuis la première position de rotation lorsque l'on estime, grâce à la section d'estimation de rotation, que l'élément de roue (93a) est entraîné en rotation depuis la première position de rotation par l'opération de la force externe ; et
une section de compensation qui est adaptée pour actionner la section de rotation et pour faire tourner l'élément de roue (93a) afin de permettre à la position de rotation de l'élément de roue (93a) d'être au moins à proximité de la première position de rotation lorsque l'on estime, grâce à la section d'estimation de rotation, que la position de rotation de l'élément de roue (93a) tourne à partir de la première position de rotation par l'opération de la force externe, dans lequel l'élément de roue (93a) est entraîné en rotation en sens inverse à la direction de rotation par la force externe de sorte que l'élément de roue (93a) s'approche de la position du premier état si la quantité de rotation de l'élément de roue (93a) est acquise à partir du premier état, et également de sorte que l'élément de roue (93a) s'approche de la position du second état si la quantité de rotation de l'élément de roue (93a) est acquise à partir du second état.

2. Appareil de commande de véhicule (100) selon la revendication 1, comprenant en outre :
une section d'estimation de seuil de rotation qui est adaptée pour estimer si une valeur de la quantité de rotation de l'élément de roue (93a) à partir de la première position de rotation acquise par la section d'acquisition de quantité de rotation est égale ou supérieure à un seuil,
dans lequel la section de rotation est actionnée par la section de compensation lorsque l'on estime grâce à la section d'estimation de seuil de rotation que la valeur de la quantité de rotation de l'élément de roue (93a) à partir de la première position de rotation est égale ou supérieure au seuil.

3. Appareil de commande de véhicule (100) selon la revendication 1 ou 2,
dans lequel la section de rotation comprend un moteur électrique (91RR) et un court-circuit court-circuitant les deux bornes du moteur électrique (91RR), et l'appareil de commande de véhicule (100) est adapté de sorte que les deux bornes du moteur électrique (91RR) sont court-circuitées par le court-circuit lorsque l'élément de roue (93a) est au moins entraîné en rotation dans la première position de rotation.

4. Appareil de commande de véhicule (100) selon l'une quelconque des revendications 1 à 3,
dans lequel la section de compensation est adaptée pour actionner la section de rotation et pour faire tourner l'élément de roue (93a) de sorte que la position de rotation de l'élément de roue (93a) est positionnée dans la première position de rotation.

5. Appareil de commande de véhicule (100) selon l'une quelconque des revendications 1 à 4,
dans lequel le véhicule comprend un dispositif d'authentification de communication qui est adapté pour communiquer avec un dispositif formant terminal, telle qu'une clé électronique, et pour authentifier le dispositif formant terminal, et un dispositif de verrouillage qui est adapté pour déverrouiller une porte lorsque le dispositif formant terminal est authentifié par le dispositif d'authentification de communication, et
l'appareil de commande de véhicule (100) est adapté pour régler le fonctionnement grâce à la section de compensation sur un état d'arrêt dans une condition prédéterminée,
l'appareil de commande de véhicule (100) comprenant une première section de redémarrage de compensation qui est adaptée pour amener le fonctionnement, grâce à la section de compensation, dans un état exécutable, lorsque le dispositif d'authentification de communication authentifie le dispositif formant borne dans la condition prédéterminée.

6. Appareil de commande de véhicule (100) selon l'une quelconque des revendications 1 à 4,
dans lequel le véhicule comprend un dispositif d'authentification de communication qui est adapté pour communiquer avec un dispositif formant terminal, telle qu'une clé électronique, et pour authentifier le dispositif formant terminal, et un dispositif de verrouillage qui est adapté pour déverrouiller une porte lorsque le dispositif formant terminal est authentifié par le dispositif d'authentification de communication, et
l'appareil de commande de véhicule (100) est adapté pour régler le fonctionnement, grâce à la section de compensation, sur un état d'arrêt dans une condition prédéterminée,
l'appareil de commande de véhicule (100) comprenant une première section de redémarrage de compensation qui est adaptée pour amener un fonctionnement, grâce à la section de compensation, dans un état exécutable lorsque le dispositif de verrouillage déverrouille la porte dans la condition prédéterminée.

7. Appareil de commande de véhicule (100) selon l'une quelconque des revendications 1 à 4,
dans lequel le véhicule comprend un capteur de détection de changement de carrossage (94RR) détectant si l'angle de carrossage de la roue (2) est modifié, et
l'appareil de commande de véhicule (100) est adapté pour régler le fonctionnement, grâce à la section de compensation, sur un état d'arrêt, dans une condition prédéterminée,
l'appareil de commande de véhicule (100) comprenant une seconde section de redémarrage de compensation qui est adaptée pour amener le fonctionnement par la section de compensation dans un état exécutable lorsque le capteur de détection de changement de carrossage (94RR) détecte que l'angle de carrossage de la roue (2) est modifié selon un angle prédéterminé ou supérieur dans la condition prédéterminée.
